# EUROPEAN PATENT APPLICATION

(11) **EP 4 787 706 A1**
(43) Date of publication of application: **05.08.2026**
(21) Application number: 24871799.3
(22) Date of filing: 08.09.2024
(51) Int. Cl.: H02P 27/06, G01M 17/02, H02K 7/06, H02P 5/74

(54) **ELECTRIC ACTUATOR, POWER UNIT, AND ELECTRIC MOBILITY APPARATUS EQUIPPED WITH POWER UNIT**

(30) Priority: 28.09.2023 JP 2023167756; 03.04.2024 JP 2024060110
(71) Applicant: Kokusai Keisokuki Kabushiki Kaisha, Tama-shi, Tokyo 206-0025 (JP)
(72) Inventor: MATSUMOTO, Sigeru, Tama-shi, Tokyo 206-0025 (JP); MATSUMOTO, Shinichi, Tama-shi, Tokyo 206-0025 (JP); MIYASHITA, Hiroshi, Tama-shi, Tokyo 206-0025 (JP); SUZUKI, Masami, Tama-shi, Tokyo 206-0025 (JP); MURAUCHI, Kazuhiro, Tama-shi, Tokyo 206-0025 (JP)
(74) Representative: Lewis Silkin LLP
(86) International application number: PCT/JP2024/032129
(87) International publication number: WO 2025/070001

(57) **Abstract**

The object of the present invention is to reduce power consumption of electric actuators. An electric actuator (100) includes a motor (10) capable of switching rotation direction between forward rotation and reverse rotation, a detector (EN) configured to detect a rotational position of the motor (10), a servo amplifier (95) configured to drive the motor (10) in accordance with the rotational position and command values, and a drive unit (100d) and a crankshaft (70) having an output shaft mechanically coupled to a rotary shaft of the motor (10) and configured to convert forward and reverse rotary motions of the rotary shaft into a unidirectional rotary motion and transmit the unidirectional rotary motion to the output shaft. The servo amplifier (95) is set with the command values that cause the drive unit (100d) and the crankshaft (70) to rotate the output shaft in one direction when the motor (10) is rotated in the forward and reverse directions, and the command values are values determined on the basis of the rotational position of the motor (10) that has rotated as a result of rotating the output shaft in one direction.

## Description

### TECHNICAL FIELD

The present invention relates to electric actuators, power units equipped with the electric actuators, and electric mobility apparatuses equipped with the electric actuators.

### BACKGROUND ART

Electric actuators such as motors are widely used in industrial machinery and electric vehicles as drive sources. Power saving of drive sources is strongly required to realize energy saving in society. An example of related technology is disclosed in Patent Document 1.

### PRIOR ART DOCUMENT

### PATENT DOCUMENT

[Patent Document 1] Japanese Patent Application Publication No. 2017-139839

### SUMMARY OF THE INVENTION

### PROBLEM TO BE SOLVED BY THE INVENTION

An electric car disclosed in Patent Document 1 only provides regenerative electric power generation by a motor generator during inertial driving and braking, and there is room for improvement.

In transmission mechanisms that transmit output of a motor to a drive shaft of an electric car or the like, saving of power required to drive the motor is strongly demanded.

The object of the present invention is to provide an electric actuator that realizes power saving, a power unit equipped with the electric actuator, and an electric mobility apparatus equipped with the power unit.

### MEANS FOR SOLVING THE PROBLEM

An electric actuator according to an aspect of the present invention includes an electric motor capable of switching rotation direction between forward rotation and reverse rotation, a detector configured to detect a rotational position of the electric motor, a drive device configured to drive the electric motor in accordance with the rotational position and command values, and a transmission mechanism having an output shaft mechanically coupled to a rotary shaft of the electric motor, the transmission mechanism being configured to convert forward and reverse rotary motions of the rotary shaft into a unidirectional rotary motion and to transmit the unidirectional rotary motion to the output shaft.

The drive device is set with the command values that cause the transmission mechanism to rotate the output shaft in one direction when the electric motor is rotated in the forward and reverse directions.

The command values are values determined on the basis of the rotational position of the electric motor that has rotated as a result of rotating the output shaft in one direction.

### EFFECT OF THE INVENTION

According to an embodiment of the present invention, power saving can be achieved in an electric actuator, a power unit equipped with the electric actuator, and an electric mobility apparatus equipped with the power unit.

### BRIEF DESCRIPTION OF THE DRAWINGS

[FIG. 1] FIG. 1 is a perspective view of an electric actuator according to a first embodiment of the present invention.
[FIG. 2] FIG. 2 is a plan view showing a schematic structure of the electric actuator according to the first embodiment of the present invention.
[FIG. 3] FIG. 3 is a side view of a connecting rod of the first embodiment of the present invention.
[FIG. 4] FIG. 4 is a side view of a crankshaft of the first embodiment of the present invention.
[FIG. 5] FIG. 5 is a block diagram showing a schematic configuration of an electric power feeding system (electric drive system) of the electric actuator according to the first embodiment of the present invention.
[FIG. 6] FIG. 6 is a diagram showing a circuit configuration of the electric drive system of the first embodiment.
[FIG. 7] FIG. 7A is a drive waveform for one cycle of a motor of the first embodiment of the present invention, FIG. 7B is a graph showing a rotation speed [rpm] of the motor in the first half of one cycle of the motor, FIG. 7C is a graph showing the rotation speed of the motor in the second half of one cycle of the motor, FIG. 7D is a graph showing torque [Nm] of the motor in the first half of one cycle of the motor, and FIG. 7E is a graph showing the torque of the motor in the second half of one cycle of the motor.
[FIG. 8] FIG. 8 is a diagram showing a relationship between a frequency F, powering operation electric power that is output from a power regenerative converter to an inverter during powering operation, regenerative electric power that is output from the inverter to the power regenerative converter, and regeneration ratio.

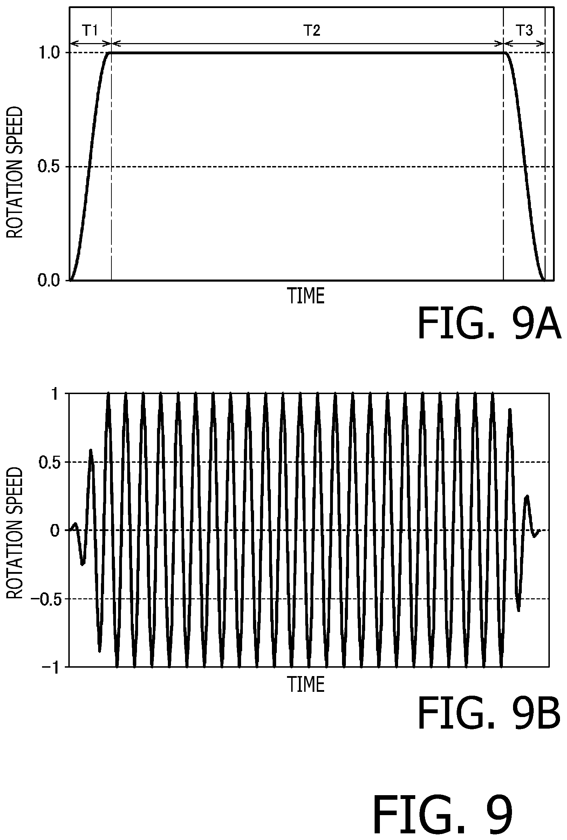

[FIG. 9] FIG. 9 is a diagram contrasting operation of the motor of the first embodiment of the present invention with operation of a conventional motor.
[FIG. 10] FIG. 10 is a diagram illustrating innovations in control of an electric actuator according to a second embodiment of the present invention.
[FIG. 11] FIG. 11 is a diagram illustrating innovations in control of an electric actuator according to a third embodiment of the present invention.
[FIG. 12] FIG. 12 is a perspective view of an electric actuator according to a fourth embodiment of the present invention.
[FIG. 13] FIG. 13 is a side view of the electric actuator according to the fourth embodiment.
[FIG. 14] FIG. 14 is a plan view of the electric actuator according to the fourth embodiment.
[FIG. 15] FIG. 15 is a front view of the electric actuator according to the fourth embodiment.
[FIG. 16] FIG. 16 is a configuration diagram of a crankshaft of the electric actuator according to the fourth embodiment.
[FIG. 17] FIG. 17 is a block diagram showing a schematic configuration of an electric power feeding system (electric drive system) of the electric actuator according to the fourth embodiment.
[FIG. 18] FIG. 18 is a perspective view of an electric actuator according to a fifth embodiment of the present invention.
[FIG. 19] FIG. 19 is a plan view of the electric actuator according to the fifth embodiment of the present invention.
[FIG. 20] FIG. 20 is a perspective view of an electric actuator according to a sixth embodiment of the present invention.
[FIG. 21] FIG. 21 is a perspective view of an electric actuator according to a seventh embodiment of the present invention.
[FIG. 22] FIG. 22 is a diagram showing a mechanism of a gear unit of the seventh embodiment.
[FIG. 23] FIG. 23 is a perspective view of an electric actuator according to an eighth embodiment of the present invention.
[FIG. 24] FIG. 24 is a block diagram showing a schematic configuration of an electric power feeding system (electric drive system) of the electric actuator according to the eighth embodiment.
[FIG. 25] FIG. 25 is a diagram showing a schematic configuration of a power system of an electric car according to a ninth embodiment of the present invention.
[FIG. 26] FIG. 26 is a block diagram showing a schematic configuration of an electric power feeding system (electric drive system) of the electric car according to the ninth embodiment.
[FIG. 27] FIG. 27 is a diagram showing a schematic configuration of a drive mechanism of a railroad car according to a tenth embodiment of the present invention.
[FIG. 28] FIG. 28 is a block diagram showing a schematic configuration of an electric power feeding system (electric drive system) of the railroad car according to the tenth embodiment.
[FIG. 29] FIG. 29 is a plan view of a vibration test device according to an eleventh embodiment of the present invention.
[FIG. 30] FIG. 30 is an external view of a tire test device according to a twelfth embodiment of the present invention.
[FIG. 31] FIG. 31 is an external view of the tire test device according to the twelfth embodiment.
[FIG. 32] FIG. 32 is a diagram showing an internal structure of a torque generating device of the twelfth embodiment.
[FIG. 33] FIG. 33 is a block diagram showing a schematic configuration of an electric power feeding system of the twelfth embodiment.
[FIG. 34] FIG. 34 is a side view showing a basic configuration of a uniformity and dynamic balance multi-test device according to a thirteenth embodiment of the present invention.
[FIG. 35] FIG. 35 is a diagram schematically showing a method for driving a spindle to rotate in the thirteenth embodiment.
[FIG. 36] FIG. 36 is a front view of a measurement section of a balance measurement device according to a fourteenth embodiment of the present invention.
[FIG. 37] FIG. 37 is a side view of the measurement section of the balance measurement device according to the fourteenth embodiment.
[FIG. 38] FIG. 38 is a perspective view of a collision simulation test device according to a fifteenth embodiment of the present invention.
[FIG. 39] FIG. 39 is a perspective view showing structures of a test section and a belt mechanism of the collision simulation test device according to the fifteenth embodiment.
[FIG. 40] FIG. 40 is a block diagram showing a modified example of the schematic configuration of the electric power feeding system for the electric actuator.
[FIG. 41] FIG. 41 is a block diagram showing another modified example of the schematic configuration of the electric power feeding system for the electric actuator.
[FIG. 42] FIG. 42 is a diagram showing a circuit configuration of an electric power feeding system (electric drive system) of an electric actuator according to a sixteenth embodiment.
[FIG. 43] FIG. 43 is a diagram showing an exemplary cam curve associated with a connecting rod.
[FIG. 44] FIG. 44 is a diagram illustrating movement of the connecting rod.
[FIG. 45] FIG. 45A is a diagram showing a cam curve discovered by the inventor, and FIG. 45B is a diagram showing a reference cam curve.
[FIG. 46] FIG. 46 is a diagram showing an exemplary power unit according to an embodiment.
[FIG. 47] FIG. 47 is a diagram showing exemplary cam curves of respective connecting rods.
[FIG. 48] FIG. 48 is a modified example of the power unit according to the embodiment.
[FIG. 49] FIG. 49 is a diagram showing an exemplary cam curve associated with a connecting rod.
[FIG. 50] FIG. 50 is a diagram illustrating movement of the connecting rod.
[FIG. 51] FIG. 51A is a diagram showing a relationship between a frequency and an effective load factor of a motor, and FIG. 51B is a diagram showing a relationship between the frequency and an electric power consumption of the motor.
[FIG. 52] FIG. 52 is a diagram showing a schematic configuration of an electric car in which a power unit is installed.
[FIG. 53] FIG. 53 is a diagram showing a circuit configuration of an electric power feeding system (electric drive system) of the power unit.
[FIG. 54] FIG. 54 is a diagram showing a schematic configuration of a railroad car in which the power unit is installed.
[FIG. 55] FIG. 55 is a diagram showing a circuit configuration of an electric power feeding system installed in the railroad car.

### EMBODIMENTS FOR CARRYING OUT THE INVENTION

The inventor has discovered that efficiency of regenerative electric power utilization can be increased by reversing drive of an electric motor at a high repetition frequency. The high repetition frequency is, for example, 6 Hz or higher, but is not limited to 6 Hz or higher.

Embodiments of the present invention will be described below with reference to the drawings. In the following description, identical or corresponding items will be marked with identical or corresponding reference numerals, and redundant explanations will be omitted. In addition, in each figure, when multiple items with a common reference numeral are indicated, the reference numeral is not necessarily marked to all of those multiple items and the indication of the reference numeral to some of those multiple items is omitted as appropriate.

### <First Embodiment>

An electric actuator according to the present embodiment has a motor that is capable of switching rotation direction between forward rotation and reverse rotation, a detector that detects a rotational position of the motor, a drive device that drives the motor in accordance with the rotational position of the motor and command values, and an output shaft that is mechanically coupled to a rotary shaft of the motor, and includes a transmission mechanism that converts the forward and reverse rotary motions of the rotary shaft of the motor into a unidirectional rotary motion and transmits the unidirectional rotary motion to the output shaft. The transmission mechanism may include a first mechanism and a second mechanism.

The first mechanism in the first embodiment may be a mechanism that has a moving member that is held so as to be linearly movable and coupled to the rotary shaft of the motor, and that causes the moving member to reciprocate linearly in response to the forward and reverse rotations of the motor. For example, the first mechanism in the first embodiment may be a mechanism that employs a ball screw. However, the first mechanism in the first embodiment is not particularly limited to such configuration as long as it is capable of causing the moving member to linearly reciprocate in response to the forward and reverse rotary motions of the rotary shaft of the motor.

The second mechanism in the first embodiment may be a mechanism that has a rotary member that is rotatably held and a connecting rod that is rotatably connected to a first connecting part of the rotary member offset from a rotation center of the rotary member, the connecting rod being rotatably connected to the moving member at a second connecting part located apart from the first connecting part, and that causes the rotary member to rotate in one direction in conjunction with the forward and reverse rotations of the motor. For example, the second mechanism in the first embodiment may be a cam mechanism. However, the second mechanism is not particularly limited to such configuration as long as it is capable of causing the rotary member to rotate in one direction in response to the movement of the moving member of the first mechanism.

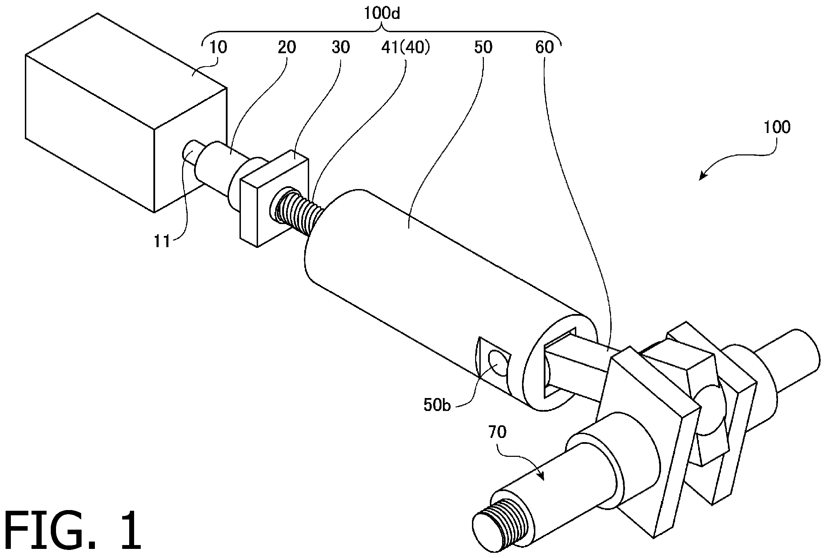

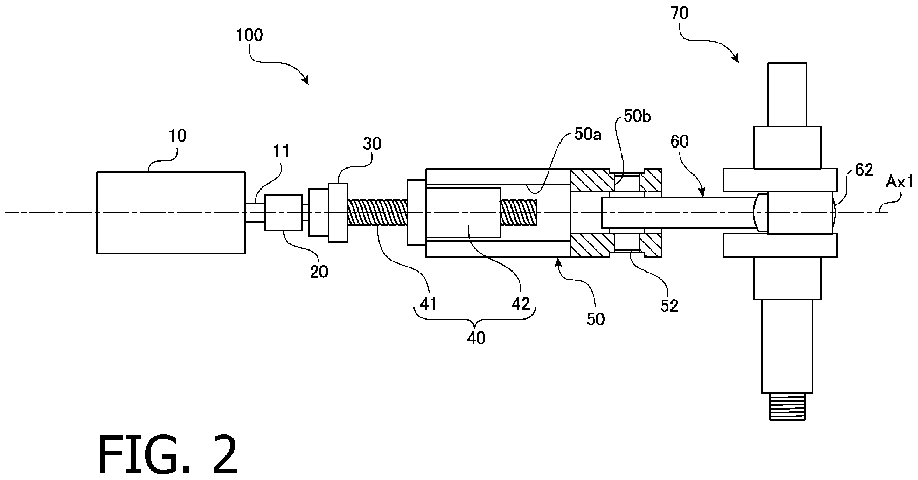

FIGS. 1 and 2 are a perspective view and a plan view, respectively, of an electric actuator 100 according to a first embodiment of the present invention. In FIG. 2, a portion of a piston 50, which will be described later, is shown in cross-sectional view. FIG. 2 also shows a cross section of a later-described linear motion part (moving member).

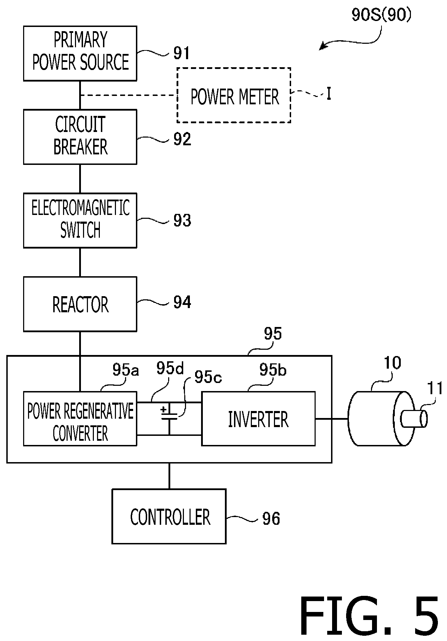

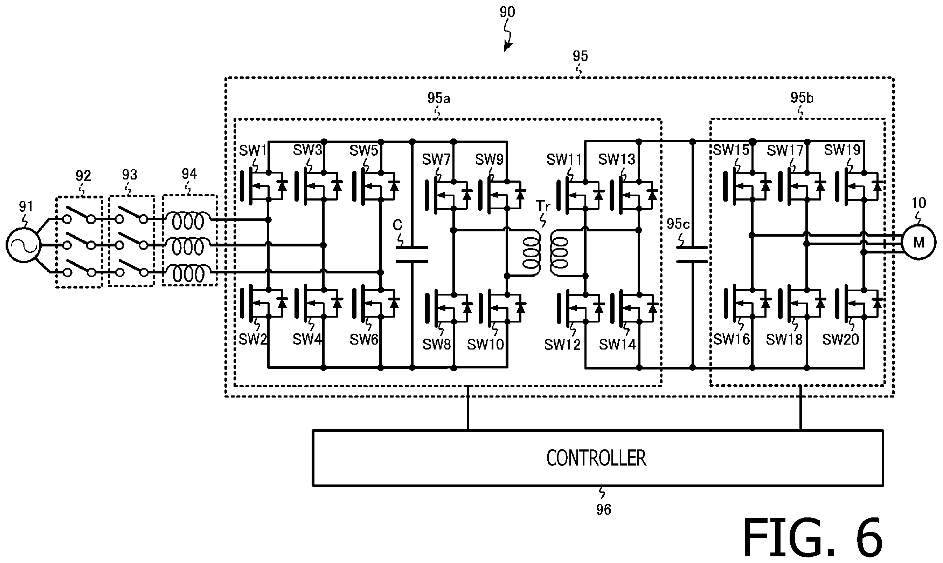

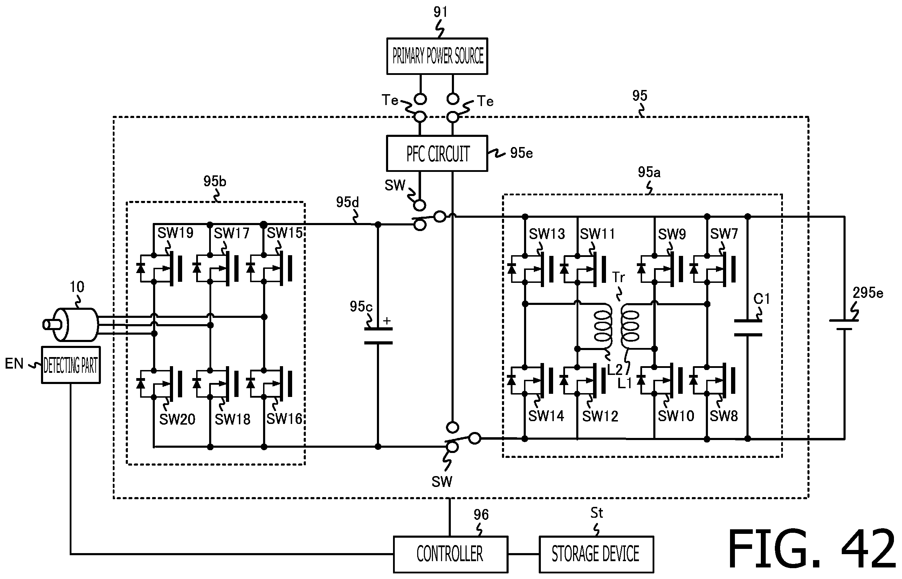

As shown in FIG. 1, the electric actuator 100 includes a drive unit 100d (first mechanism) and a crankshaft 70 (second mechanism). The electric actuator 100 may further include a servo amplifier 95 (drive device) and a controller 96, which are described later with reference to FIGS. 5 and 6. Also, for example, the transmission mechanism is constituted by the drive unit 100d and the crankshaft 70. That is, the transmission mechanism has an output shaft 75 mechanically coupled to a rotary shaft of a motor 10 described later, and converts the forward and reverse rotary motions of the rotary shaft into the unidirectional rotary motion and transmits the unidirectional rotary motion to the output shaft 75. Furthermore, the electric actuator 100 may further include the servo amplifier 95 (drive device), the controller 96, and a storage device St, which are described later with reference to FIG. 42.

In this specification, the term electric actuator may mean only a motor and a mechanism driven by the motor, may mean a set of a motor and a mechanism (referred to as a mechanism part) plus a drive device that drives the motor, or may mean to further include a controller that controls the drive device. When the electric actuator includes the drive device and the controller, the drive device and the controller may be installed in the same housing as the mechanism part, or may be configured as a device separate from the mechanism part and connected to the mechanism part by a cable or the like.

The drive unit 100d includes a motor 10 (electric motor), a bearing 30, a ball screw 40 (feed screw mechanism), linear motion part 50 (moving member; hereinafter referred to as "piston 50"), and a connecting rod 60.

The motor 10 is, for example, an ultra-low inertia and high output type AC servomotor. The use of such ultra-low inertia and high output type motor 10 enables to drive the motor 10 to rotate back and forth at high frequencies of, for example, 100 Hz or higher. It should be noted that the motor 10 is not limited to the ultra-low inertia and high output type AC servomotor.

A screw shaft 41 of the ball screw 40 is rotatably supported by the bearing 30 fixed to a frame (not shown). The screw shaft 41 is connected to a rotary shaft 11 of the motor 10 by a shaft coupling 20.

The piston 50 is a cylindrical member to which a hollow portion 50a extending in the direction of an axis line Ax1 is formed. The axis line Ax1 is a center line of the drive unit 100d and is a straight line common to axes of rotation of the motor 10 and the ball screw 40. A nut 42 of the ball screw 40 is for example housed in one end portion of the hollow portion 50a of the piston 50 (left end portion in FIG. 2) and is fixed to the piston 50.

At the other end portion of the piston 50 (right end in FIG. 2), a pin 52 is attached perpendicular to an axis of the piston 50 (in other words, parallel to the crankshaft 70).

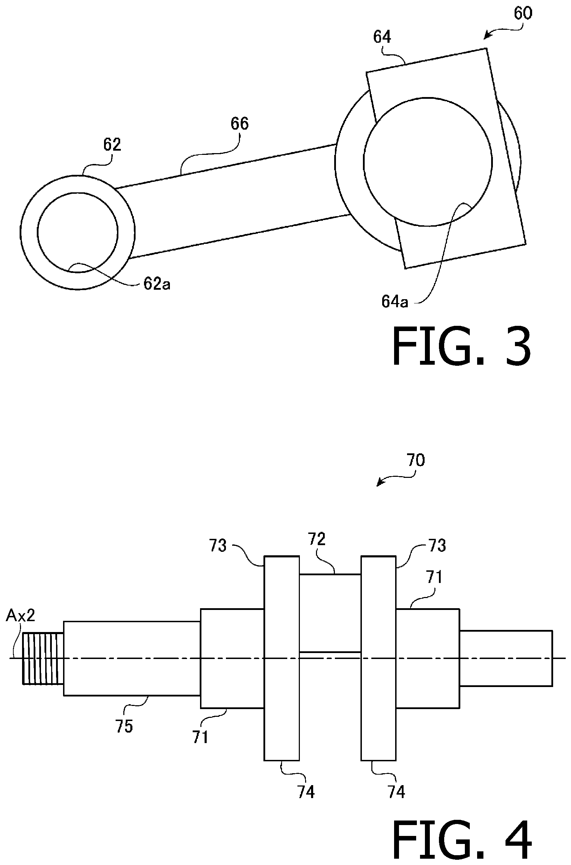

FIG. 3 is a side view of the connecting rod 60. The connecting rod 60 has a small end part 62 to which a small diameter pin hole 62a is formed, a large end part 64 (rotary member) to which a large diameter pin hole 64a is formed, and a rod part 66 connecting the small end part 62 and the large end part 64. The pin holes 62a and 64a are formed parallel to each other.

The pin 52 is inserted into the pin hole 62a of the small end part 62, for example via a bush (not shown). Both ends of the pin 52 are inserted into a pair of pin holes 50b (FIG. 2) formed to the other end portion of the piston 50 and fixed to the piston 50. As a result, the connecting rod 60 is connected to the other end portion of the piston 50 via the pin 52 at the small end part 62 to be rotatable within a certain angular range with the pin 52 as the central axis of rotation. In addition to the pin 52 (first pin), the connecting rod 60 is rotatably connected to a crank pin 72 (second pin) which will be described later.

FIG. 4 shows a side view of the crankshaft 70. The crankshaft 70 has a pair of crank journals 71 coaxially disposed (i.e., axes of rotation or centerlines are coincident), a crank pin 72 disposed eccentrically with respect to axis lines of the crank journals 71 (i.e., a rotation axis Ax2 of the crankshaft 70), a pair of crank arms 73 connecting the crank journals 71 and the crank pin 72 (first connecting part), a pair of balance weights 74 disposed on opposite sides of respective crank arms 73 with respect to the rotation axis Ax2, and an output shaft 75 coaxially coupled to one of the crank journals 71. The balance weights 74 are formed to counteract imbalances created by the crank pin 72 and the crank arms 73, which are eccentric with respect to the rotation axis Ax2.

The crankshaft 70 is a rotating body rotatably supported at the pair of crank journals 71 by a not-shown pair of bearings (e.g., rolling bearings) fixed to the frame (not shown).

The crank pin 72 is an eccentric pin eccentric with respect to the axis of rotation of the crankshaft 70 and is inserted into the pin hole 64a of the large end part 64 of the connecting rod 60, for example, via a bush (not shown). The crankshaft 70 is thus rotatably connected to the connecting rod 60.

For example, oilless bushes are used as the bushes that engage with the pin holes 62a and 64a of the connecting rod 60. Other types of bearings, such as rolling bearings, may be used in place of the bushes.

The motor 10 is driven so that the rotary shaft 11 repeatedly rotates back and forth within a predetermined angular range. In other words, the motor 10 repeats forward and reverse rotations at a predetermined frequency. The rotation of the motor 10 (more specifically, the reciprocating rotary motion, i.e., forward and reverse rotary motions) is converted into linear motion by the ball screw 40 and transmitted to the piston 50. As a result, the piston 50, together with the nut 42 of the ball screw 40, moves in a reciprocating linear motion on the axis line Ax1 with a predetermined stroke. In other words, the ball screw 40 functions as a first motion converter (first mechanism) that converts the reciprocating rotary motion (the forward and reverse rotary motions) of the motor 10 into a reciprocating linear motion. The reciprocating linear motion of the piston 50 in the direction of the axis line Ax1 is transmitted by the connecting rod 60 to the eccentric crank pin 72 of the crankshaft 70 and converted into rotary motion of the crankshaft 70. That is, the connecting rod 60 and the crankshaft 70 (as well as the pin 52 rotatably supporting the connecting rod 60 and the not-shown bearings rotatably supporting the crankshaft 70) configures a crank mechanism (more specifically, a slider crank mechanism) as a second motion converter that converts the reciprocating motion (reciprocating linear motion) into a unidirectional rotary motion (hereinafter referred to as "unidirectional rotary motion").

FIG. 5 is a block diagram showing a schematic configuration of an electric power feeding system 90S (electric drive system 90) that supplies driving electric power to the motor 10. FIG. 6 is a diagram showing a circuit configuration of an electric drive system 90. The electric power feeding system 90S constitutes the electric drive system 90 together with the motor 10.

A primary power source 91 is a commercial power source or electric power feeding device, which provides, for example, three-phase alternating current electric power. The electric power supplied from the primary power source 91 (hereinafter referred to as "system electric power") is supplied to the servo amplifier 95 (drive device) via a circuit breaker 92, an electromagnetic switch 93, and a reactor 94. The servo amplifier 95 is an inverter device that converts the alternating current supplied from the primary power source 91 into driving electric power for the motor 10, and supplies the electric power supplied from the primary power source 91 to the motor 10. The motor 10 is connected to an output terminal of the servo amplifier 95, and the drive electric power is supplied from the servo amplifier 95 to the motor 10. The servo amplifier 95 is communicatively connected to a controller 96 and operates in accordance with control by the controller 96.

The servo amplifier 95 includes a power regenerative converter 95a, an inverter 95b, and a capacitor 95c. The power regenerative converter 95a is a converter suitable for electric power regeneration and is, for example, a PWM (Pulse Width Modulation) converter that sinusoidalizes electric power feeding side current by PWM control. The power regenerative converter 95a may also be a converter that performs electric power conversion using the 120-degree-energization method. The inverter 95b is, for example, a PWM inverter that controls the output electric power by PWM control. The power regenerative converter 95a of the present embodiment has both a function of rectifying the alternating current supplied from the primary power source 91 during powering operation (i.e., an operation mode in which the motor 10 is driven by the electric power supplied from the servo amplifier 95) and a function of generating alternating current of the same quality as the system electric power to be returned to the primary power source 91 during regenerative operation. However, a converter dedicated to electric powering operation and a converter dedicated to electric power regeneration may be provided separately.

The power regenerative converter 95a includes switching elements SW1 to SW14, a capacitor (or condenser) C, and a transformer Tr. The inverter 95b includes switching elements SW15 to SW20. The switching elements SW1 to SW20 are, for example, IGBTs (Insulated Gate Bipolar Transistors).

When supplying the electric power supplied from the primary power source 91 (e.g., single-phase three-wire commercial power source or three-phase three-wire commercial power source) to the motor 10, the switching elements SW1 to SW6 are repeatedly turned on and off by the controller 96 in accordance with a frequency of the alternating current electric power supplied from the primary power source 91 to rectify the alternating current electric power supplied from the primary power source 91.

When supplying the electric power supplied from the primary power source 91 to the motor 10, the electric power rectified by the switching elements SW1 to SW6 is smoothed by the capacitor C.

When supplying the electric power supplied from the primary power source 91 to the motor 10, the switching elements SW7 and SW10 and the switching elements SW8 and SW9 are alternately and repeatedly turned on and off by the controller 96 so that the electric power smoothed by the capacitor C is transmitted from the primary coil L1 to the secondary coil L2 of the transformer Tr.

When supplying the electric power supplied from the primary power source 91 to the motor 10, the switching elements SW11 and SW14 and the switching elements SW12 and SW13 are alternately and repeatedly turned on and off by the controller 96 to rectify the electric power transmitted from the primary coil L1 to the secondary coil L2.

When supplying the electric power supplied from the primary power source 91 to the motor 10, the electric power rectified by the switching elements SW11 to SW14 is smoothed by the capacitor 95c.

When supplying the electric power supplied from the primary power source 91 to the motor 10, the switching elements SW15 to SW20 are repeatedly turned on and off by the controller 96, so that the electric power smoothed by the capacitor 95c is converted into alternating current electric power with phase differences of 120 degrees and supplied to the motor 10 and supplied to the motor 10.

When supplying the regenerated electric power from the motor 10 to the servo amplifier 95, the alternating current electric powers supplied from the three phases of the motor 10, respectively, are rectified by diodes connected in parallel with the switching elements SW15 to SW20, respectively.

When supplying the regenerated electric power from the motor 10 to the servo amplifier 95, the electric power rectified by the diodes connected in parallel with the switching elements SW15 to SW20, respectively, is smoothed by the capacitor 95c.

When supplying the regenerated electric power from the motor 10 to servo amplifier 95, switching elements SW11 and SW14 and the switching elements SW12 and SW13 are alternately and repeatedly turned on and off by the controller 96, so that the electric power smoothed by the capacitor 95c is transmitted from the secondary coil L2 to the primary coil L1 of the transformer Tr.

When supplying the regenerated electric power from the motor 10 to the servo amplifier 95, the electric power transmitted from the secondary coil L2 to the primary coil L1 is rectified by diodes connected in parallel with the switching elements SW7 to SW10, respectively.

When supplying the regenerated electric power from the motor 10 to the servo amplifier 95, the electric power rectified by the diodes connected in parallel with the switching elements SW7 to SW10, respectively, is smoothed by the capacitor C.

When supplying the regenerated electric power from the motor 10 to the servo amplifier 95, the switching elements SW1 to SW6 are repeatedly turned on and off by the controller 96, so that the electric power not accumulated in the capacitor C (surplus electric power) is converted into alternating current electric power and supplied to the primary power source 91.

When driving the motor 10 (during powering operation), the alternating current electric power output from the reactor 94 is converted into direct current by the power regenerative converter 95a, smoothed by the capacitor 95c, and then converted into alternating current (e.g., pulse train) driving electric power by the inverter 95b. The driving electric power output from the inverter 95b is input to the motor 10 to drive the motor 10 to rotate.

When the motor 10 generates regenerative electric power (during regenerative operation), the regenerative electric power output from the motor 10 is converted into direct current by the inverter 95b and input to the power regenerative converter 95a via a direct current bus bar 95d. One system of the direct current bus bar 95d consists of a pair of positive and negative conductive wires. The power regenerative converter 95a converts the direct current electric power supplied from the direct current bus bar 95d to sinusoidal alternating current and outputs the alternating current to the primary power source 91 via the reactor 94, the electromagnetic switch 93, and the circuit breaker 92.

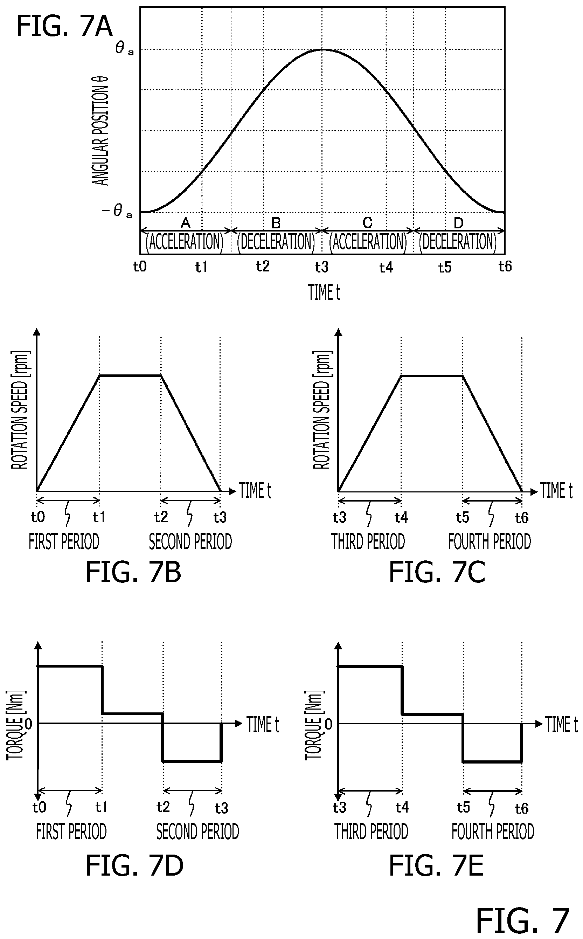

FIG. 7A is a graph showing a drive waveform of one cycle of the motor 10. FIG. 7B is a simplified graph showing a change in the rotation speed [rpm] of the motor 10 in the first half of one cycle of the motor 10, and FIG. 7C is a simplified graph showing the change in the rotation speed of the motor 10 in the second half of one cycle of the motor 10. FIG. 7D is a simplified graph showing a change in torque [Nm] of the motor 10 in the first half of one cycle of the motor 10, and FIG. 7E is a simplified graph showing the change in torque of the motor 10 in the second half of one cycle of the motor 10. In FIG. 7A, the horizontal axis represents time t, and the vertical axis represents an angular position θ of the rotary shaft 11. In FIGS. 7B and 7C, the horizontal axis represents time t, and the vertical axis represents the rotation speed of motor 10. In FIGS. 7D and 7E, the horizontal axis represents time t, and the vertical axis represents torque of motor 10. The respective time widths in FIGS. 7A through 7E coincide with each other.

The motor 10 is driven so that the angular position θ of the rotary shaft 11 fluctuates repeatedly in the range of -θa to θa in accordance with a sinusoidal drive waveform during the repeated passage of time t from time t0 to time t6. The drive waveform of the motor 10 is not limited to a sine wave. When the drive waveform of the motor 10 is a sinusoidal drive waveform, an actual waveform of a rotation speed (the rotation speed) of the motor is a cosine waveform. However, in FIGS. 7B and 7C, for convenience of explanation, the waveform of the rotation speed of the motor is shown in a simplified form, with constant speed change for a range with large changes and no speed change (constant rotation speed) for a range with small changes.

In section A shown in FIG. 7A, or more precisely, for example, in the first period from time t0 to time t1, the rotary shaft 11 is accelerated in the positive rotation direction. In other words, in the first period, the rotation speed of the motor 10 in forward rotation direction increases, and torque generated at this time is defined as a positive torque (acceleration torque). Also, at this time, electric power is supplied from the servo amplifier 95 to the motor 10 (powering operation). For example, in the first period, electric power accumulated in the capacitor 95c and the capacitor C (or a capacitor C1 shown in FIG. 42 described later) is supplied to the motor 10, and shortfall of electric power is supplied to motor 10 from the primary power source 91.

In section B shown in FIG. 7A, or more precisely, for example, in the second period from time t2 to time t3, the rotary shaft 11 is decelerated in the positive rotation direction. In other words, in the second period, the rotation speed of the motor 10 in the forward rotation direction decreases, and negative torque (deceleration torque) is generated. At this time, regenerative electric power is supplied from the motor 10 to the servo amplifier 95 (regeneration). For example, in the second period, at least a part or substantially all of the regenerative electric power from the motor 10 is accumulated in the capacitor 95c and the capacitor C (or capacitor C1). Among the regenerative electric power from the motor 10, surplus electric power that is not charged (accumulated) in the capacitor 95c and the capacitor C is supplied to the primary power source 91. That is, the servo amplifier 95 supplies, to the primary power source 91, surplus electric power that has overflowed from the capacitor 95c and the capacitor C (or capacitor C1) among the regenerative electric power regenerated to the capacitor 95c and the capacitor C (or capacitor C1). In other words, the servo amplifier 95 supplies, to the primary power source 91, surplus electric power that depends on the electric power consumed during acceleration of the motor 10 and the regenerative electric power. Further stated in other words, when the motor 10 repeatedly performs forward and reverse rotations, the servo amplifier 95 outputs, to the primary power source 91, surplus electric power among the regenerative electric power from the motor 10 that has not been consumed during acceleration of the motor 10.

In section C shown in FIG. 7A, or more precisely, for example, in the third period from time t3 to time t4, the rotary shaft 11 is accelerated in the negative rotational direction. In other words, in the third period, the rotation speed of the motor 10 in the reverse rotation direction increases, and torque generated at this time is defined as a positive torque (acceleration torque). Also, at this time, electric power is supplied from the servo amplifier 95 to the motor 10 (powering operation). For example, in the third period, the electric power accumulated in the capacitor 95c and the capacitor C (or capacitor C1) is supplied to the motor 10, and shortfall of electric power is supplied to the motor 10 from the primary power source 91.

In section D shown in FIG. 7A, or more precisely, for example, in the fourth period from time t5 to time t6, the rotary shaft 11 is decelerated in the negative rotation direction. In other words, in the fourth period, the rotation speed of the motor 10 in the reverse rotation direction decreases, and negative torque (deceleration torque) is generated. At this time, regenerative electric power is supplied from the motor 10 to the servo amplifier 95 (regenerative operation). For example, in the fourth period, a part or all of the regenerated electric power from the motor 10 is accumulated in the capacitor 95c and the capacitor C (or capacitor C1). Among the regenerative electric power from the motor 10, surplus electric power that has not been charged (accumulated) in the capacitor 95c and the capacitor C (or capacitor C1) is supplied to the primary power source 91.

In this way, the powering operation and regeneration are repeated, and the electric power accumulated in the capacitor 95c and the capacitor C (or capacitor C1) during regeneration can be used to drive the motor 10 in the next powering operation, thus reducing the electric power supplied from the primary power source 91 to the motor 10 in the next powering operation. This allows to make the electric drive system 90 and the electric actuator 100 described later more power-efficient. Furthermore, the rotary shaft 11 of the motor 10 rotates back and forth by repeating acceleration (powering operation) and deceleration (regenerative operation) while alternating the direction. Such reciprocating rotation is repeated at, for example, a frequency of 500 Hz at maximum.

As described above, in the present embodiment, the exchange of electric power between the capacitor 95c and capacitor C (or capacitor C1) and the primary power source 91 and motor 10 and the generation of regenerative electric power by the motor 10 are alternately repeated in order to make the motor 10 perform repeating acceleration and deceleration operations. Short-time (e.g., about one cycle of the motor 10) voltage fluctuations in the direct current bus bar 95d caused by the transfer of electric power to and from the motor 10 are adjusted (in other words, leveled) mainly by the capacitor 95c. Therefore, a part or all of the electric power supplied to the motor 10 in sections A and C is recovered and reused as regenerative electric power in sections B and D, allowing to drive the motor 10 while suppressing power consumption from the primary power source 91.

**[Table 1]**

| No. | FREQUENCY F | TORQUE T₀ | POWER CONSUMPTION VALUE W_{A} | OUTPUT POWER VALUE W_{B} | ENERGY SAVING RATE R=100(1-W_{A}/W_{B}) |
|---|---|---|---|---|---|
| 1 | 10 Hz | 23.5 % | 0.354 kW | 7.808 kW | 95.5 % |
| 2 | 25 Hz | 70.0 % | 1.093 kW | 26.959 kW | 95.9 % |
| 3 | 50 Hz | 76.0 % | 0.971 kW | 15.777 kW | 93.8 % |
| 4 | 75 Hz | 76.0 % | 0.870 kW | 10.539 kW | 91.7 % |
| 5 | 100 Hz | 64.0 % | 0.843 kW | 5.641 kW | 85.1 % |
| 6 | 125 Hz | 77.0 % | 0.991 kW | 6.449 kW | 84.6 % |
| 7 | 150 Hz | 62.7 % | 0.781 kW | 3.598 kW | 78.3 % |
| 8 | 175 Hz | 74.0 % | 1.037 kW | 4.267 kW | 75.7 % |
| 9 | 200 Hz | 83.0 % | 1.338 kW | 4.672 kW | 71.4 % |

Table 1 shows driving conditions and measurement results of electric power consumption of the electric actuator 100 of the present embodiment.

"Frequency F" is the number of times per second that one cycle of driving shown in FIG. 7 is repeated. Electric power consumption was measured by varying the frequency F at 25Hz intervals from 25Hz up to a maximum of 200Hz. However, the minimum frequency was set not at 0Hz but at 10Hz, which allows stable operation.

"Torque T₀" is a maximum value (amplitude) of a relative torque (expressed as a percentage against a rated torque) of the rotary shaft 11 of the motor 10.

The "Power Consumption Value W_{A}" is an average value of electric power consumption of the electric drive system 90 as a whole, as measured by a power meter I upstream of the circuit breaker 92 (FIG. 5).

"Output Power W_{B}" is an average value of electric power output from the servo amplifier 95 to the motor 10.

"Energy Saving Rate R" is a ratio of electric power consumption reduced by the reuse of regenerative electric power and is calculated by R = 100 × (1-W_{A}/W_{B}).

It is confirmed that, by using the electric actuator 100 of the present embodiment, the energy saving rate of over 70% is achieved at the frequencies F below 200 Hz. In particular, it is confirmed that the energy saving rate over 90% is achieved in a low frequency range below 75 Hz.

The electric power consumption reduction effect in by the electric actuator 100 of the present embodiment can be obtained even when the repetition frequency of the reciprocating rotation of the motor 10 is set at 1Hz, but when the repetition frequency is set at 3Hz or higher (more preferably 5Hz or higher), the regenerative electric power is efficiently reused by the electric actuator 100 itself, resulting in good energy saving rate.

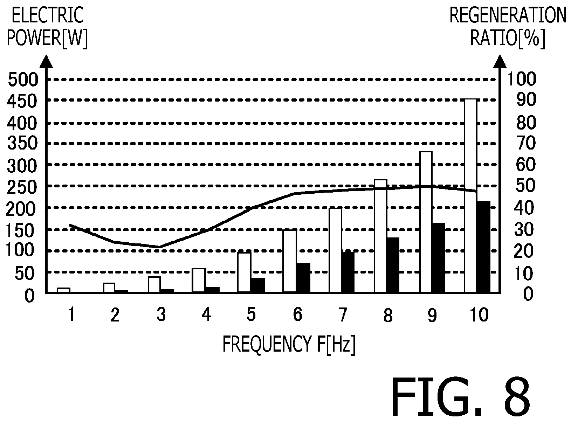

FIG. 8 is a diagram showing a relationship between frequency F, powering operation electric power Pp output from the power regenerative converter 95a to the inverter 95b during the powering operation, regenerative electric power Pr output from the inverter 95b to the power regenerative converter 95a during regenerative operation, and regeneration ratio. In FIG. 8, white bars represent the powering operation electric power Pp [W], and black bars represent the regenerative electric power Pr [W]. A line graph shown in FIG. 8 represents the regeneration ratio [%], which is the ratio of the regenerative electric power Pr to the powering operation electric power Pp. No load such as the ball screw 40, piston 50, or crankshaft 70 is connected to the rotary shaft 11 of the motor 10. Therefore, positive or negative torque occurring in the motor 10 during the powering operation or the regenerative operation is only positive or negative torque caused by the weight of the rotor and the rotary shaft 11 within the motor 10.

As shown in FIG. 8, when the frequency F is within a range of 1 to 5Hz, the regeneration ratio is 40% or less. However, when the frequency F is 6Hz or higher, the regeneration ratio becomes 50% or approximately 50%. Thus, when the motor 10 repeatedly performs forward and reverse rotations at the frequency F of 6Hz or higher, the regeneration ratio can be made higher compared with the case where the motor 10 repeatedly performs forward and reverse rotations at the frequency F of 1 to 5Hz and thus energy-saving efficiency can be improved. When relatively large loads such as the ball screw 40, piston 50, and crankshaft 70 are connected to the rotary shaft 11, the positive or negative torque occurring in the motor 10 during regenerative operation can be made higher compared with the case where no load is connected to the rotary shaft 11 and thus the regeneration ratio can further be made higher, thereby further enhancing the energy-saving effect.

FIG. 8A is a graph schematically showing a drive waveform of a typical conventional motor, and FIG. 8B is a graph schematically showing a drive waveform of the motor 10 of the present embodiment.

As shown in FIG. 8A, in the driving of the typical conventional motor, the motor is accelerated to a predetermined rotation speed in section T1 and is then continuously driven at a constant speed (section T2), and is then decelerated to a stop at the end (section T3). In such driving, regenerative electric power is generated only in section T3. Therefore, the electric power consumption reduction effect through the use of regenerative electric power is modest.

On the other hand, in the present embodiment, as shown in FIG. 8B, acceleration (powering operation) and deceleration (regenerative operation) of the motor 10 are repeated at a high frequency over the entire section from the start to the end of driving. The regenerative electric power generated during deceleration is immediately consumed in the next powering operation. That is, the generation and consumption of the regenerative electric power are routinely repeated from the start to the end of driving. As a result, in the present embodiment, the electric power consumption reduction effect by the use of the regenerative electric power is extremely significant.

As described above, with the electric actuator 100 according to the present embodiment, the motor 10 can output unidirectional rotary motion while actively generating regenerative energy by rotating the motor 10 in the forward and reverse directions due to a motion converter (transmission mechanism) that converts the forward and reverse rotary motions output by the motor 10 into unidirectional rotary motion. Therefore, the unidirectional rotary motion used for mobility apparatuses such as automobiles and trains can be obtained with less electric power consumption than when the unidirectional rotary motion is obtained directly from the rotary shaft of the motor 10.

### <Second Embodiment>

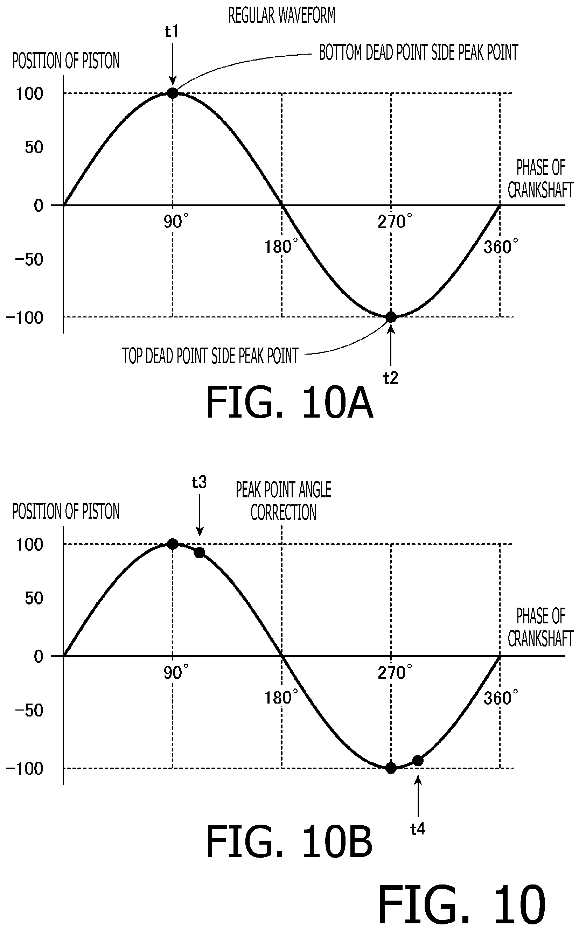

FIG. 10 is a diagram illustrating innovations in control of an electric actuator according to the present embodiment. FIG. 10A shows an example of control in the electric actuator 100 according to the first embodiment, and FIG. 10B shows an example of control of the electric actuator according to the present embodiment.

The vertical axes in FIGS. 10A and 10B show position of the piston 50 in reciprocating linear motion. Positions 100 and -100 indicate the positions of the piston 50 when the slider crank mechanism of the electric actuator is at the bottom dead point and top dead point, respectively.

The horizontal axes in FIGS. 10A and 10B show phase of the crankshaft 70 in unidirectional rotary motion. The phases 90 and 270 show the phases of the crankshaft 70 when the slider crank mechanism of the electric actuator is at the bottom dead point and top dead point, respectively.

A configuration of the electric actuator according to the present embodiment is identical to the configuration of the electric actuator 100 of the first embodiment, except that the controller 96 is configured to be able to perform control of the motor 10 described below (phase shift control). Therefore, in the electric actuator according to the present embodiment, the reciprocating rotary motion of the motor 10 is also converted into a reciprocating linear motion by the ball screw 40, and the reciprocating linear motion is further converted into and output as a unidirectional rotary motion by the slider crank mechanism. The sinusoidal waveforms in FIGS. 10A and 10B show a relationship between the position of the piston 50 and the phase of the crankshaft 70 in these electric actuators.

In the electric actuator 100 according to the first embodiment, as shown in FIG. 10A, the controller 96 Servo amplifier 95 is controlled so that the direction of rotation of the motor 10 is switched from forward to reverse at timing t1 when the piston 50 reaches the bottom dead point, and so that the direction of rotation of motor 10 is switched from reverse to forward at timing t2 when the piston 50 reaches the top dead point. This allows the reciprocating linear motion to be converted into the rotary motion while maintaining the direction of rotation of the crankshaft 70 due to inertia at the dead points (top dead point and bottom dead point) where no rotational force is generated on the crankshaft 70 by the movement of the piston 50. In other words, the reciprocating linear motion can be converted into unidirectional rotary motion.

When switching between forward and reverse rotations of the motor 10, a large torque is generated in the motor 10. Therefore, if the direction of rotation is switched at the top dead point and bottom dead point, where the force transmitted from the piston 50 to the crankshaft 70 does not act in the tangential direction (rotational direction) but only in the radial direction, a large force in the radial direction of the crankshaft 70 is generated due to the large torque generated by the motor 10. As a result, vibration occurs in the crankshaft 70, which may inhibit smooth rotation of the crankshaft 70.

Taking these circumstances into consideration, in the electric actuator of the present embodiment, the controller 96 controls the servo amplifier 95 to switch the rotation of the motor 10 between forward and reverse rotations while avoiding timing t1 when the piston 50 reaches the bottom dead point and timing t3 when it reaches the top dead point. For example, as shown in FIG. 10B, the controller 96 may control the servo amplifier 95 to switch the direction of rotation from forward to reverse at timing t3, which is slightly later than timing t1 when the piston 50 reaches its bottom dead point, and to switch the direction of rotation from reverse to forward at timing t4, which is slightly later than timing t2 when the piston 50 reaches the top dead point. The time difference (t3-t1, t4-t2) corresponds, for example, to about 0.5 degrees of the phase of the crankshaft 70, and displacement that occurs during this time difference is generally within a backlash (joint gap) of the crank mechanism. The above time difference (t3-t1, t4-12) can be set to 1.5 degrees or less of the phase of the crankshaft 70, and preferably 1 degree or less. Furthermore, it is more desirable that the above time difference (t3-t1, t4-12) is set to 0.5 degrees or less.

As described above, by controlling the motor 10 to switch the direction of rotation at the positions off from the top dead point and the bottom dead point, it is possible to apply rotational force at the top dead point and the bottom dead point while suppressing the force acting in the radial direction of the crankshaft 70. Therefore, the electric actuator according to the present embodiment can output smooth unidirectional rotation while suppressing vibration more than the electric actuator 100 according to the first embodiment.

Specific control methods include a method of providing a constant phase difference in phase of the control of the motor 10 relative to the phase of the crankshaft 70 over the entire control section, and a method of gradually increasing and decreasing (eliminating) the phase difference in the vicinity of the dead points (upper and lower dead points) (e.g., within ±10° of the dead points).

Although FIG. 10B shows an example of switching the direction of rotation after passing through the top and bottom dead points, the controller 96 may control the servo amplifier 95 to switch the direction of rotation before passing through the top and bottom dead points.

### <Third Embodiment>

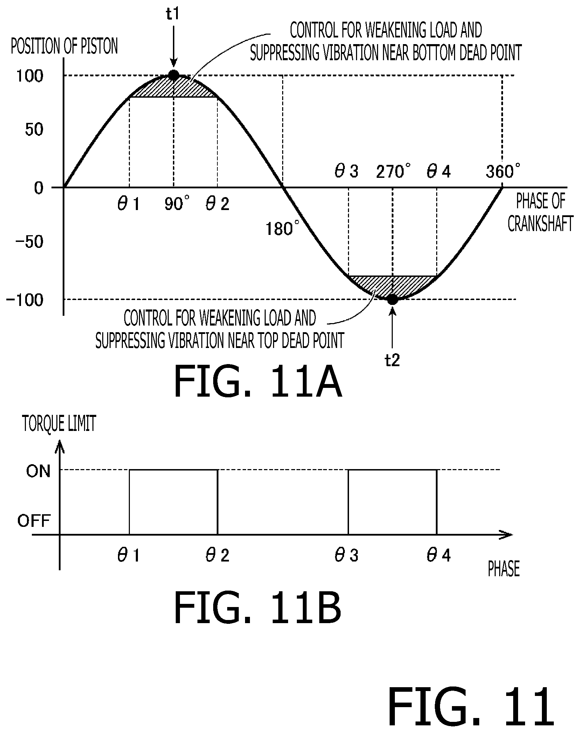

FIG. 11 is a diagram illustrating innovations in the control of the electric actuator according to the present embodiment. FIG. 11A is a diagram showing the relationship between the position of the piston 50 and the phase of the crankshaft 70 in the electric actuator according to the present embodiment, and FIG. 11B is a diagram showing a relationship between torque limitation and the phase of the crankshaft 70 in the electric actuator according to the present embodiment.

A configuration of the electric actuator according to the present embodiment is identical to the configuration of the electric actuator 100 of the first embodiment, except that the controller 96 is configured to be able to perform control of the motor 10 described below (load suppression control).

As described above in the second embodiment, when the direction of rotation of the motor 10 is switched at the top dead point and the bottom dead point, a large force acts on the crankshaft 70 in the radial direction, and vibration is likely to occur on the crankshaft 70. Therefore, in the present embodiment, the controller 96 controls the servo amplifier 95 so that torque of the motor 10 is limited at least at the timings of reaching the dead points (the top dead point and the bottom dead point). For example, as shown in FIG. 11, the controller 96 may limit the torque of the motor 10 near the upper and lower dead points (θ₁ to θ₂ and θ₃ to θ₄) where the direction of rotation switches, and may control the motor 10 within the limited torque range. This prevents excessive force from being applied to the crankshaft 70 in the radial direction, thereby suppressing the occurrence of vibrations that inhibit smooth rotation of the crankshaft 70. Therefore, the electric actuator according to the present embodiment can output smooth unidirectional rotation while suppressing vibration more than the electric actuator 100 according to the first embodiment.

### <Fourth Embodiment>

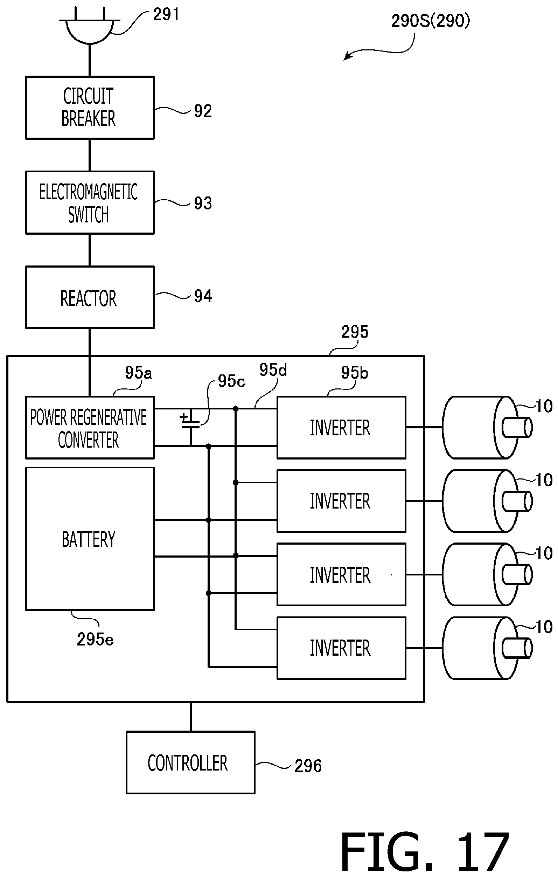

The electric actuator 100 of the first embodiment described above includes a single drive unit 100d, but a plurality of drive units may be provided to an electric actuator. An electric actuator 200 according to a fourth embodiment of the present invention described next includes four drive units 200d. The electric actuator 200 may include a servo amplifier 295 (drive device), which is described later with reference to FIG. 17, and a controller 296.

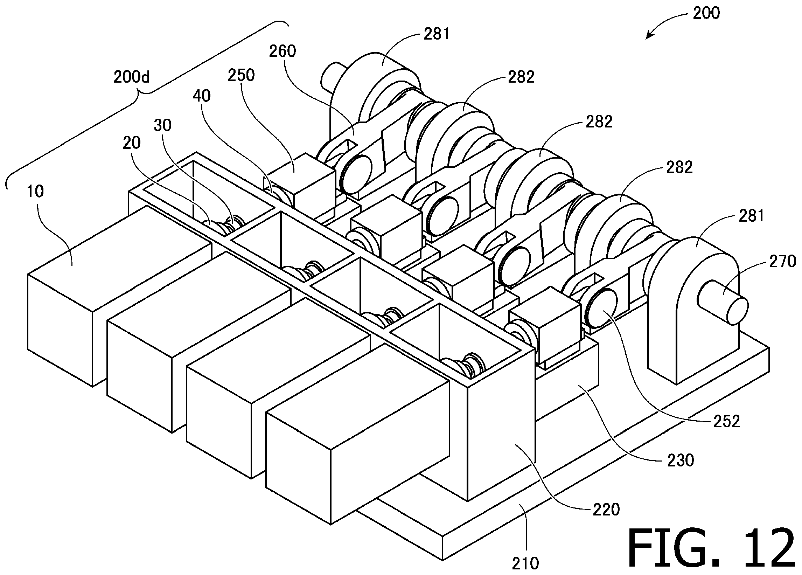

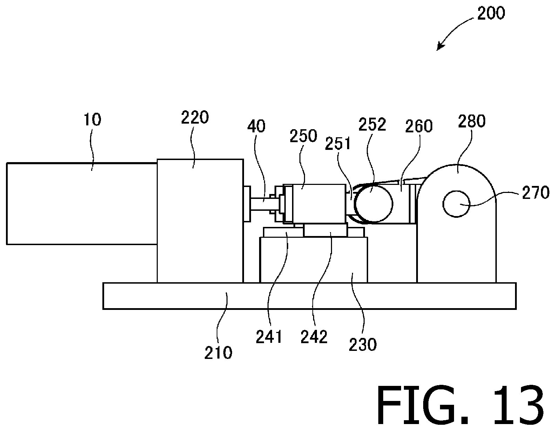

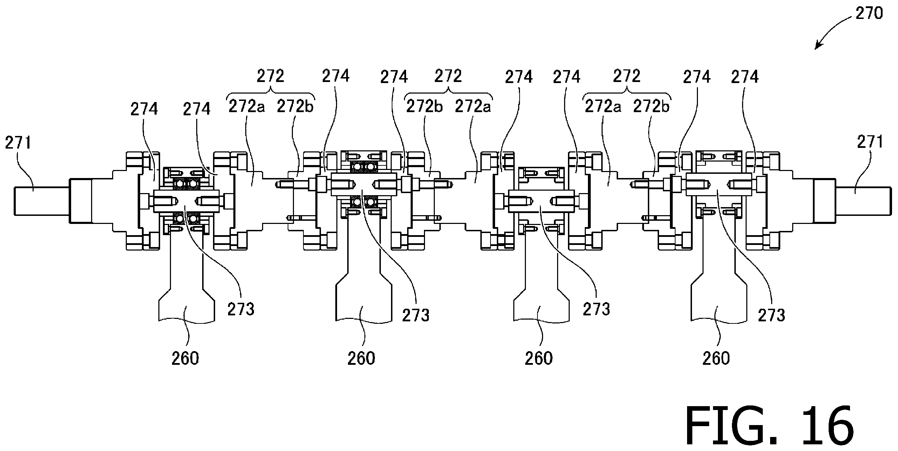

FIG. 12 is a perspective view of the electric actuator 200 according to the fourth embodiment of the present invention. FIGS. 13 through 15 are side, plan, and front views of the electric actuator 200, respectively. FIG. 16 is a configuration diagram of a crankshaft 270 of the electric actuator 200.

The electric actuator 200 according to the fourth embodiment of the present invention is a four-cylinder actuator that mimics a structure of a four-cylinder engine, and includes a crankshaft 270 and four drive units 200d connected to the crankshaft 270. In other words, the electric actuator 200 includes four electric motors, four first motion converters, and four second motion converters, with the four second motion converters sharing an output shaft for unidirectional rotary motion as described below. The electric actuator 200 further includes the servo amplifier 295 (drive device), which is described later with reference to FIG. 17, and the controller 296.

Each drive unit 200d has a structure similar to the drive unit 100d of the first embodiment and includes the motor 10, the shaft coupling 20, the bearing 30, the ball screw 40, a piston 250, and a connecting rod 260, as shown in FIG. 12.

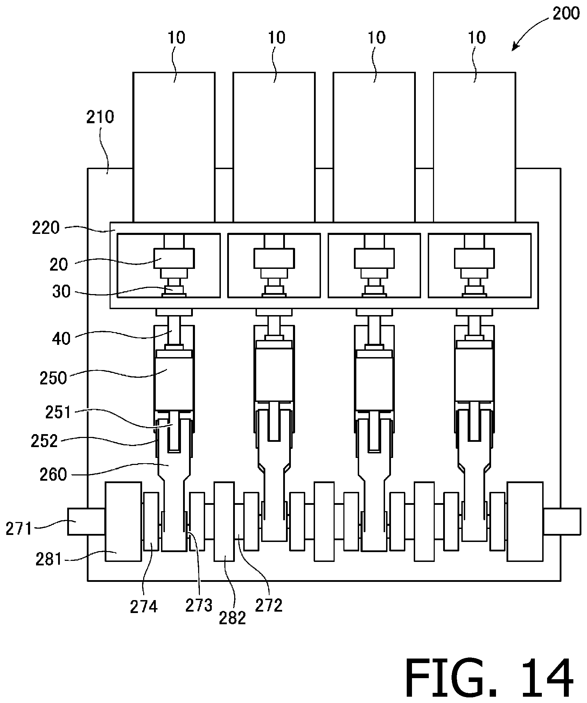

As shown in FIG. 13, the motor 10 is fixed to a frame 220 which houses the shaft coupling 20, and the frame 220 is fixed on a base 210. As shown in FIG. 14, the output shaft of the motor 10 is connected by the shaft coupling 20 to the shaft of the ball screw 40, which is supported by the bearing 30 provided to the frame 220.

A piston 250 is fixed to the nut of the ball screw 40. As shown in FIG. 13, the piston 250 is placed on a carriage 242 that can move along a rail 241, which is disposed parallel to the shaft of the ball screw 40 on a top surface of a frame 230. By placing the piston 250 on the carriage 242 in this manner, the linear motion of the piston 250 is guided by the rail 241 and the carriage 242. This prevents excessive bending stress from acting vertically to the ball screw 40 as the piston 250 performs its reciprocating linear motion.

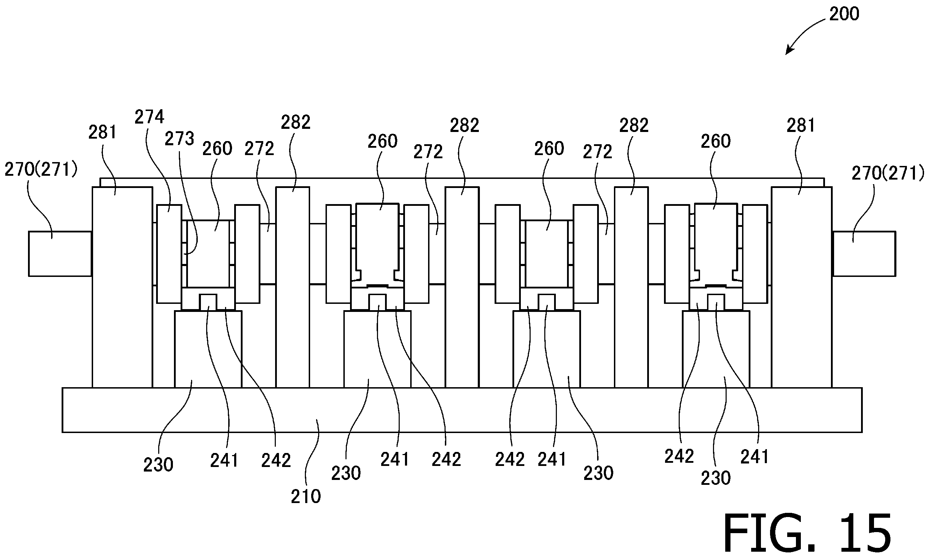

As shown in FIGS. 13 and 14, an end part 251 of the piston 250 is rotatably connected to one end (clevis section) of the connecting rod 260 by a pin 252 (first pin). As a result, the connecting rod 260 can rotate within a certain angular range with the pin 252 as a central axis of rotation in conjunction with the reciprocating linear motion of the piston 250. As shown in FIGS. 14 and 15, the other end of the connecting rod 260 is rotatably connected to the crankshaft 270 by a crank pin 273.

The crankshaft 270 is a rotating body and has a structure that mimics a crankshaft for a four-cylinder engine. As shown in FIG. 16, the crankshaft 270 consists of a plurality of parts, which are fixed to each other with bolts. With such configuration, the crankshaft can be easily configured for any number of drive units d, not just for the four-cylinder type.

Specifically, as shown in FIGS. 15 and 16, the crankshaft 270 includes crank journals (crank journals 271 and crank journals 272) supported by bearings provided in bearing sections (bearing sections 281 and bearing sections 282) standing from the base 210, the crank pins 273 rotatably connected to the connecting rods 260, and crank arms 274 that joint the crank pins 273 at eccentric positions with respect to axes of the crank journals. The crank pins 273 are eccentric pins eccentric with respect to an axis of rotation of the crankshaft 270.

The crank journals 271 and 272 and the crank pins 273 are bolted to the crank arms 274, respectively, and the crank journals 271 and 272 and the crank pins 273 are connected to each other via the crank arms 274.

The crankshaft 270 includes two types of crank journals: the crank journal 271 which has an output shaft, and the crank journal 272 which is sandwiched between crank arms 274. The crank journal 272 sandwiched between the crank arms 274 consists of two parts (a crank journal 272a and a crank journal 272b) to allow insertion into the bearing, and after inserting one part (the crank journal 272a) into the bearing, the other part (the crank journal 272b) is bolted to form one part.

In the electric actuator 200 configured as described above, the reciprocating rotary motion of the motor 10 is converted into the reciprocating linear motion of the piston 250 by the ball screw 40. The reciprocating linear motion of the piston 250 is further converted into a unidirectional rotary motion of the crankshaft 270 by the connecting rod 260 and the crankshaft 270 constituting a slider-crank mechanism. That is, as with the electric actuator 200 of the first embodiment, the electric actuator 200 is configured to convert the reciprocating rotary motion of the motor 10 into the unidirectional rotary motion for output.

The electric actuator 200 differs from the electric actuator 100 in that the connecting rods 260 of the four drive units 200d are rotatably fitted to the four crank pins 273 of the crankshaft 270, respectively. In the electric actuator 200, the crankshaft 270 is rotationally driven by the four drive units 200d connected to the crankshaft 270. In other words, the four drive units 200d share the crankshaft 270, which is the output shaft of the unidirectional rotary motion output by their respective crank mechanisms, so that the power generated by the four drive units 200d is combined at the crankshaft 270. This also makes the electric actuator 200 different from the electric actuator 100.

The eccentric directions of the four crank pins 273 included in the crankshaft 270 are not limited, but may be different from each other. For example, the eccentric directions of the four crank pins 273 may be alternately made different by 180°. For example, the eccentric directions of the four crank pins 273 may be made different by 90° so that timings at which the four crank pins 273 come to respective dead points do not coincide. Smooth rotation may be realized by eliminating time when no rotational force is acting on the crankshaft 270 with this configuration.

FIG. 17 is a block diagram showing a schematic configuration of an electric power feeding system 290S (electric drive system 290) of the electric actuator 200 according to the fourth embodiment of the present invention. The electric power feeding system 290S, together with the four drive units 200d (specifically, the motors 10), constitute the electric drive system 290.

The electric drive system 290 and the electric power feeding system 290S of the fourth embodiment differ from the first embodiment in that the electric drive system 290 and the electric power feeding system 290S include a plug 291 that is plugged into an outlet of a primary power source (not shown) and in the configuration of the servo amplifier. The servo amplifier 295 of the fourth embodiment includes a battery 295e and four inverters 95b corresponding to the four drive units 200d, respectively. Due to the inclusion of the battery 295e, the electric actuator 200 of the fourth embodiment can be operated using electric power accumulated in the battery 295e even when the electric actuator 200 is disconnected from the primary power source. The battery 295e is connected to the direct current bus bar 95d consisting of a pair of conductors in parallel with the power regenerative converter 95a and the four inverters 95b. Each inverter 95b is connected to the motor 10 of the corresponding drive unit 200d.

The four inverters 95b are connected in parallel with each other to one common system of the direct current bus bar 95d. That is, direct current electric powers generated by the power regenerative converter 95a, the battery 295e, and the capacitor 95c are distributed to the four inverters 95b. The regenerative electric powers output from the four inverters 95b are combined in the direct current bus bar 95d. A portion of the regenerative electric power returned to the direct current bus bar 95d is again distributed to the four inverters 95b. Excess regenerative electric power is stored in the capacitor 95c and the battery 295e, or returned to the primary power source via the power regenerative converter 95a.

If the eccentric directions of the four crank pins 273 are alternately made different by 90° (i.e., the eccentric directions of the four crank pins 273 are 12 o'clock, 3 o'clock, 6 o'clock, and 9 o'clock), the motors 10 of the two drive units 200d that are connected to the eccentric crank pins 273 of the crankshaft 270 being eccentric in the 12 o'clock and 6 o'clock directions and the motors 10 of the remaining two drive units 200d that are connected to the eccentric crank pins 273 of the crankshaft 270 being eccentric in the 3 o'clock and 9 o'clock directions have opposing electric power consumption/regeneration timings, so that most of the regenerative electric power output from the motors 10 of one of the two sets of the two drive units 200d are efficiently consumed by the motors 10 of the other of the two sets of the two drive units 200d. Therefore, it is possible to drive the electric actuators 200 with lower electric power consumption.

### <Fifth Embodiment>

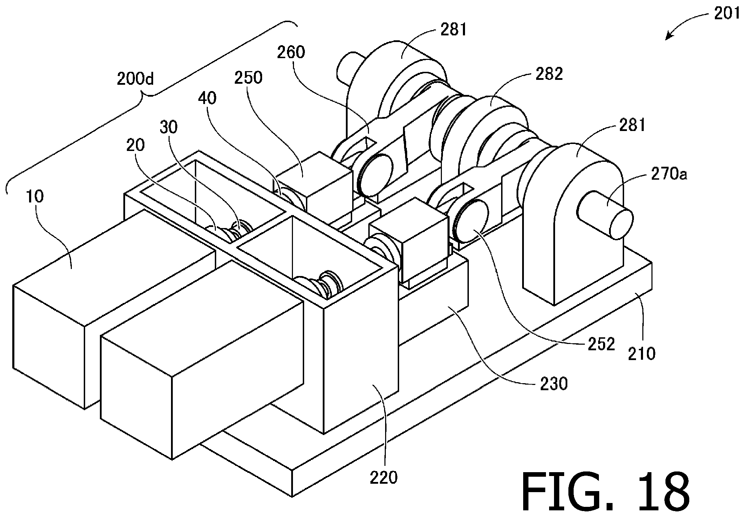

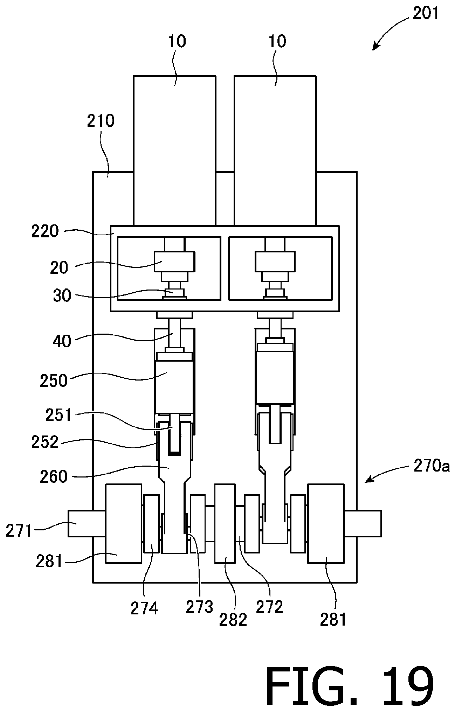

FIG. 18 is a perspective view of an electric actuator 201 according to a fifth embodiment of the present invention. FIG. 19 is a plan view of the electric actuator 201.

As shown in FIG. 18, the electric actuator 201 according to the fifth embodiment of the present invention includes a crankshaft 270a and two drive units 200d connected to the crankshaft 270a. The drive units 200d are as described above in the fourth embodiment, and a detailed description is omitted. In other words, the electric actuator 201 includes two electric motors, two first motion converters, and two second motion converters, with the two second motion converters sharing an output shaft for unidirectional rotary motion. As in the electric actuator 200, the electric actuator 201 may include the servo amplifier 295 (drive device) and the controller 296.

The crankshaft 270a has a structure that mimics a crankshaft for a two-cylinder engine. Like the crankshaft 270 of the fifth embodiment, the crankshaft 270a consists of a plurality of parts, and the plurality of parts are fixed to each other with bolts.

Specifically, as shown in FIG. 19, the crankshaft 270a includes crank journals (the crank journals 271 and the crank journal 272) supported by bearings provided in bearing sections (the bearing sections 281 and the bearing section 282) standing from the base 210, the crank pins 273 rotatably connected to the connecting rods 260, and crank arms 274 that joint the crank pins 273 at eccentric positions with respect to axes of the crank journals. The crankshaft 270a differs from the crankshaft 270 in that the crankshaft 270a has fewer parts than the crankshaft 270 due to the reduced number of cylinders (number of drive units). For example, there is only one crank journal 272 provided between cylinders and only two crank pins 273 provided per cylinder.

In the first through fifth embodiments described above, a crank mechanism (slider crank mechanism) consisting of a connecting rod and a crankshaft is employed as the second motion converter that converts reciprocating motion (reciprocating linear motion) into unidirectional rotary motion, but the present invention is not limited to this configuration. Embodiments that do not use a crankshaft are described below.

### <Sixth Embodiment>

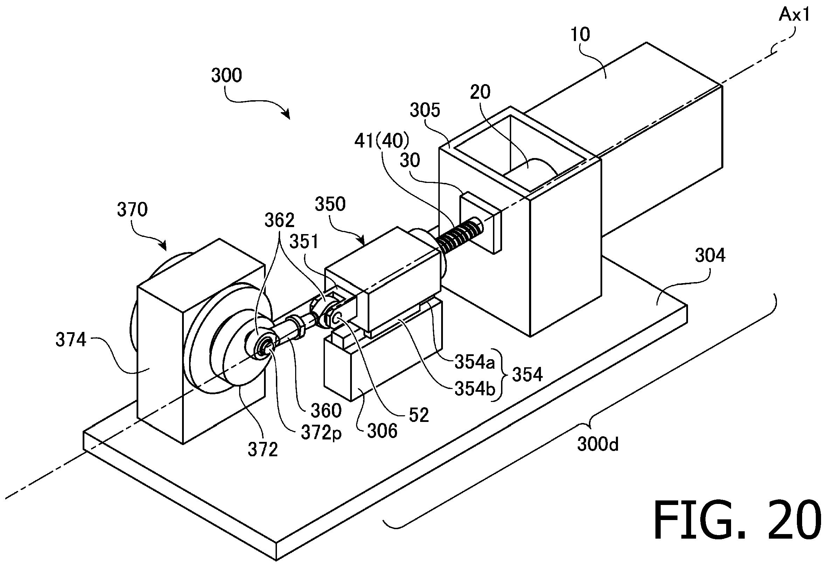

FIG. 20 shows an external view of an electric actuator 300 according to a sixth embodiment of the present invention. The electric actuator 300 of the present embodiment includes a base 304, and a drive unit 300d and a spindle section 370 installed on the base 304. As in the electric actuators according to the embodiments described above, the electric actuator 300 may include a servo amplifier and a controller which are not shown in the figure.

The drive unit 300d includes the motor 10, the ball screw 40 that converts the rotary motion of the motor 10 into linear motion, the bearing 30 that rotatably supports the screw shaft 41 of the ball screw 40, a box-shaped linear motion part 350 (hereinafter referred to as "piston 350") that can move in the axial direction (i.e., in the extending direction of the axis line Ax1), and a guideway-type circulating linear bearing 354 (hereinafter referred to as "linear guide 354") that movably supports the piston 350 in the axial direction, a connecting rod 360 that connects the piston 350 to a spindle 372 described below in the spindle section 370, and a frame 305 and a frame 306 mounted on the base 304. The motor 10 and the bearing 30 are attached to the frame 305. The axis line Ax1 of the drive unit 300d of the present embodiment is a straight line common to the centerlines of the rotary shaft 11 of the motor 10 and the screw shaft 41 of the ball screw 40.

The linear guide 354 includes a rail 354a and a carriage 354b that can travel on the rail 354a. The rail 354a is attached to a top surface of a frame 306, and the carriage 354b is attached to a bottom surface of the piston 350. This allows the piston 350 to be supported to be movable only in the axial direction with respect to the base 304.

The rotary shaft 11 (not shown) of the motor 10 is connected to the screw shaft 41 of the ball screw 40 by the shaft coupling 20. The nut 42 (not shown) of the ball screw 40 is housed in a hollow portion of the piston 350 and secured to the piston 350. As the rotary shaft 11 of the motor 10 rotates back and forth, the piston 350 moves back and forth in the axial direction. A clevis 351 is provided at one end of the piston 350 in the axial direction.

The spindle section 370 includes a spindle 372 which is a rotating body, and a bearing section 374 that rotatably supports the spindle 372. A pin 372p is eccentrically mounted on one end surface of spindle the 372. That is, the pin 372p is an eccentric pin that is eccentric with respect to the axis of rotation of the spindle 372.

Ball joints 362 are provided at both end portions of the connecting rod 360 according to the present embodiment. One ball joint 362 is connected to the clevis 351 via the pins 52 to be rotatable around the pin 52. The other ball joint 362 is connected to the spindle 372 via the pin 372p to be rotatable around the pin 372p. A rolling bearing such as a spherical roller bearing or a spherical ball bearing may be used in place of the ball joint 362.

The motor 10 is driven so that the rotary shaft 11 repeatedly rotates back and forth within a predetermined angular range. The rotation of the motor 10 is converted into linear motion by the ball screw 40 and transmitted to the piston 350. As a result, the piston 350 moves in a reciprocating linear motion along the axis line Ax1 with a predetermined stroke. That is, the ball screw 40 functions as the first motion converter that converts the reciprocating rotary motion output from the motor 10 into the reciprocating linear motion. The reciprocating linear motion of the piston 350 in the direction of the axis line Ax1 is transmitted by the connecting rod 360 to the pin 372p and converted into a unidirectional rotary motion of the spindle 372. That is, the connecting rod 360 and the spindle 372 constitute a link mechanism as the second motion converter that converts the reciprocating motion (reciprocating linear motion) into the unidirectional rotary motion.

### <Seventh Embodiment>

Similarly to the first mechanism of the first embodiment, the first mechanism in the seventh embodiment may be a mechanism that has a moving member that is held so as to be linearly movable and coupled to the rotary shaft of the motor, and that causes the moving member to reciprocate linearly in response to the forward and reverse rotations of the motor. For example, the first mechanism in the seventh embodiment may be a mechanism that employs a ball screw. However, the first mechanism of the seventh embodiment is not particularly limited to such configuration as long as it is capable of causing the moving member to linearly reciprocate in response to the forward and reverse rotary motions of the rotary shaft of the motor.

Similarly to the second mechanism in the first embodiment, the second mechanism in the seventh embodiment may be a mechanism that has a rotary member that is rotatably held and a connecting rod that is rotatably connected to a first connecting part of the rotary member offset from a rotation center of the rotary member, the connecting rod being rotatably connected to the moving member at a second connecting part located apart from the first connecting part, and that causes the rotary member to rotate in one direction in conjunction with the forward and reverse rotations of the motor. For example, the second mechanism in the seventh embodiment may be a cam mechanism. However, the second mechanism is not particularly limited to such configuration as long as it is capable of causing the rotary member to rotate in one direction in response to the movement of the moving member of the first mechanism.

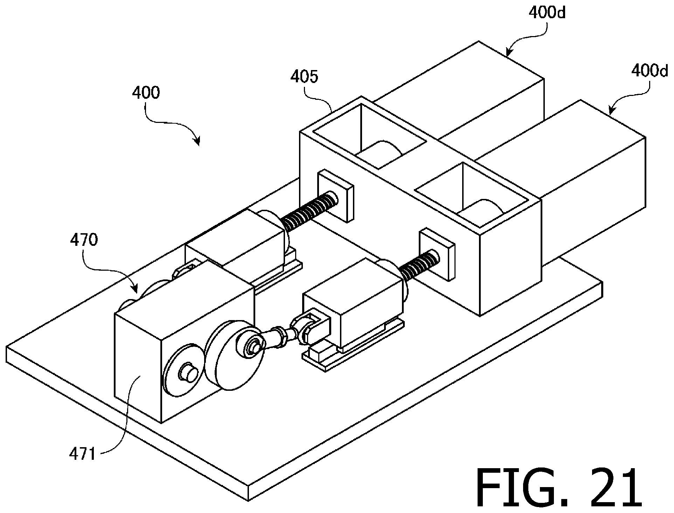

FIG. 21 is an external view of an electric actuator 400 according to a seventh embodiment of the present invention. The electric actuator 400 of the present embodiment includes two drive units 400d (first mechanisms) disposed side by side, and a gear device 470 (second mechanism) connected to the two drive units 400d. As in the electric actuators of the embodiments described above, the electric actuator 400 may include a servo amplifier and a controller which are not shown. A configuration of the drive unit 400d of the present embodiment differs from that of the drive unit 100d of the first embodiment or the drive unit 300d of the sixth embodiment in that a frame 405 of the two drive units 400d is integrated, but the other configuration is common to the drive unit 100d or the drive unit 300d. For example, a transmission mechanism is constituted by the two drive units 400d and the gear device 470. That is, the transmission mechanism has a second shaft 475 (output shaft) described later, which is mechanically coupled to the rotary shafts of the motors 10 (electric motors), and converts the forward and reverse rotary motions of the rotary shafts of the motors into a unidirectional rotary motion and transmits the unidirectional rotary motion to the second shaft 475. The electric actuator 400 may further include the servo amplifier 95 (drive device), a detecting part EN, the controller 96, and the storage device St shown in FIG. 42. Each of the two drive units 400d may include the motor 10, the bearing 30, the ball screw 40 (feed screw mechanism), the piston 50 (moving member), and the connecting rod 60.

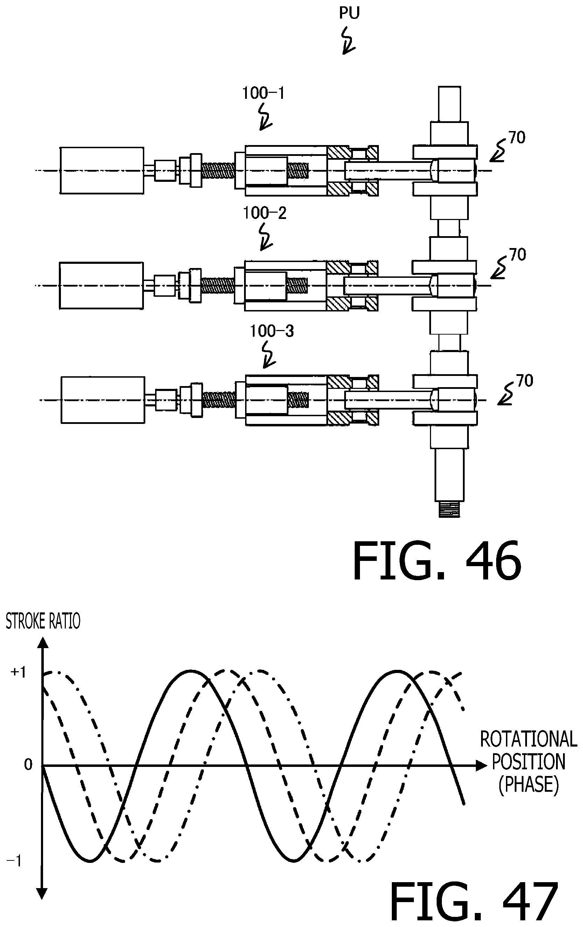

In the seventh embodiment, the motors 10 are driven according to command values determined on the basis of a cam curve (solid line) shown in FIG. 46, which will be described later. As a result, the output shaft 75 can be rotated without applying unnecessary load to the motors 10, thereby realizing power saving of the electric actuator 500.

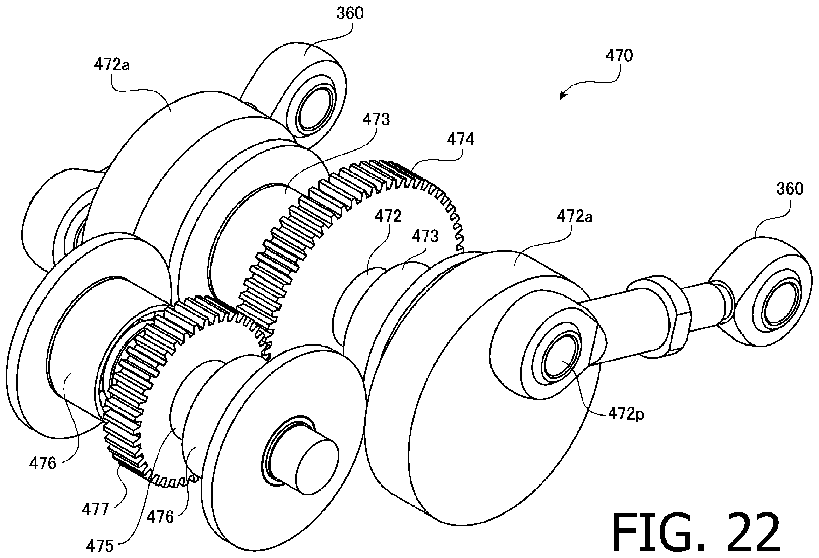

FIG. 22 is a diagram showing a mechanism of the gear device 470. The connecting rods 360 of the drive units 300d or the drive units 400d are also illustrated in FIG. 22. The connecting rod 360 and the piston 50 are connected with the pin 52 (second connecting part).

The gear device 470 includes a case 471 (FIG. 21), two pairs of bearings 473 and 476 attached to the case 471, a first shaft 472 (input shaft) rotatably supported by the pair of bearings 473, a drive gear 474 attached to the first shaft 472, a second shaft 475 (output shaft) rotatably supported by the pair of bearings 476, and a driven gear 477 attached to the second shaft 475. The drive gear 474 meshes with the driven gear 477, and rotary motion of the first shaft 472 is transmitted to the second shaft 475 via the drive gear 474 and the driven gear 477.

Disk parts 472a (rotary members) are provided to both ends of the first shaft 472, respectively. A pin 472p (first connecting part) is eccentrically attached to each disk part 472a. That is, the electric actuator 400 has disk parts 472a that are rotatably held, and the connecting rods 360 that are rotatably connected to the disk parts 472a by the pins 472p offset from the rotation center of the disk parts 472a. The connecting rods 360 are pivotably connected to the pistons 50 by the pins 52, and the disk parts 472a rotate in one direction in conjunction with the forward and reverse rotary motions of the motors 10. In the present embodiment, eccentric directions of the pins 472p of the two disk parts 472a are 90 degrees apart.

The connecting rod 360 of one of the drive units 400d is connected to the pin 472p of one of the disk parts 472a of the first shaft 472, and the connecting rod 360 of the other of the drive units 400d is connected to the pin 472p of the other of the disk parts 472a of the first shaft 472. Therefore, outputs from the pair of drive units 400d are combined in the gear device 470 (more specifically, the first shaft 472) and output from the second shaft 475.

In the present embodiment, the eccentric directions of the pins 472p of the two disk parts 472a, which are coupled to the connecting rods 360 of the two drive units 400d, respectively, are 90 degrees apart. Therefore, the motors 10 of the two drive units 400d have opposite timing of electric power consumption/regeneration to each other, so that most of the regenerative electric power output from the motor 10 of one of the drive units 400d is efficiently consumed by the motor 10 of the other of the drive units 400d. Therefore, it is possible to drive the electric actuator 400 with lower electric power consumption.

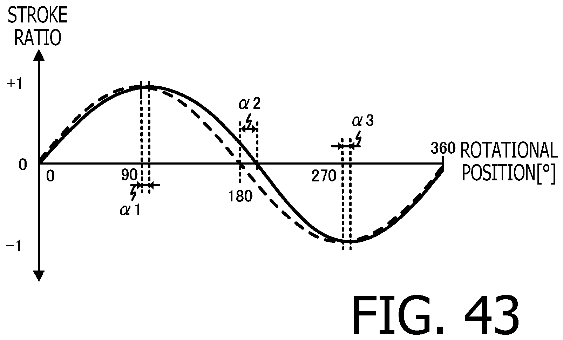

In the seventh embodiment, the motors 10 of the two drive units 400d are driven in accordance with command values determined on the basis of the cam curve (solid line) shown in FIG. 43, which will be described later. As a result, the output shaft 75 can be rotated without applying unnecessary loads to the respective motors 10, thereby realizing power saving of the electric actuator 400.

In the first through seventh embodiments described above, a configuration in which reciprocating rotary motion is once converted into reciprocating linear motion by the first motion converter and then further converted into unidirectional rotary motion by the second motion converter is employed. However, the present invention is not limited to this configuration, and configurations in which the reciprocating rotary motion is directly converted into unidirectional rotary motion are also included in the scope of the invention, as in an eighth embodiment of the present invention described next.

### <Eighth Embodiment>

The first mechanism of the eighth embodiment has a first rotary member fixed to the rotary shaft of the motor. It should be noted that the first mechanism applicable to the eighth embodiment is not particularly limited to such configuration as long as it is a mechanism having the first rotary member fixed to the rotary shaft of the motor.

The second mechanism applicable to the eighth embodiment has a second rotary member that is rotatably supported, and a connecting rod that is rotatably connected to a first connecting part of the second rotary member offset from a rotation center of the second rotary member, the connecting rod being rotatably connected to a second connecting part of the first rotary member offset from a rotation center of the first rotary member, and the second rotary member rotating in one direction in conjunction with the forward and reverse rotary motions of the electric motor. It should be noted that the second mechanism of the eighth embodiment is not particularly limited to such configuration as long as it is a mechanism capable of rotating the second rotary member in one direction in conjunction with the first rotary member of the first mechanism.

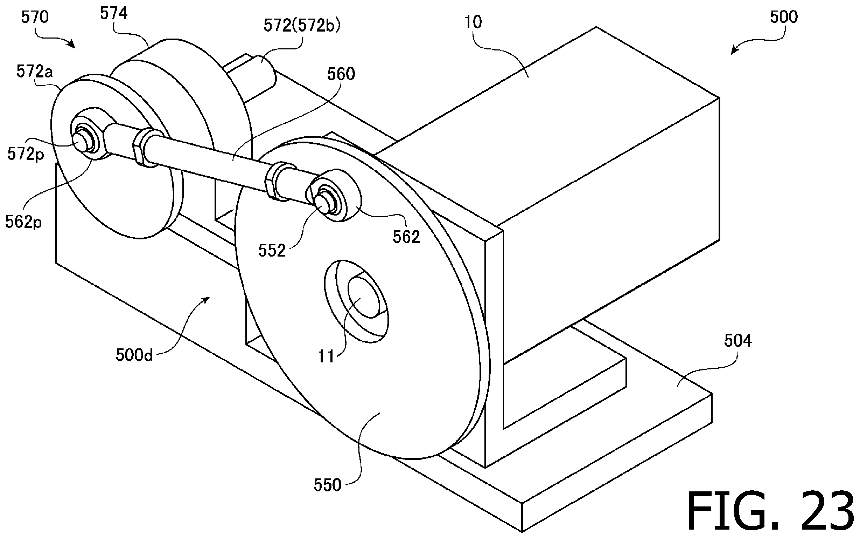

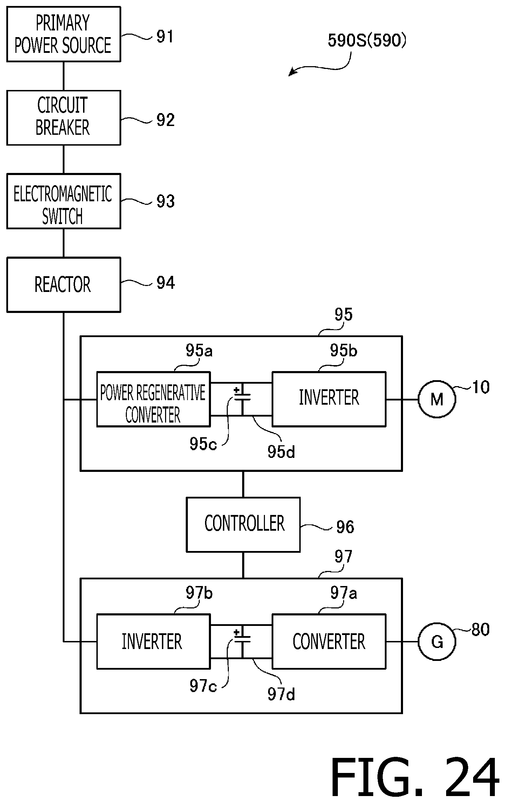

FIG. 23 is an external view of an electric actuator 500 of the eighth embodiment of the present invention. The electric actuator 500 of the present embodiment includes a base 504, and a drive unit 500d (first rotary mechanism) and spindle section 570 (second rotary mechanism) installed on the base 504. The electric actuator 500 may include the servo amplifier 95 and the controller 96 shown in FIG. 24. The electric actuator 500 may also include the servo amplifier 95, the detecting part EN, the controller 96, and the storage device St that are shown in FIG. 42 which will be described later. The drive unit 500d includes the motor 10 (electric motor), a drive disk 550 (first disk part; first rotary member) coupled to the rotary shaft 11 of the motor 10, and a connecting rod 560. A pin 552 (second connecting part; first pin) is eccentrically attached to the drive disk 550. That is, the electric actuator 500 has the drive disk 550 that is fixed to the rotary shaft of the motor 10. The electric actuator 500 may further include the servo amplifier 95 (drive device), the detecting part EN, the controller 96, and the storage device St that are shown in FIG. 42 which will be described later.

The spindle section 570 includes a spindle 572, and a bearing section 574 that rotatably supports the spindle 572. The spindle 572 includes a cylindrical shaft part 572b, a driven disk 572a (second disk part; second rotary member) coupled to one end of the shaft part 572b, and a pin 572p (first connecting part; second pin) eccentrically attached to the driven disk 572a. That is, the electric actuator 500 has the driven disk 572a that is rotatably held, and the connecting rod 560 that is rotatably connected to the driven disk 572a at the pin 572p offset from a rotation center of the driven disk 572a, the connecting rod 560 being rotatably connected to the drive disk 550 at the pin 552 offset from the rotation center of the drive disk 550, and the driven disk 572a rotating in one direction in conjunction with the forward and reverse rotary motions of the motor 10.

Ball joints 562 are provided at both ends of the connecting rod 560. One of the ball joints 562 is connected to the drive disk 550 via the pin 552 and rotatably around the pin 552. The other of the ball joints 562 is connected to the driven disk 572a (spindle 572) via the pin 572p and rotatably around pin 572p. That is, the connecting rod 560 is coupled to the drive disk 550 (pin 552) and the driven disk 572a (pin 572p) with joints (pairs of elements). A rolling bearing such as a self-aligning roller bearing or a self-aligning ball bearing may be used in place of the ball joint 562.

The motor 10 is driven so that the rotary shaft 11 (and the drive disk 550) repeatedly rotates back and forth within a predetermined angular range. The connecting rod 560 is thereby repeatedly pushed and pulled in a lengthwise direction in a predetermined stroke and, as a result, the driven disk 572a (spindle 572) rotates continuously in one direction. That is, the reciprocating rotary motion of the motor 10 is converted into a unidirectional rotary motion of the spindle 572 by a link mechanism consisting of the drive disk 550, the connecting rod 560, and the driven disk 572a. This link mechanism can also be interpreted as a combination of two crank mechanisms (specifically, a first crank mechanism, as a first motion converter, consisting of the drive disk 550 and the connecting rod 560, and a second crank mechanism, as a second motion converter, consisting of the connecting rod 560 and driven disk 572a).

In the eighth embodiment, the motor 10 is driven in accordance with command values determined on the basis of the cam curve (solid line) shown in FIG. 43 which will be described later. As a result, the output shaft 75 can be rotated without applying unnecessary load to the motor 10, thereby realizing power saving of the electric actuator 500.

The spindle section 570 of the eighth embodiment (more specifically, the bearing section 574) may have a generator 80 (FIG. 24) built therein. Electric power generated by the generator is converted into direct current by a converter, smoothed by a capacitor, and then input to an inverter. The inverter converts the direct current electric power into a sinusoidal alternating current having the same quality as commercial power, and outputs the sinusoidal alternating current to the primary power source side. According to the configuration of the present embodiment, electric power is generated by the generator not only during the regenerative operation but also during the powering operation and is supplied to the primary power source 91 side, thereby allowing efficient utilization of electric energy.

FIG. 24 is a block diagram showing a schematic configuration of an electric power feeding system 590S (electric drive system 590) of the electric actuator 500 according to the eighth embodiment of the present invention. The electric power feeding system 590S, together with the motor 10, constitutes the electric drive system 590.

The electric drive system 590 and the electric power feeding system 590S of the eighth embodiment differ from the electric drive system 90 and the electric power feeding system 90S of the first embodiment in that the electric drive system 590 and the electric power feeding system 590S include a generator 80, and an inverter device 97 that converts electric power generated by the generator 80 into system electric power (e.g., three-phase alternating current) and supplies the electric power to a primary power source side. The inverter device 97 is communicatively connected to the controller 96 and operates in accordance with the control of by controller 96.

The inverter device 97 includes a converter 97a, an inverter 97b, and a capacitor 97c. For example, the converter 97a includes a full-wave rectifier including a diode bridge circuit. A PWM converter may be provided on an input side of converter 97a to sinusoidalize input current of the converter 97a. The inverter 97b is, for example, a PWM inverter that controls output electric power by PWM control.

The electric power generated by the generator 80 is converted into direct current by the converter 97a, smoothed by the capacitor 97c, and then input to the inverter 97b. A pair of positive and negative conductors constitute one system of a direct current bus bar 97d. The inverter 97b converts the direct current electric power supplied from the direct current bus bar 97d into a sinusoidal alternating current of the same quality as the system electric power and outputs the sinusoidal alternating current to the primary power source 91 side.

According to the present embodiment, electric energy can be used more efficiently because electric power is generated by the generator 80 and supplied to the primary power source 91 side not only during regenerative operation but also during powering operation.

In the present embodiment, the generator 80 is built into the bearing section 574 of the spindle section 570. However, the generator 80 may be provided in the drive unit 500d. For example, the generator 80 may be installed between the motor 10 and the drive disk 550. The rotary shaft 11 of the motor 10 or the shaft part 572b of the spindle 572 may be extended and connected to an input shaft of the generator 80 to supply a portion of the electric power to the generator 80. A portion of the electric power may also be diverted from a rotary shaft of the drive unit 500d or spindle section 570 and transmitted to the generator 80 by means of a belt, chain, or other winding transmission or gear mechanism.

The generator 80 of the present embodiment is an AC generator, but a DC generator may also be used. In this case, the converter 97a of the inverter device 97 is not needed because rectification of the electric power generated by the generator is not required, and, for example, an output terminal of the DC generator is connected to the direct current bus bar 97d without going through the converter 97a.

A battery may be provided to the inverter device 97, and the battery may be connected to the direct current bus bar 97d in parallel with the capacitor 97c.

A clutch may be provided between the generator 80 and the motor 10, and timing of electric power absorption by the generator 80 may be controlled by intermittency of the clutch.

The direct current bus bar 97d, the capacitor 97c, and the inverter 97b of the inverter device 97 may be shared between the direct current bus bar 95d, the capacitor 95c, and the power regenerative converter 95a of the servo amplifier 95, respectively.

Next, exemplary applications of an electric mobility apparatus, a railway train, a vibration test device, a tire test device, a dynamic balance multi-test device, a uniformity test device, a balance measurement device, and a collision simulation test device to which the electric actuator according to the embodiment of the present invention is installed will be described.

### <Ninth Embodiment>

The electric mobility apparatus has an electric actuator, a power transmission device in which an output shaft of a motion converter is connected to an input shaft, a drive shaft connected to an output shaft of the power transmission device, and wheels attached to the drive shaft. The above electric actuator includes at least one electric motor, a capacitor, an inverter that drives the electric motor using electric power accumulated in the capacitor, a power regenerative converter that supplies electric power from a battery to the capacitor, and a motion converter that has an input shaft to which rotary motion of the electric motor is transmitted and an output shaft that converts the rotary motion transmitted to the input shaft into the unidirectional rotary motion and outputs the unidirectional rotary motion. The motion converter converts forward and reverse rotary motions transmitted to the input shaft by driving the electric motor to alternately rotate in the forward and reverse directions into unidirectional rotary motion and outputs the unidirectional rotary motion. The drive device regenerates regenerative electric power generated in the electric motor as the electric motor alternately rotates in the forward and reverse directions, and accumulates the regenerative electric power in the capacitor. Furthermore, the power regenerative converter supplies to the battery surplus electric power among the regenerative electric power that has not been charged to the capacitor. Specific configurations of the electric mobility apparatus according to one embodiment will be described below. However, the present invention is not limited to these specific configurations.

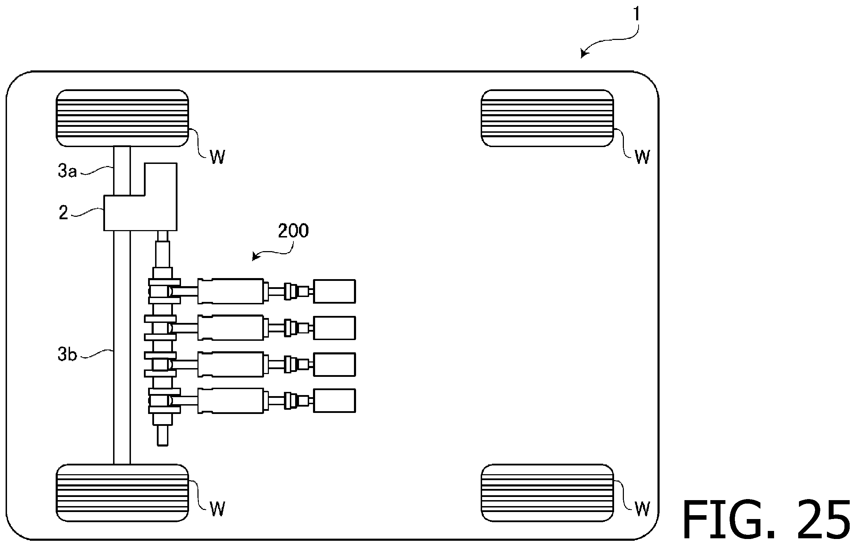

FIG. 25 is a diagram showing a schematic configuration of a power system of an electric car 1 equipped with the electric actuator 200 according to the fourth embodiment of the present invention as a prime mover. The electric car 1 includes a power transmission 2, and left and right drive shafts 3a and 3b. The power transmission 2 includes a transmission, a final reduction gear, and a differential which are not shown. The crankshaft 270 of the electric actuator 200 is connected to an input shaft of the power transmission 2. The drive shafts 3a and 3b are connected to the left and right output shafts of the power transmission 2, respectively. A wheel W is attached to a distal end of each of the drive shafts 3a and 3b. Power output from the electric actuator 200 is transmitted to the drive shafts 3a and 3b via the transmission, the final reduction gear and the differential of the power transmission 2 to rotationally drive the wheels W attached to the distal ends of the drive shafts 3a and 3b.

The electric actuators according to the embodiments of the present invention can be used in place of various prime movers that output rotary motion (e.g., engines, electric motors, hydraulic motors, air motors, steam turbines, etc.).

The exemplary application shown in FIG. 25 is an example of the electric actuators according to the embodiments of the present invention applied to a four-wheeled electric car, but the electric actuators according to the embodiments of the present invention can be used in various types of cars such as two-wheeled cars, three-wheeled cars, cars with six or more wheels such as trucks, buses, and tractors. Furthermore, the electric actuators according to the embodiments of the present invention can be used not only for electric cart but also for hybrid cars.

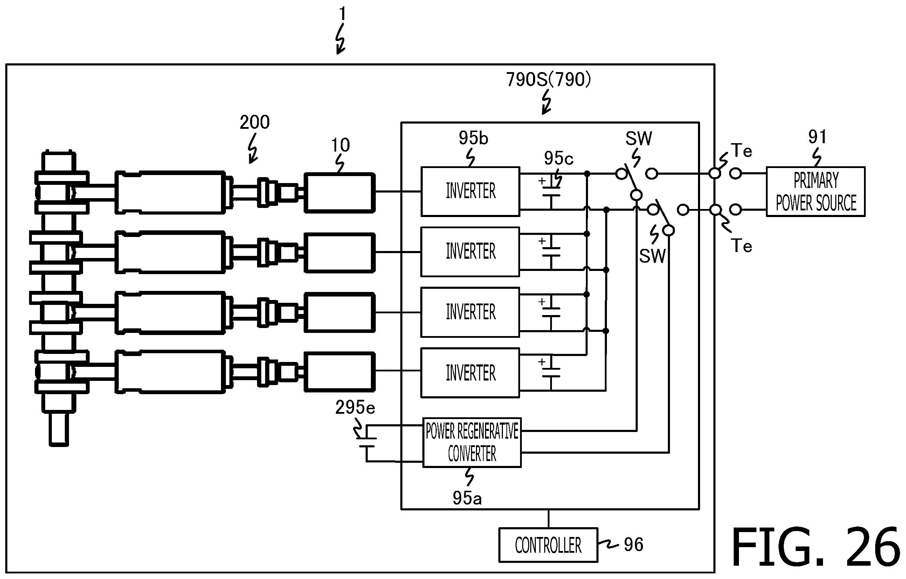

FIG. 26 is a block diagram showing a schematic configuration of an electric power feeding system 790S (electric drive system 790) of an electric car 1 according to a ninth embodiment of the present invention. The electric power feeding system 790S constitutes the electric drive system 790 together with a plurality of electric actuators 200 (specifically, a plurality of motors 10) installed in the electric car 1.

The electric power feeding system 790S shown in FIG. 26 includes four inverters 95b, four capacitors 95c, two changeover switches SW, the power regenerative converter 95a, and the controller 96.

The controller 96, upon detecting that the primary power source 91 is connected to external terminals Te during charging of the battery 295e installed in the electric car 1, controls contact points of respective changeover switches SW so that the power regenerative converter 95a is electrically connected to the primary power source 91 (external power source) via the external terminals Te, and also controls operation of the power regenerative converter 95a so that electric power is supplied from the primary power source 91 to the battery 295e.

While the electric car 1 is traveling (while the drive shafts 3a and 3b shown in FIG. 25 are rotating), the controller 96 controls the contact points of respective changeover switches SW so that the power regenerative converter 95a is electrically connected to respective inverters 95b via respective capacitors 95c, and also controls operations of the power regenerative converter 95a and respective inverters 95b so that electric power exchange between the battery 295e and respective motors 10 is repeatedly performed, that is, so that the powering operation and the regenerative operation are alternately repeated.

During the powering operation, each inverter 95b converts direct current electric power accumulated in the capacitors 95c and the battery 295e into alternating current electric power and supplies the alternating current electric power to each motor 10 to drive the motors 10. During the regenerative operation, each inverter 95b converts regenerative alternating current electric power from the motors 10 into direct current electric power and accumulates a part or all of the direct current electric power in the capacitors 95c. Among the regenerative electric power, surplus electric power that has not been accumulated in the capacitors 95c is supplied to the battery 295e via the changeover switches SW and the power regenerative converter 95a to charge the battery 295e. That is, each inverter 95b supplies, to the primary power source 91, surplus electric power, among the regenerative electric power regenerated to the capacitors 95c, that overflows from the capacitors 95c. In other words, each inverter 95b supplies to the battery 295e surplus electric power that depends on the electric power consumed during acceleration of the motors 10 and the regenerative electric power. Further stated in other words, when the motors 10 repeatedly performs forward and reverse rotations, each inverter 95b outputs to the battery 295e surplus electric power, among the regenerative electric power from the motors 10, that has not been consumed during acceleration of the motors 10.

For example, a case where, among the four motors 10 shown in FIG. 26, any two motors 10 are the first motors, and the remaining two motors 10 are the second motors is assumed. That is, it is assumed that the two motors 10 included in the first motors perform the same movement in powering operation sections (for example, section A or section C shown in FIG. 7A) and in regenerative operation sections (for example, section B or section D shown in FIG. 7A), respectively. Similarly, it is assumed that the two motors 10 included in the second motors perform the same movement in the powering operation sections and the regenerative operation sections, respectively. Since the two capacitors 95c connected to the first motors and the two capacitors 95c connected to the second motors are connected in parallel, the four capacitors 95c can be regarded as a single capacitor 95c. Accordingly, when distinction among the four capacitors 95c is unnecessary, they will be collectively referred to as one capacitor 95c. Additionally, it is assumed that the first motors and the second motors are driven such that, when the first motors are in the powering operation section, the second motors are in the regenerative operation section, and when the second motors are in the powering operation section, the first motors are in the regenerative operation section.

At startup of the electric car 1 (i.e., beginning of travel), electric power is first supplied from the battery 295e to the first motors via the power regenerative converter 95a, and the first motors are accelerated during forward rotation (powering operation at the beginning of travel). Thereafter, the first motors decelerate during forward rotation, and electric power is regenerated from the first motors to the capacitors 95c (regenerative operation section of the first motors). During this regenerative operation section of the first motors, electric power is simultaneously supplied via the capacitors 95c to the second motors, and the second motors are accelerated during forward rotation (powering operation section of the second motors). Subsequently, the second motors decelerate during forward rotation, and electric power is regenerated from the second motors to the capacitors 95c (regenerative operation section of the second motors). During this regenerative operation section of the second motors, electric power is simultaneously supplied from the capacitors 95c to the first motors, and the first motors are accelerated during reverse rotation (powering operation section of the first motors). Subsequently, the first motors decelerate during reverse rotation, and electric power is regenerated from the first motors to the capacitors 95c (regenerative operation section of the first motors). During this regenerative operation section of the first motors, electric power is simultaneously supplied via the capacitors 95c to the second motors, and the second motors are accelerated during reverse rotation (powering operation section of the second motors). Then, the second motors decelerate during reverse rotation, and electric power is regenerated from the second motors to the capacitors 95c (regenerative operation section of the second motors). During this regenerative operation section of the second motors, electric power is simultaneously supplied via the capacitors 95c to the first motors, and the first motors are accelerated during forward rotation (powering operation section of the first motors). Thereafter, acceleration and deceleration are repeatedly performed during forward and reverse rotations of the first and second motors in the manner described above. That is, after electric power is supplied from the battery 295e to the first motors at the startup of the electric car 1, power exchange between the first and second motors is repeatedly performed.

If total of the electric power output from the motors 10 performing regeneration and the electric power accumulated in the capacitors 95c is smaller than electric power required to drive the motors 10 during powering operation, the shortage is supplied from the battery 295e to the motors 10 that are performing the powering operation via the power regenerative converter 95a. Conversely, if the total of the electric power output from the motors 10 performing regeneration and the electric power accumulated in the capacitors 95c is greater than the power required to drive the motors 10 during powering operation, the surplus is supplied from the capacitors 95c to the battery 295e via the power regenerative converter 95a.

As described above, in the electric car 1 shown in FIG. 26, electric power exchange is performed among the four motors 10. Therefore, the electric power to be supplied from the battery 295e to the four motors 10 can be reduced, and system efficiency of the electric car 1 can be improved.

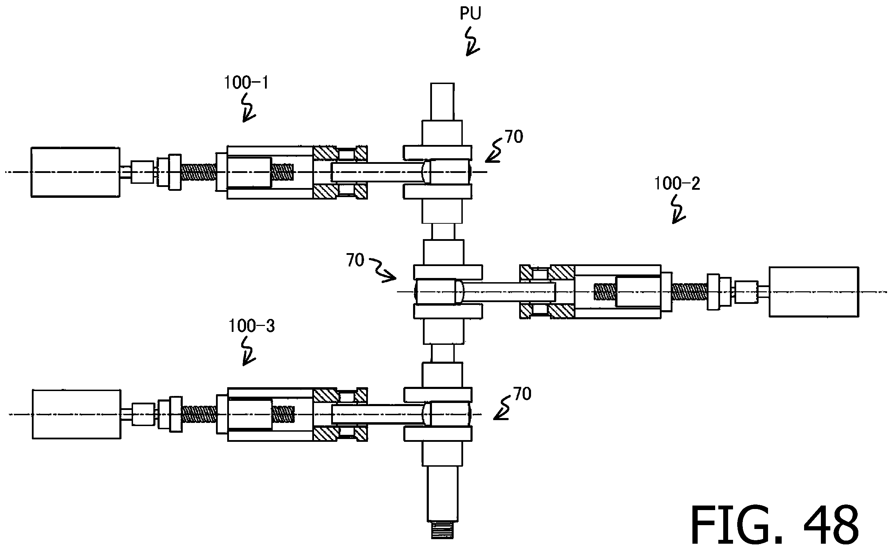

The number of motors constituting the first and second motors is not limited to two. For example, the electric actuator 201 shown in FIG. 18 and the electric actuator 400 shown in FIG. 21 are examples in which the first motor and the second motor are each constituted by a single motor. A power unit PU shown in FIG. 46 and a power unit PU shown in FIG. 48 are examples in which the first motor is constituted by two motors and the second motor is constituted by one motor. As the number of motors 10 increases, fluctuation in the electric power accumulated in the capacitors 95c can be suppressed, thereby further improving system efficiency.

The electric actuators according to the embodiments of the present invention can be used not only as prime movers for cars but also as prime movers for railroad vehicles.

### <Tenth Embodiment>

A tenth embodiment described next is an example of the application of the present invention to a railroad system.

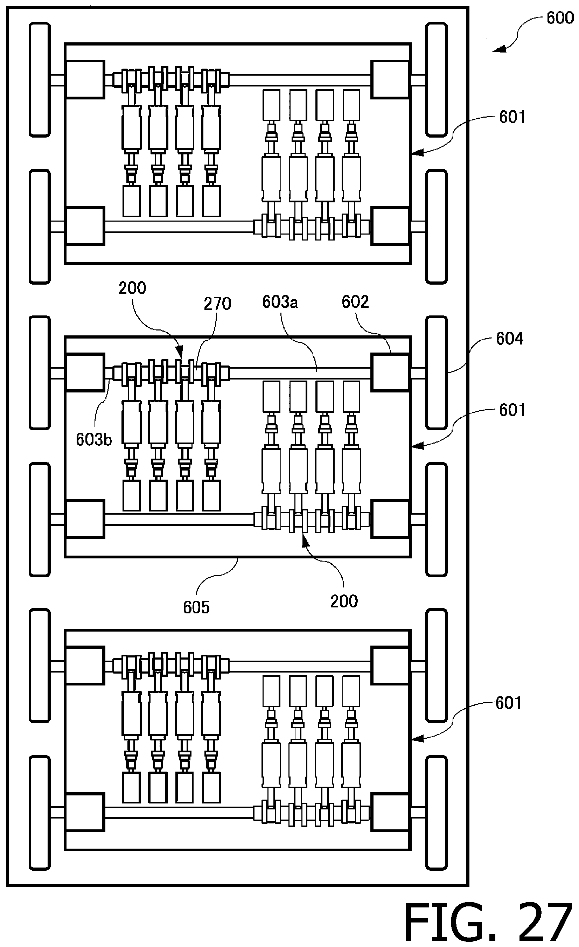

FIG. 27 is a diagram showing a schematic configuration of a drive mechanism of a railroad car 600 according to the tenth embodiment of the present invention. The railroad car 600 includes a plurality of (in the example shown in FIG. 27, three) bogies 601. The bogie 601 is a dynamic bogie including the electric actuator 200 according to the fourth embodiment of the present invention as a drive device.

The bogie 601 includes two electric actuators 200, two pairs of axles 603 (axles 603a and axles 603b), two pairs of bearings 602, two pairs of axle boxes (not shown), two pairs of axle box support devices (not shown), and two pairs of wheels 604. One end of the axle 603a and one end of the axle 603b are connected to both ends of the crankshaft 270 of electric actuator 200. The wheels 604 are attached to the other ends of the axles 603a and 603b.

The bearings 602 are attached to respective axle boxes, and the axle boxes are attached to the bogie frame 605 via respective axle box support devices. The bearings 602 and the axle boxes are buffer-supported with respect to the bogie frame 605 (frame) by the axle box support devices. The axles 603a and 603b are rotatably supported by respective bearings 602.

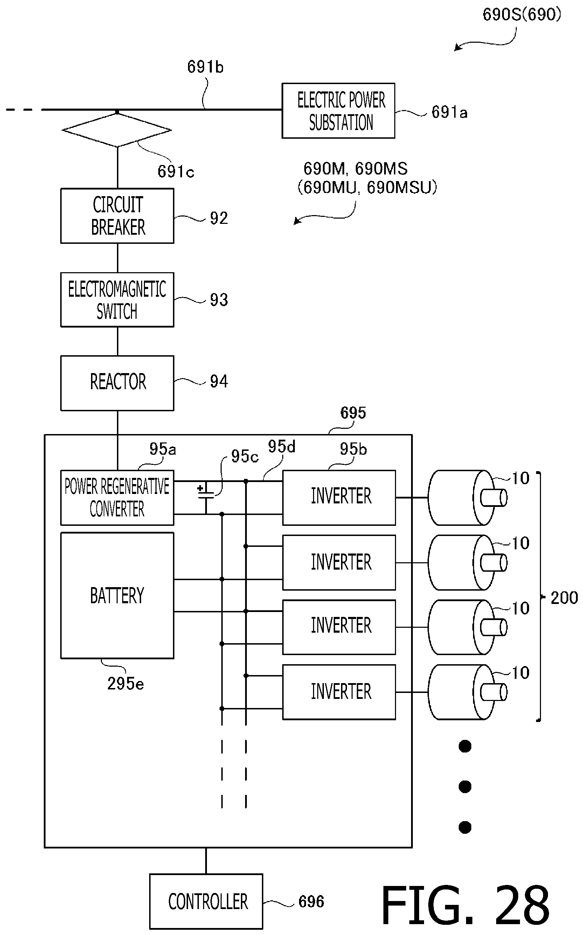

FIG. 28 is a block diagram showing a schematic configuration of an electric power feeding system 690S (electric drive system 690) of the railroad car 600 according to the tenth embodiment of the present invention. The electric power feeding system 690S, together with a plurality of electric actuators 200 (specifically, a plurality of motors 10) installed in the railroad car 600, constitutes the electric drive system 690.

The railroad car 600 is a dynamic car that collects electric power using an overhead line electric power collection system and includes, as an electric power collector, a pantograph 692c that contacts an overhead line 691b which is a trolley line (contact wire). The overhead line 691b is supplied with system electric power (e.g., three-phase AC) from a power substation 691a.

Of the electric drive system 690 (electric power feeding system 690S), a mobile drive system 690M (mobile electric power feeding system 690MS) installed in the railroad car 600 consists of one or more mobile drive units 690MU (mobile electric power feeding system 690MSU) unitized for each corresponding bogie 601. The mobile drive unit 690MU (mobile electric power feeding system 690MSU) may be configured not in units of bogies 601, but in units of railroad cars 600, or in units of trains with multiple railroad cars 600 connected.

According to the electric drive system 690 according to the tenth embodiment of the present invention, the same effect as that of the electric drive system 290 according to the second embodiment of the present invention is obtained. That is, since regenerative electric power is efficiently used to drive the motor 10, it is possible to drive the railroad car 600 (electric actuator 200) with low electric power consumption.

In the present embodiment, the overhead line electric power collection system using pantograph 692c as an electric power collector is employed, but other types of electric power collectors (e.g., view gels, trolley poles, etc.) or other types of electric power collection systems (e.g., third rail system in which electric power collecting shoes contact the electric power feeding rail [third rail] to collect electric power) may be used.

The railroad car 600 of the present embodiment is a bogie type railroad car that uses the bogies 601 as a traveling device and the mobile drive unit 690MU is mounted on the bogie 601, but the present invention is not limited to this configuration. For example, the traveling device and the mobile drive unit 690MU may be directly installed in the car body.

In the present embodiment, the mobile drive unit 690MU (specifically, a servo amplifier 695) of each bogie 601 includes a battery 295e, but the battery 295e may be shared by the mobile drive units 690MU of the plurality of bogies 601. In this case, for example, the battery 295e may be provided only in the servo amplifier 695 of one (or some) of the plurality of bogies 601, and the direct current bus bars 95d of said plurality of bogies 601 may be connected to each other. The battery 295e may also be disposed outside of the servo amplifier 695 (e.g., on the car body) and connected to the direct current bus bars 95d of said plurality of bogies 601.

In the present embodiment, the configuration in which the axles 603a and 603b are directly connected to both ends of the crankshaft 270 of the electric actuator 200 is employed. However, the present invention is not limited to this configuration. For example, the electric actuator 200 and an undivided axle 603 may be connected via a power transmission device such as a gear device.

In the present embodiment, a shaft box support system which uses a shaft box and a shaft box support device is employed. However, the present invention is not limited to this configuration.

### <Eleventh Embodiment>

A vibration test device according to an embodiment includes an electric actuator, and a controller that controls the electric actuator. The electric actuator includes a vibration table to which an object to be oscillated is to be attached, an electric motor, and a drive device that drives the electric motor using electric power accumulated in a capacitor and oscillates the vibration table in a predetermined direction. The controller controls the electric actuator so that the vibration table is oscillated with a predetermined amplitude and frequency. The vibration test device regenerates regenerative electric power generated in the electric motor when the vibration table is oscillated with the predetermined amplitude and frequency to the capacitor, and supplies surplus electric power among the regenerative electric power to a power source. Specific configurations of the vibration test device according to an embodiment will be described below, but the present invention is not limited to these specific configurations.

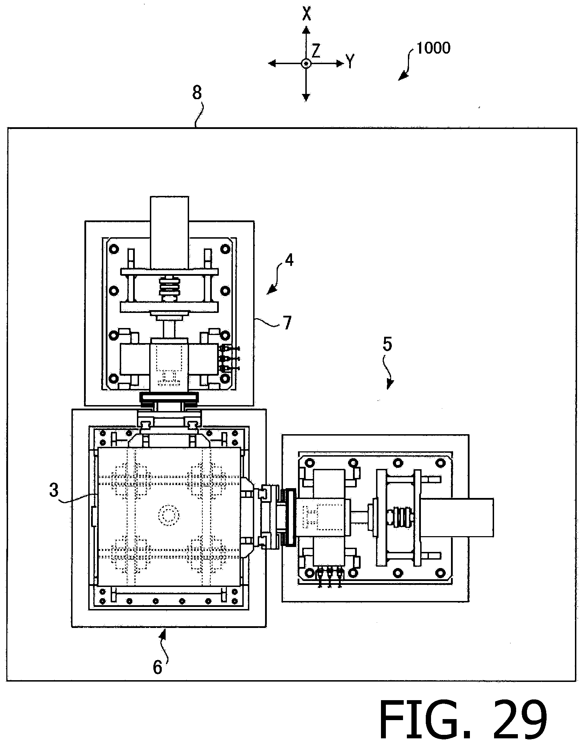

FIG. 29 is a plan view of a vibration test device (oscillating device) 1000 according to an eleventh embodiment of the present invention. The vibration test device 1000 according to the present embodiment includes a plurality of electric motors as prime movers which is a power-saving electric motor system capable of operating with lower power consumption than conventional systems, and therefore is a power-saving testing system including the power-saving electric motor system. In the vibration test device 1000, a workpiece being a test target of vibration test is fixed on a vibration table 3, and the vibration table 3 and the workpiece thereon can be oscillated in three mutually orthogonal axial directions using first, second, and third actuators 4, 5, and 6. The workpiece is the object to be oscillated, and the vibration table 3 is an example of a vibration table to which the object to be oscillated is to be attached. In the following description, the direction in which the first actuator 4 oscillates the vibration table 3 (the vertical direction in FIG. 1) is defined as an X-axis direction, the direction in which the second actuator 5 oscillates the vibration table 3 (the lateral direction in FIG. 1) is defined as a Y-axis direction, and the direction in which the third actuator 6 oscillates the vibration table 3, that is, a vertical direction (a direction perpendicular to the plane of FIG. 1), is defined as a Z-axis direction. The X-axis direction and the Y-axis direction are horizontal directions orthogonal to each other.

The first actuator 4, the second actuator 5, and the third actuator 6 are electric actuators that oscillate the vibration table 3 in the predetermined directions, respectively, and each includes a servo motor. The servo motor is, for example, an AC servo motor of an ultra-low inertia and high-output type, and which is an electric motor capable of switching rotation direction between forward and reverse rotations. By using such an ultra-low inertia and high-output servo motor, repeated reciprocating drive (forward and reverse rotational drive) at a high frequency of 100 Hz or higher is made possible.

The first, second, and third actuators 4, 5, and 6 each have a configuration in which a motor, power transmission components, and the like are mounted on a base plate 7. The base plate 7 is fixed to a device base 8 by bolts that are not shown.

### <Twelfth Embodiment>

Next, an example of the application of the present invention to a tire test device will be described. A tire test device according to a twelfth embodiment of the present invention described below is a testing device capable of performing wear tests, endurance tests, traveling stability tests and the like on tires. A tire test device according to an embodiment includes an electric actuator, and a controller that controls the electric actuator. The electric actuator includes an electric motor having a rotary shaft to be coupled to a central axis of a tire, and a drive device that drives the electric motor using electric power accumulated in a capacitor. The controller controls the electric actuator to cause the electric motor to generate a fluctuating torque. In the present tire test device, regenerative electric power generated in the electric motor as rotational speed of the tire decreases in response to the fluctuating torque of the electric motor is regenerated to the capacitor, and surplus electric power among the regenerative electric power is supplied to a power source. Specific configurations of the tire test device according to an embodiment will be described below, but the present invention is not limited to these specific configurations.

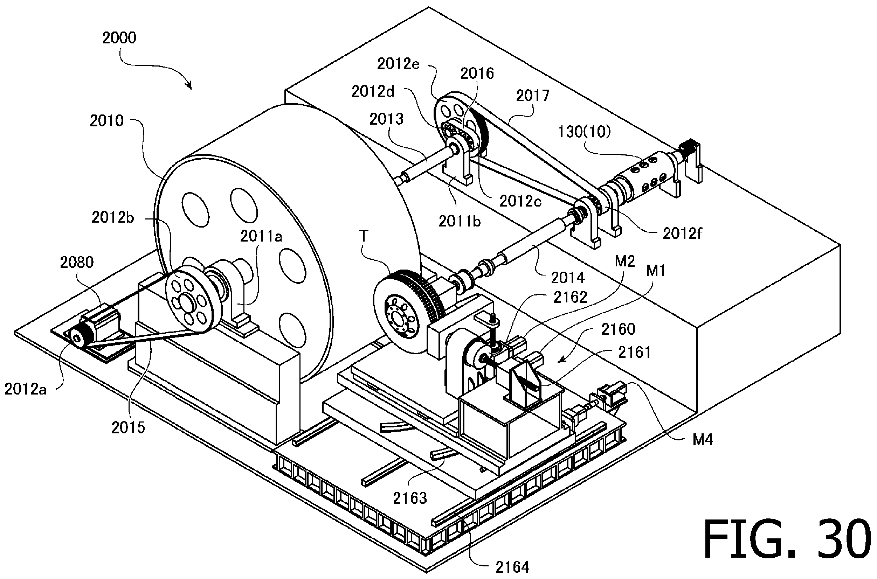

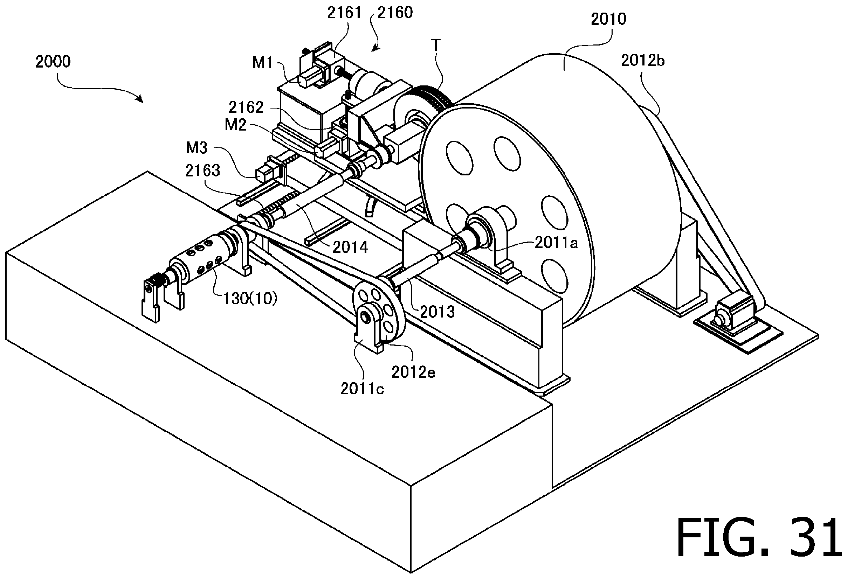

FIGS. 30 and 31 are perspective views of a tire test device 2000 according to the eleventh embodiment of the present invention, viewed from different directions. The tire test device 2000 of the present embodiment includes a rotating drum 2010 with a simulated road surface formed on its outer circumference, an alignment adjustment mechanism 2160 that holds a tire T rotatably with the tire T grounded in a predetermined posture on the simulated road surface, a torque generator 130 (slip rate controller) that generates torque to be applied to the tire T, and an inverter motor 2080 that rotationally drives the rotating drum 2010 and a casing of the torque generator 130.

The rotating drum 2010 is rotatably supported by a pair of bearings 2011a. A pulley 2012a is attached to an output shaft of the inverter motor 2080, and a pulley 2012b is attached to one of shafts of the rotating drum 2010. The pulley 2012a and the pulley 2012b are connected by a drive belt 2015 (e.g., toothed belt). The other of the shafts of the rotating drum 2010 has a pulley 2012c attached via a relay shaft 2013. The relay shaft 2013 is rotatably supported by a bearing 2011b near one end portion where the pulley is attached. The pulley 2012c is connected to a pulley 2012d by a drive belt 2016. The pulley 2012d is coaxially fixed to a pulley 2012e and is rotatably supported by a bearing 2011c (FIG. 31) together with the pulley 2012e. The pulley 2012e is also connected to a shaft part 131a of a later-described casing 131 of the torque generator 130 by a drive belt 2017.

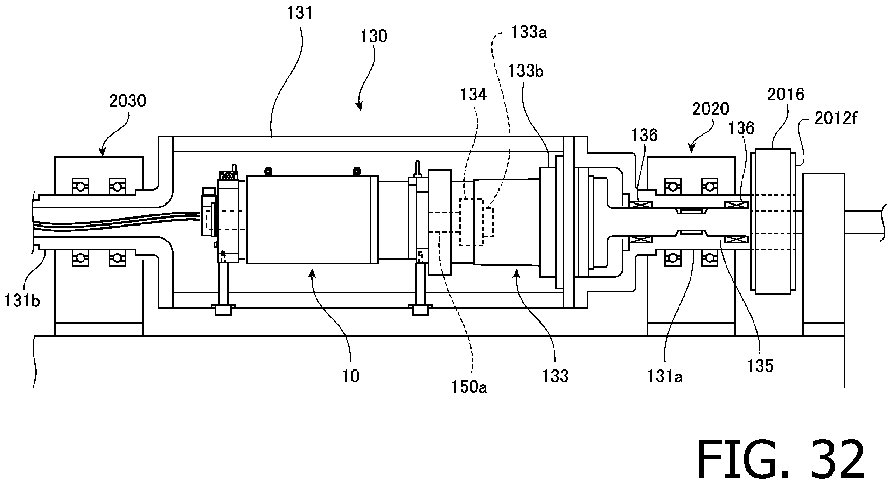

FIG. 32 is a diagram showing an internal structure of the torque generator 130. The torque generator 130 includes a casing 131, and the motor 10 and a reduction gear 133 fixed inside the casing 131. In the present embodiment, the motor 10 of the same configuration as in the first embodiment is used. Cylindrical shaft parts 131a and 131b are formed at both ends of the casing 131 in an axial direction. The casing 131 is rotatably supported by bearing sections 2020 and 2030 at the shaft parts 131a and 131b. A pulley 2012f is attached to an outer circumference of the shaft part 131a at one end (right end in FIG. 32).

The reduction gear 133 has an input shaft 133a and an output shaft 133b. Rotary motion input to the input shaft 133a is reduced and output to the output shaft 133b. The input shaft 133a of the reduction gear 133 is connected to a drive shaft 150a of the motor 10 by a coupling 134. The output shaft 133b of the reduction gear 133 is connected to a coupling shaft 135. It is noted that the reduction gear 133 is optionally provided in the torque generator 130. The coupling shaft 135 may be directly connected to the drive shaft 150a of the motor 10 without providing the reduction gear 133 in the torque generator 130.

The coupling shaft 135 is passed through a hollow portion of the cylindrical shaft part 131a of the casing 131 and is rotatably supported by a pair of bearings 136 provided on an inner circumference of the shaft part 131a. A distal end of the coupling shaft 135 protrudes from a distal end of the shaft part 131a. The coupling shaft 135 protruding from the shaft part 131a is connected to a spindle of the alignment adjustment mechanism 2160 via a constant velocity joint 2014 (FIG. 30). A wheel on which a tire T is mounted is attached to the spindle of the alignment adjustment mechanism 2160.

As a result, when the inverter motor 2080 is driven, the rotating drum 2010 rotates and the casing 131 of the torque generator 130 connected to the inverter motor 2080 via the rotating drum 2010 rotates. When the torque generator 130 is not activated, the rotating drum 2010 and the tire T rotate in opposite directions so that their peripheral speeds at the contact area are the same. By activating the torque generator 130, dynamic or static driving and braking forces can be applied to the tire T.

In the present embodiment, power output from the inverter motor 2080 is again transmitted to the rotating drum 2010 via the rotating drum 2010, the relay shaft 2013, the torque generator 130, the constant velocity joint 2014, the spindle of the alignment adjustment mechanism 2160, and the tire T. That is, the power transmission path consisting of the rotating drum 2010, the relay shaft 2013, the torque generator 130, the constant velocity joint 2014, the spindle of the alignment adjustment mechanism 2160, and the tire T constitutes a power circulation system. Therefore, the power of the inverter motor 2080 is used efficiently, thereby enabling operation with less power consumption.

The alignment adjustment mechanism 2160 of the present embodiment is a mechanism that rotatably supports the tire T, which is a test specimen, in a state in which the tire T is mounted on a wheel, presses a tread portion of the tire T against the simulated road surface of the rotating drum 2010, and adjusts orientation of the tire T relative to the simulated road surface and tire load (contact pressure) to set conditions. The alignment adjustment mechanism 2160 includes a tire load adjustment section 2161 that adjusts the tire load by moving a position of a rotation axis of the tire T in a radial direction of the rotating drum 2010, a slip angle adjustment section 2162 that adjusts a slip angle of the tire T relative to the simulated road surface by tilting the rotation axis of the tire T around a perpendicular line of the simulated road surface, a camber angle adjustment section 2163 that adjusts a camber angle by tilting the rotation axis of the tire T relative to a rotation axis of the rotating drum 2010, and a traverse device 2164 that moves the tire T in the direction of the rotation axis. The tire load adjustment section 2161, the slip angle adjustment section 2162, the camber angle adjustment section 2163, and the traverse device 2164 include servomotors M1, M2, M3, and M4, respectively. The servomotors M1, M2, M3 and M4 are, for example, AC servomotors.

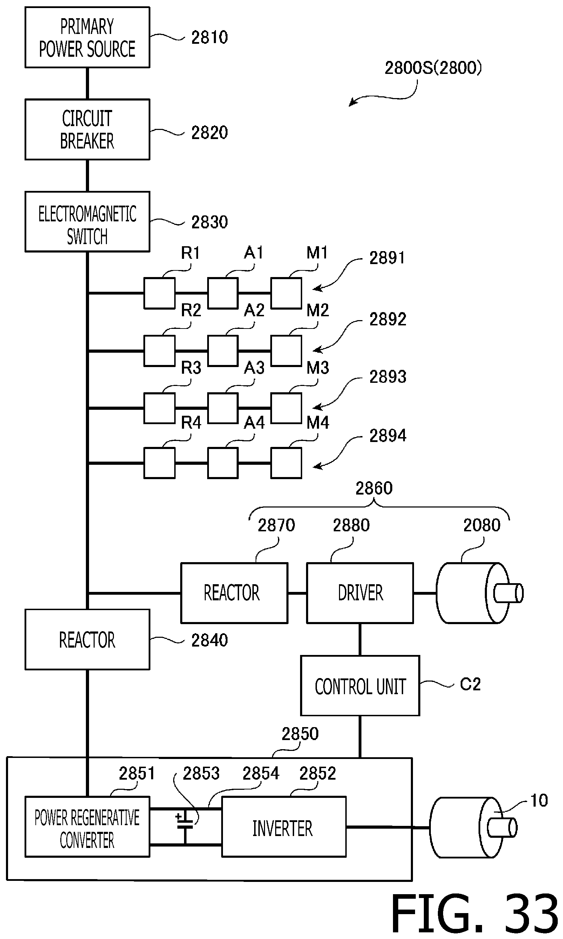

FIG. 33 is a block diagram showing a schematic configuration of an electric power feeding system 2800S (electric drive system 2800) of the second embodiment of the present invention, which provides electric power to the motor 10 and the inverter motor 2080.

The electric power feeding system 2800S of the present embodiment differs from the electric power feeding system 90S of the first embodiment in that the electric power feeding system 2800S has an electric power feeding structure 2860 (a reactor 2870 and a driver 2880) that supplies electric power to the inverter motor 2080 branched from a rear stage of an electromagnetic switch 2830, and electric power feeding structures 2891 (a reactor R1 and a servo amplifier A1), 2892 (a reactor R2 and a servo amplifier A2), 2893 (a reactor R3 and a servo amplifier A3), and 2894 (a reactor R4 and a servo amplifier A4) that supply electric power to the servomotors M1, M2, M3, M4 of the alignment adjustment mechanism 2160, respectively. The driver 2880 is a device that generates driving electric power for the inverter motor 2080 and includes an inverter circuit not shown. The driver 2880 and the servo amplifiers A1 to A4 are each communicatively connected to a control unit C2 and operate according to control by the control unit C2. The servo amplifiers A1, A2, A3, and A4 have the same configuration as a servo amplifier 2850.

In a test using the tire test device 2000 of the present embodiment, the tire T is given a rotary motion that is a composite of the rotation speed output by the inverter motor 2080 and the torque generated by the torque generator 130 (specifically, the motor 10). In one example of the test using the tire test device 2000, the inverter motor 2080 is controlled to output a constant rotation speed and the motor 10 is controlled to output fluctuating torque (e.g., random oscillating torque). Acceleration and deceleration of the motor 10 are repeated, and the supply of driving electric power from the servo amplifier 2850 to the motor 10 and supply of regenerative electric power from the motor 10 to the servo amplifier 2850 are repeated.

A part or all of the regenerative electric power generated during the deceleration of the motor 10 is temporarily accumulated in a capacitor 2853 and is then used to accelerate the motor 10 next time. Surplus electric power among the regenerative electric power that has not been accumulated in the capacitor 2853 is supplied to the electric power feeding structures 2860, 2891, 2892, 2893, 2894 via a power regenerative converter 2851 and a reactor 2840 and used to drive the inverter motor 2080 and servomotors M1, M2, M3, M4. Therefore, most of the regenerative electric power generated by the motor 10 is reused to drive the motors 10, M1 to M4, and the inverter motor 2080, and electric power consumption from a primary power source 2810 used to drive the motor 10 is slightly reduced. Regenerative electric power generated by the inverter motor 2080 and the servomotors M1, M2, M3, and M4 is also reused to drive the other motors (i.e., the motors 10, the servomotors M1, M2, M3 and M4, and the inverter motor 2080), further reducing the electric power consumption from the primary power source 2810.

By setting the tire T to the tire test device 2000 having the configuration described above and driving the inverter motor 2080 for rotation drive, the tire T and the rotating drum 2010 rotate at the same peripheral speed. In this state, the motor 10 of the torque generator 130 is driven to apply driving force or braking force to the tire T, thereby enabling tire wear tests, endurance tests, traveling stability tests and the like that simulate actual driving conditions.

In the present embodiment, the inverter motor 2080 is used to rotate the tire T and the rotating drum 2010 at the same peripheral speed. However, in place of the driver 2880 and the inverter motor 2080 in FIG. 33, the electric actuator 100 according to the first embodiment including the motor 10 and the drive unit 100d may be used. That is, instead of attaching the pulley 2012a directly to the output shaft of the motor 10, the drive unit 100d that converts the reciprocating rotation of the motor 10 into unidirectional rotation may be provided between the motor 10 and the pulley 2012a. This allows regenerative energy to be used for the operation of rotating the tire T and the rotating drum 2010 at the same peripheral speed.

### <Thirteenth Embodiment>

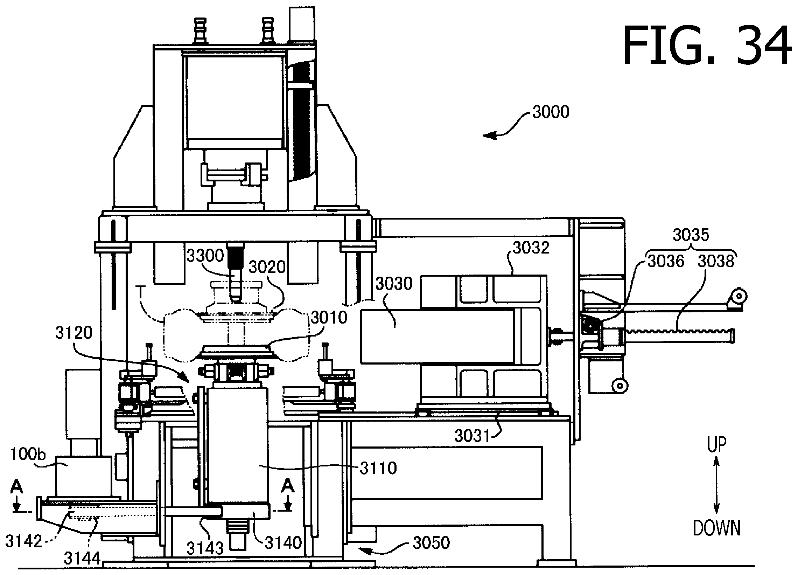

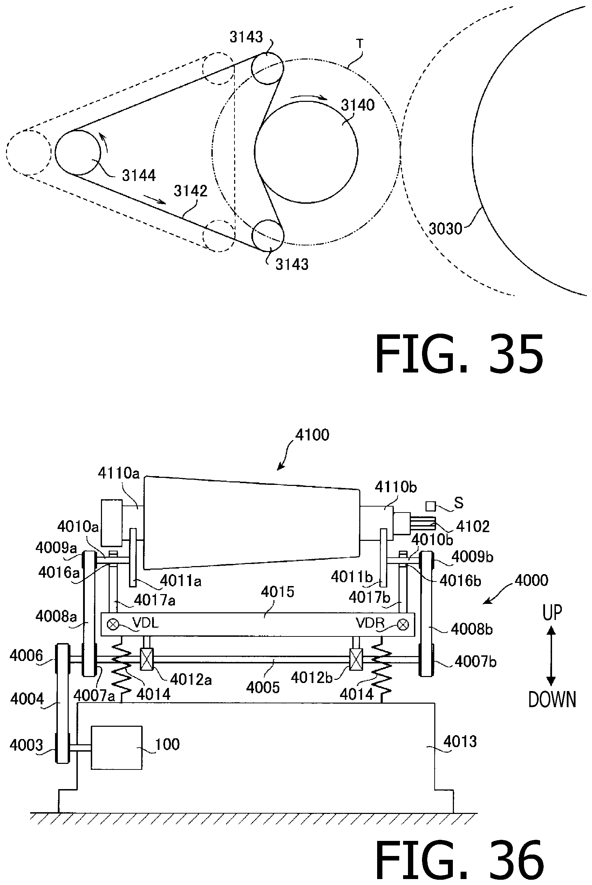

A uniformity test device according to an embodiment and a dynamic balance multi-test device according to an embodiment will be described below. The uniformity test device includes a rotary drum that comes into contact with a tire, an electric actuator including an electric motor and a drive device that drives the electric motor using electric power accumulated in a capacitor, a motion converter that converts forward and reverse rotary motions output by the electric motor into unidirectional rotary motion and transmits the unidirectional rotary motion to the rotary drum, and a controller that controls the electric actuator so that the rotary drum rotates at a predetermined speed by alternately rotating the electric motor in the forward and reverse directions. The uniformity test device regenerates regenerative electric power generated in the electric motor as the rotary drum rotates at the predetermined speed to the capacitor, and supplies surplus electric power among the regenerative electric power to a power source. The dynamic balance multi-test device includes a spindle to which a tire is to be attached, an electric actuator including an electric motor and a drive device that drives the electric motor using electric power accumulated in a capacitor, a motion converter that converts forward and reverse rotary motions output from the electric motor into unidirectional rotary motion, a transmission mechanism that transmits the unidirectional rotary motion output from the motion converter to the spindle, and a controller that controls the electric actuator so that the spindle rotates at a predetermined speed by alternately rotating the electric motor in the forward and reverse directions. The dynamic balance multi-test device regenerates regenerative electric power generated in the electric motor as the spindle rotates at the predetermined speed to the capacitor, and supplies surplus electric power among the regenerative electric power to a power source. A multi-test device according to a thirteenth embodiment of the present invention described below is a test device capable of performing uniformity and dynamic balance tests of tires. FIG. 34 is a side view showing a basic configuration of a uniformity and dynamic balance multi-test device 3000 (hereinafter referred to as the multi-test device 3000). FIG. 35 is a diagram schematically showing a method of rotationally driving a spindle 3120 of the multi-test device 3000.

As shown in FIG. 34, the multi-test device 3000 is configured to hold the tire T between a lower rim 3010 and an upper rim 3020 at the top and bottom. More precisely, the multi-test device 3000 nips and holds the tire T between the lower rim 3010 and the upper rim 3020 by inserting and securing a locking shaft 3300, to which the upper rim 3020 is fixed at the upper end, to the spindle 3120.

In the uniformity test, a rotating drum 3030 provided on a side of the spindle 3120 is used. The rotating drum 3030 is installed in a movable housing 3032 that is slidable on rails 3031 extending in approaching and separating directions with respect to the tire T, and moves in the approaching and separating directions with respect to the tire T by a rack and pinion mechanism 3035 (pinion 3036 and rack 3038) driven by a motor not shown. The rotating drum 3030 can be rotated at any desired rotation speed by an electric actuator (hereinafter referred to as "electric actuator 100a") not shown. A configuration of the electric actuator 100a is the same as that of the electric actuator 100 described above in the first embodiment.

When conducting the uniformity test, the rotating drum 3030 is brought into contact with the tire T by the rack and pinion mechanism 3035, and the rotating drum 3030 is then pressed against the tire T with a force of several hundred kgf or more. The rotating drum 3030 is then rotated in this state (thus the tire T in contact with the rotating drum 3030 also rotates along with the rotating drum 3030), and variation in force generated on the rotating tire is measured from load fluctuation at this time with a triaxial piezoelectric element installed on a side surface of a spindle housing 3110.

In the present embodiment, the rotating drum 3030 is rotated using the electric actuator 100a. This allows the 3030 rotating drum to rotate while utilizing regenerative energy to perform the uniformity test.

On the other hand, the dynamic balance test is a test that measures eccentricity of the tire by rotating the tire T together with the spindle 3120 in a state where the rotating drum 3030 is separated from the tire T, and measuring the eccentricity of the tire from an oscillating force generated by imbalance of the tire T at that time.

At a lower end of spindle 3120, a pulley 3140 for rotationally driving the spindle 3120 during dynamic balance tests is attached. An electric actuator 100b, which can move horizontally toward the spindle 3120 by means of a rack and pinion mechanism not shown, is installed on a base 3050 to which the spindle 3120 is fixed, and the spindle 3120 is rotated by the electric actuator 100b. A configuration of the electric actuator 100b is the same as the electric actuator 100 described above in the first embodiment. This allows the spindle 3120 to be rotated while utilizing regenerative energy to perform dynamic balance tests.

A drive pulley 3144 is attached to an output rotary shaft of the electric actuator 100b at the same height as the pulley 3140 of the spindle 3120. As shown in FIG. 35, a pair of driven pulleys 3143 are rotatably installed at the same height as the drive pulley 3144 and the pulley 3140 of the spindle 3120. The driven pulleys 3143 move back and forth together with the electric actuator 100b (the drive pulley 3144) by the above-mentioned not-shown rack and pinion mechanism. An endless belt 3142 is tacked across the drive pulley 3144 and the driven pulleys 3143, and the endless belt 3142 can be made to advance at a predetermined speed with the electric actuator 100b.

By driving the electric actuator 100b in the state where the endless belt 3142 is in contact with the pulley 3140 (a state shown with a solid line in FIG. 35) by the rack-and-pinion mechanism, the pulley 3140 rotates and the spindle 3120 rotates with the tire T held between the lower rim 3010 and the upper rim 3020. At this time, the excitation force is measured by the triaxial piezoelectric element installed on the side surface of the spindle housing 3110.

In the present embodiment, the electric actuator 100b can be used to rotate the spindle 3120 while using regenerative energy to perform dynamic balance tests.

That is, the multi-test device 3000 is provided with two electric actuators 100a and 100b that are identical to the electric actuator 100 of the first embodiment, with electric actuator 100a used to rotate the rotating drum 3030 and the electric actuator 100b used to rotate the spindle 3120. This allows tests to be conducted while utilizing regenerative energy for both uniformity and dynamic balance tests.

### <Fourteenth Embodiment>

A balance measurement device according to an embodiment includes an electric actuator including an electric motor and a drive device that drives the electric motor using electric power accumulated in a capacitor, a motion converter that converts forward and reverse rotary motions output from the electric motor into unidirectional rotary motion, a transmission mechanism that transmits the unidirectional rotary motion output from the motion converter to a test specimen, and a controller that controls the electric actuator so that the test specimen rotates at a predetermined speed by alternately rotating the electric motor in the forward and reverse directions. The balance measurement device regenerates regenerative electric power generated in the electric motor as the test specimen rotates at the predetermined speed to the capacitor, and supplies surplus electric power among the regenerative electric power to a power source. Specific configurations of the balance measurement device according to an embodiment will be described below, but the present invention is not limited to these specific configurations.

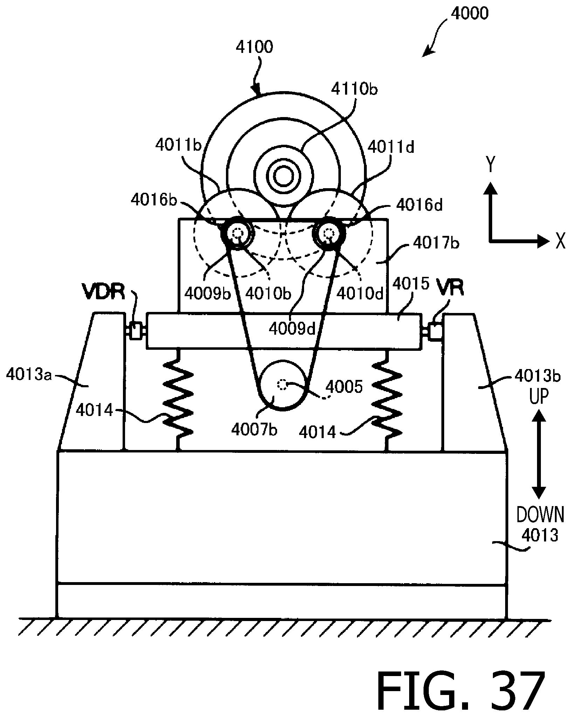

A balance measurement device 4000 according to a fourteenth embodiment of the present invention described below is a test device capable of measuring balance of a rotating body. FIGS. 36 and 37 are a front view and a side view, respectively, of the balance measurement device 4000 according to the embodiment of the present invention. In the following description, a vertical direction in FIG. 36 is defined as a Y-axis direction, and a direction perpendicular to both the vertical direction and a rotation axis direction of the rotating body is defined as an X-axis direction. The rotating body 4100 in the present embodiment is, for example, a crankshaft, and the balance measurement device 4000 is, for example, a device for measuring the balance of the crankshaft.

A device frame of the balance measurement device 4000 consists of a base 4013, a plurality of springs 4014 extending vertically upward from the base 4013, and a table 4015 supported by the springs 4014. Drive shaft bearings 4012a and 4012b are attached to a lower surface of the table 4015. A drive shaft 4005 is rotatably supported by the drive shaft bearings 4012a and 4012b. As shown in FIG. 37, a first side wall 4013a and a second side wall 4013b, which can be regarded as almost rigid, extend vertically upward from both ends of the base 4013 in the X-axis direction.

The electric actuator 100 according to the first embodiment is attached to the base 4013. A pulley 4003 is attached to a drive shaft of the electric actuator 100. On the other hand, a first pulley 4006 is attached to one end of the drive shaft 4005, and a first endless belt 4004 is tacked across this first pulley 4006 and the pulley 4003 attached to the drive shaft of the electric actuator 100. By driving the electric actuator 100, the drive shaft 4005 can be driven to rotate via the first endless belt 4004.

A first table side wall 4017a and the second table side wall 4017b that are parallel to each other are fixed vertically above a top surface of the table 4015. The first table side wall 4017a and the second table side wall 4017b are rigid bodies having extremely high rigidity compared to a spring constant of the springs 4014. Driven shaft bearings 4016a and 4016c are fixed to the first table side wall 4017a, and driven shaft bearings 4016b and 4016d are fixed to the second table side wall 4017b. Only the driven shaft bearings 4016a and 4016b are shown in FIG. 36, while the driven shaft bearings 4016c and 4016d are disposed on the far side of the driven shaft bearings 4016a and 4016b in FIG. 36, respectively. The driven shaft bearings 4016a, 4016b, 4016c, and 4016d rotatably support driven shafts 4010a, 4010b, 4010c, and 4010d (only 4010a and 4010b are shown in FIG. 36), respectively.

Pulleys 4009a, 4009b, 4009c, and 4009d are attached to one end of the driven shafts 4010a, 4010b, 4010c, and 4010d, respectively. Second pulleys 4007a and 4007b are attached to one end of the drive shaft 4005 adjacent to the first pulley 4006 and to the other end of drive shaft 4005. Across the second pulley 4007a, the pulley 4009a attached to the driven shaft 4010a and the pulley 4009c attached to the driven shaft 4010c, and across the second pulley 4007b, the pulley 4009b attached to the driven shaft 4010b and the pulley 4009d attached to the driven shaft 4010d, endless belts 4008a and 4008b are tacked, respectively. Therefore, when the drive shaft 4005 rotates, power is transmitted to the driven shafts 4010a and 4010c via the second endless belt 4008a, and as a result, the driven shafts 4010a and 4010c rotate. The power from the drive shaft 4005 is also transmitted to the driven shafts 4010b and 4010d via the second endless belt 4008b, and as a result, the driven shafts 4010b and 4010d also rotate.

Rollers 4011a, 4011b, 4011c, and 4011d are attached to the other ends of the driven shafts 4010a, 4010b, 4010c, and 4010d, respectively. One end 4110a of a rotary shaft of the rotating body 4100 is placed on the rollers 4011a and 4011c, and the other end 4110b of the rotary shaft of the rotating body 4100 is placed on the rollers 4011b and 4011d, respectively. The rotating body 4100 rotates in accordance with rotation of these rollers 4011a, 4011b, 4011c, and 4011d. That is, the rotating body 4100 can be rotated while utilizing regenerative energy by driving the electric actuator 100.

A keyway 4102 is formed at the other end 4110b of the rotating body 4100. A sensor S for detecting the keyway 4102 is further disposed on the balance measurement device 4000.

Furthermore, as shown in FIGS. 36 and 37, vibration pickups VDL and VDR are attached between the first side wall 4013a of the base 4013 and the table 4015. The rotating body 4100, which is a crankshaft with dynamic imbalance, vibrates as it rotates. In the balance measurement device of the present embodiment, the vibration of the rotating body 4100 (crankshaft) is transmitted to the table 4015 via the rollers 4011a, 4011b, 4011c and 4011d, first and second table side walls 4017a, 4017b, and the like. The vibration pickups VDL and VDR detect the vibration transmitted from the rotating body 4100 (crankshaft) to the table 4015. In other words, the vibration pickups VDL and VDR detect fluctuations in the load applied by the rotating body 4100 (crankshaft) to the rollers 4011a, 4011b, 4011c and 4011d.

The vibration pickups VDL and VDR are acceleration sensors capable of measuring acceleration in two components (in the X-axis and Y-axis directions) perpendicular to the rotary shaft of the rotating body 4100, respectively. The vibration pickup VDL is attached on the same XY plane as the first table side wall 4017a, and the vibration pickup VDR is attached on the same XY plane as the second table side wall 4017b.

Piezoelectric actuators VL and VR are attached between the second side wall 4013b of the base 4013 and the table 4015. The piezoelectric actuator VL is attached on the same XY plane as the first table side wall 4017a, and the piezoelectric actuator VR is attached on the same XY plane as the second table side wall 4017b. The piezoelectric actuators are members that can expand and contract according to the magnitude of the applied voltage to displace an object being in contact with the piezoelectric actuators, and thus the table 4015 can be freely vibrated by controlling signals to be input to the piezoelectric actuators VL and VR.

### <Fifteenth Embodiment>

A collision simulation test device according to an embodiment includes a mounting part to which a test specimen is to be attached, an electric actuator including an electric motor and a drive device that drives the electric motor using electric power accumulated in a capacitor, a motion converter that converts forward and reverse rotary motions output from the electric motor into unidirectional rotary motion, a transmission mechanism that converts the unidirectional rotary motion output from the motion converter into linear motion and transmits the linear motion to the mounting part, and a controller that controls the electric actuator so that a desired acceleration is applied to the mounting part by alternately rotating the electric motor in the forward and reverse directions. The collision simulation test device regenerates regenerative electric power generated in the electric motor when the desired acceleration is applied to the mounting part to the capacitor, and supplies surplus electric power among the regenerative electric power to a power source. Specific configurations of the collision simulation test device according to an embodiment will be described below, but the present invention is not limited to these specific configurations.

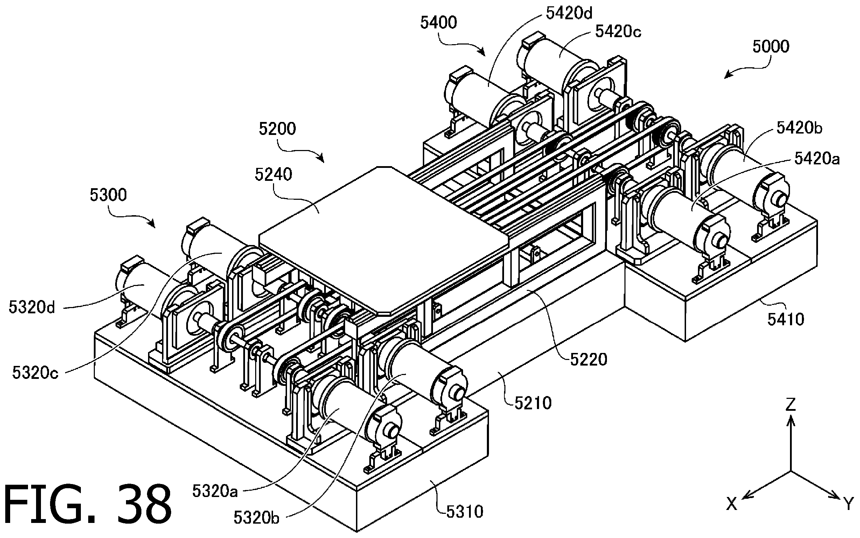

FIG. 38 is a perspective view of a collision simulation test device 5000 according to a fifteenth embodiment of the present invention. The collision simulation test device 5000 is a device that reproduces impacts that act on automobiles and the like (including railroad cars, aircraft, and ships), occupants, and equipment of the automobiles and the like, at the time of collision of the automobiles and the like. The collision simulation test device 5000 of the present embodiment can also be used as an impact test device for evaluating durability and reliability against impact by applying strong impact waves to products and parts.

The collision simulation test device 5000 includes a table 5240 that is used to resemble a frame of a vehicle of a car. A test piece, such as a seat with an occupant dummy on it or a high-voltage battery for an electric car, are to be attached on the table 5240. When the table 5240 is driven at a set acceleration (e.g., an acceleration equivalent to an impact that acts on a frame of a vehicle during a crash), the test piece attached to the table 5240 is subjected to an impact similar to that of an actual crash. Damage on the test piece at this time (or damage predicted from measurement results by acceleration sensors or other devices attached to the test piece) is used to evaluate safety of occupants.

The collision simulation test device 5000 of the present embodiment is configured to allow the table 5240 to be driven in only one horizontal direction. As shown in FIG. 38 with coordinate axes, a movable direction of the table 5240 is defined as an X-axis direction, a horizontal direction perpendicular to the X-axis direction is defined as a Y-axis direction, and the vertical direction is defined as the Z-axis direction. The X-axis positive direction is referred to as forward, the X-axis negative direction is referred to as backward, the Y-axis negative direction is referred to as right, and the Y-axis positive direction is referred to as left, based on a travelling direction of a vehicle being simulated. The X-axis direction in which the table 5240 is driven is referred to as a "drive direction." In a collision simulation test, a large acceleration is applied to the table 5240 in a direction opposite to the travelling direction of the vehicle (i.e., backward).

The collision simulation test device 5000 includes a test section 5200 that includes the table 5240, a front drive section 5300 and a rear drive section 5400 that drive the table 5240, four belt mechanisms 5100 (belt mechanisms 5100a, 5100b, 5100c and 5100d) that convert rotary motion generated by each of the drive sections 5300 and 5400 into translational motion in the X axis direction and transmit the motion to the table 5240, and a control system (not shown).

The test section 5200 is disposed at the central portion of the collision simulation test device 5000 in the X-axis direction, and the front drive section 5300 and the rear drive section 5400 are disposed adjacent to the front and rear of the test section 5200, respectively.

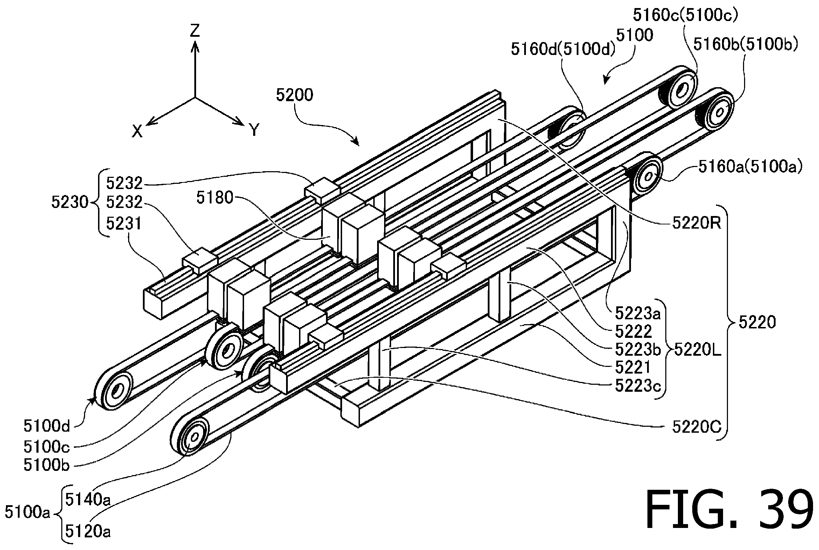

FIG. 39 is a perspective view showing a structure of the test section 5200 and the belt mechanism 5100. For convenience of explanation, the table 5240 and a base block 5210 (described later), which are components of the test section 5200, are omitted in FIG. 39.

In addition to the table 5240, the test section 5200 includes the base block 5210 (FIG. 35), a frame 5220 attached on the base block 5210, and a pair of linear guideways 5230 (hereinafter referred to as "linear guides 5230") attached on the frame 5220. The pair of linear guides 5230 supports the table 5240 to be movable only in the X-axis direction (drive direction).

As shown in FIG. 39, the frame 5220 has a pair of left and right half-frames (a right frame 5220R and a left frame 5220L) connected with a plurality of connecting bars 5220C extending in the Y-axis direction. Since the right frame 5220R and the left frame 5220L have the same structure (strictly speaking, mirror image relationship), only the left frame 5220L will be described in detail.

The left frame 5220L has a mounting part 5221 and a rail support part 5222 each extending in the X-axis direction, and three connecting parts 5223 (5223a, 5223b, 5223c) extending in the Z-axis direction and that connect the mounting part 5221 and rail support part 5222. As shown in FIG. 38, a length of the mounting part 5221 is substantially equal to a length of the base block 5210 in the X-axis direction, and the mounting part 5221 is supported in its entire length by the base block 5210. A rear end of the mounting part 5221 and a rear end of the rail support part 5222 are connected to each other by the connecting part 5223a.

The rail support part 5222 is longer than the mounting part 5221 (i.e., longer than the base block 5210), and a distal end of the rail support part 5222 protrudes forward of the base block 5210 and is located above the front drive section 5300.

The linear guide 5230 includes a rail 5231 extending in the X-axis direction, and two carriages 5232 that travel on the rail 5231 via rolling elements. The rails 5231 of the pair of linear guides 5230 are fixed to upper surfaces of the rail support parts 5222 of the right frame 5220R and the left frame 5220L, respectively. A length of the rail 5231 is substantially equal to the length of the rail support part 5222, and the entire length of the rail 5231 is supported by the rail support part 5222. A plurality of attachment holes (screw holes) are provided on an upper surface of the carriage 5232, and the table 5240 is provided with a plurality of through holes corresponding to the attachment holes of the carriage 5232. The carriage 5232 is fastened to the table 5240 by fitting bolts (not shown) that are passed through respective through-holes of the table 5240 into respective attachment holes of the carriage 5232. The table 5240 and the four carriages 5232 constitute a dolly (thread).

The table 5240 is provided with an attachment structure such as screw holes for attaching a seat or other test piece (not shown), so that the test piece can be directly attached to the table 5240. Since this eliminates the need for a mounting plate or other component for attaching the test piece, a weight of a movable portion to which the impact is to be applied can be reduced, thereby enabling application of impacts to the test piece with high fidelity up to high frequency components.

As shown in FIG. 39, each belt mechanism 5100 includes a toothed belt 5120, a pair of toothed pulleys (a first pulley 5140 and a second pulley 5160) around which the toothed belt 5120 is wound, and a pair of belt clamps 5180 for securing the toothed belt 5120 to the table 5240.

Four toothed belts 5120 are arranged in parallel between the right frame 5220R and the left frame 5220L. Each of the toothed belts 5120 is secured to the table 5240 by the belt clamps 5180 at two points along its lengthwise direction, respectively.

As shown in FIG. 38, the front drive section 5300 includes a base block 5310, and four electric actuators 5320 (5320a, 5320b, 5320c and 5320d) mounted on the base block 5310. The rear drive section 5400 includes a base block 5410, and four electric actuators 5420 (5420a, 5420b, 5420c and 5420d) mounted on the base block 5410. Each of the eight electric actuators has the same configuration as the electric actuator 100 according to the first embodiment, with slight differences in position and orientation of the installation, and length and spacing of components, but the basic configuration is the same. Basic configurations of the front drive section 5300 and the rear drive section 5400 are also in common.

A not-shown controller synchronously controls driving of motors of the electric actuators 5320a to 5320d and 5420a to 5420d based on an input acceleration waveform, thereby providing acceleration to the table 5240 in accordance with the above acceleration waveform. In the present embodiment, the controller drives all the eight motors to rotate back and forth in the same phase. This allows acceleration to be given to the table 5240 by outputting unidirectional rotary motion from each electric actuator while utilizing regenerative energy.

The electric actuators according to the embodiments of the present invention can be used in place of various prime movers that output rotary motion (e.g., engines, electric motors, hydraulic motors, air motors, steam turbines and the like).

The electric actuators according to the embodiments of the present invention can be used as a prime mover not only for various electric cars such as electrically powered 2-, 3- or 4-wheeled vehicles or trucks, buses and tractors with 6 or more wheels, but also for railroad vehicles. That is, the electric actuators according to the embodiments of the present invention can be used as a prime mover of any vehicle. The electric actuators according to the embodiments of the present invention can also be used as a prime mover for aircraft (e.g., propeller-driven aircraft), helicopters and other aircraft, and ships. That is, the electric actuator according to the embodiment of the present invention can be used as a prime mover of any mobility apparatuses.

The electric actuators according to the embodiments of the present invention can also be used as a prime mover for various industrial machinery such as construction machinery, agricultural machinery, woodworking machinery, working machines, forging machinery, injection molding machines, robots, and transportation machinery (e.g., cranes, elevators, and conveyors). That is, the electric mobility apparatus including the electric actuator according to the embodiments of the present invention obtains unidirectional propulsive force from unidirectional rotary motion obtained by alternately rotating the electric actuator in the forward and reverse directions.

The electric actuators according to the embodiments of the present invention can also be used as a prime mover for various home appliances (washing machines, refrigerators, air conditioners, compressors and the like).

The electric actuators according to the embodiments of the present invention can also be used as a prime mover for driving a hydraulic pump or compressor.

The foregoing is a description of exemplary embodiments of the present invention. Embodiments of the present invention are not limited to those described above, and various variations are possible within the scope of the technical concept of the present invention. For example, appropriate combinations of the embodiments explicitly indicated by way of example in the specification and/or obvious embodiments are also included in the embodiments of the present invention.

In the drive unit 100d described above, the screw shaft 41 of the ball screw 40 is directly connected to the rotary shaft 11 of the motor 10, but the drive unit may be provided with a reduction gear, and the motor 10 and the ball screw 40 may be connected via the reduction gear.

The electric drive system 90 (electric power feeding system 90S) (FIG. 5) of the first embodiment may be provided with the plug 291 and the battery 295e as in the fourth embodiment.

The plug 291 and the battery 295e may be removed from the electric drive system 290 (electric power feeding system 290S) (FIG. 16) of the fourth embodiment, and the circuit breaker 92 may be directly connected to the primary power source 91.

The circuit breaker 92, the electromagnetic switch 93, and/or the reactor 94 may be removed from the electric drive system 290 (electric power feeding system 290S) (FIG. 16) of the fourth embodiment and may be provided in the front stage (primary power source side) of the plug 291.

In the electric drive system 90 (electric power feeding system 90S) (FIG. 5) of the first embodiment, an AC generator may be used as the primary power source 91.

In the electric drive system 290 (electric power feeding system 290S) (FIG. 16) of the fourth embodiment or the electric drive system 690 (electric power feeding system 690S) (FIG. 28) of the twelfth embodiment, the battery 295e may be removed, and the capacitor 95c with large capacitance may be used to take on the storage function of battery 295e.

In the electric drive system 290 (electric power feeding system 290S) (FIG. 16) of the fourth embodiment, a configuration in which a plurality of inverters 95b are provided for one servo amplifier 295, and the inverters 95b are connected to the motors 10, respectively (i.e., a configuration in which the power regenerative converter 95a, the capacitor 95c and the direct current bus bar 95d are shared by a plurality of motors 10) is employed, but the present invention is not limited to this configuration. For example, the servo amplifier 95 of the first embodiment (FIG. 5) may be provided for each motor 10. In this case, for example, the wiring is branched at the rear of the reactor 94, and the servo amplifier 95 is connected to each branch wiring. Alternatively, the reactor 94 may be provided for each servo amplifier 95, the wiring may be branched at a stage after the electromagnetic switch 93, and the reactor 94 and the servo amplifier 95 may be connected to each branch wiring.

The electric actuator 100 according to the first embodiment of the present invention described above includes a single drive unit 100d, the electric actuator 200 according to the fourth embodiment of the present invention includes four drive units 200d, and the electric actuator 201 according to the fifth embodiment of the present invention includes two drive units 200d, but the present invention is not limited to these configurations, and any number of drive units can be provided in the electric actuator.

Each of the electric actuators 100, 200 and 201 described above include a single crankshaft (crankshaft 70, crankshaft 270 and crankshaft 270a), but may be divided into a plurality of crankshafts. For example, if the electric actuator includes four drive units, the crankshaft may be divided into two, with two drive units 100d connected to each crankshaft. In this case, the divided plurality of crankshafts 70 are interconnected for example by a gear mechanism or a winding transmission mechanism such as belt mechanism so that the power of each crankshaft 70 is combined. By dividing the crankshafts 70, more freedom in the arrangement of the plurality of drive units is provided, which enables downsizing.

The vibration test device 1000 according to the eleventh embodiment, the tire test device 2000 according to the twelfth embodiment, the multi-test device 3000 according to the thirteenth embodiment, the balance measurement device 4000 according to the fourteenth embodiment, and the collision simulation test device 5000 according to the fifteenth embodiment show examples in which the electric actuator 100 is used, but the electric actuator to be used in these devices is not limited to the electric actuator 100 according to the first embodiment. For example, electric actuators with two cylinders or more, such as the electric actuator 200 and the electric actuator 201, may be used.

In each of the above embodiments, the motor 10 is an AC servomotor, but another type of electric motor of which drive amount (rotation angle) can be controlled, such as a DC servomotor or stepping motor, may be used as the motor 10.

In the above fourth and tenth embodiments, the configurations in which an electric power feeding system includes a generator are illustrated, but the generator may be provided not only to the electric power feeding systems of the fourth and tenth embodiment but also to the electric power feeding systems of the other embodiments.

In each of the above embodiments, the power regenerative converter 95a is used that is capable of returning excess regenerative electric power from the servo amplifier 95 to the primary power source 91 side, but a converter without an electric power regenerative function for returning excess electric power to the primary power source 91 side may be used. When a converter without an electric power regenerative function is used, it is desirable to provide a device that stores excess electric power (e.g., a large-capacity capacitor or a large-capacity battery) in the servo amplifier 95 instead of providing a regenerative resistance that absorbs regenerative electric power in the servo amplifier 95.

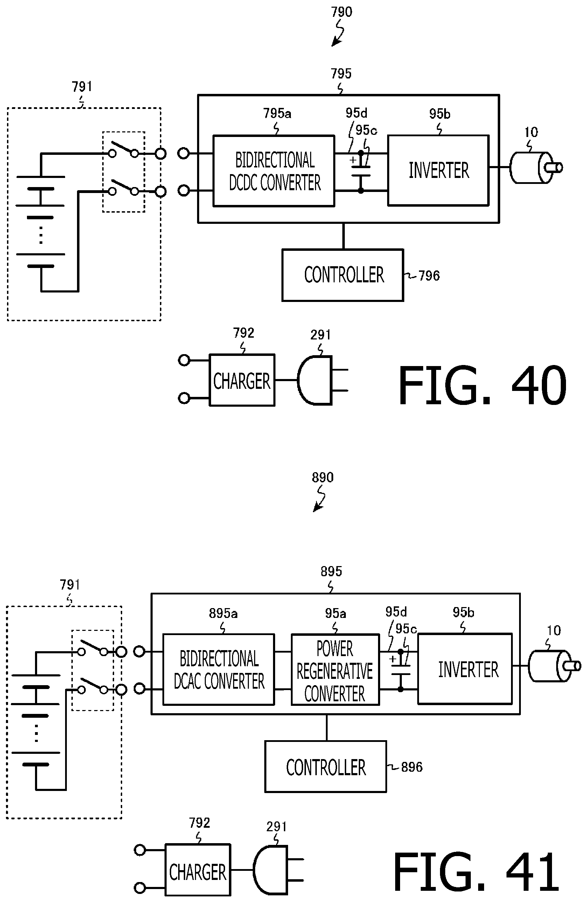

FIGS. 40 and 41 are diagrams showing modified examples of the electric power feeding system that supplies electric power to the electric actuator according to each of the embodiments. In each of the above embodiments, a system that converts electric power supplied from a primary power source to drive an electric motor is illustrated, but electric power to be supplied from a power source to the system is not limited to alternating current electric power. As shown in FIGS. 38 and 39, the motor 10 can be driven by supplying direct current electric power supplied from a battery 791 to an inverter via a converter. In this case, surplus electric power among the regenerated electric power from the motor 10 that has not been charged (accumulated) in the capacitor 95c is stored in the battery 791 instead of being output to the primary power source.

An electric power feeding system 790S (electric drive system 790) shown in FIG. 40 includes a bidirectional DCDC converter 795a as the converter. First, a charger 792 is connected to the battery 791, and the battery 791 is charged by the electric power supplied via the charger 792 from the plug 291 plugged into an outlet (not shown) of a primary power source. Next, the battery 791 is connected to a servo amplifier 795, and electric power from the battery 791 is supplied to inverter 95b via the bidirectional DCDC converter 795a to drive the motor 10, and surplus electric power among the regenerated electric power from the motor 10 that has not been charged (accumulated) in the capacitor 95c is output to the battery 791 via the bidirectional DCDC converter 795a.

An electric power feeding system 890S (electric drive system 890) shown in FIG. 41 includes a bidirectional DCAC converter 895a upstream of the power regenerative converter 95a. First, the charger 792 is connected to the battery 791, and the battery 791 is charged by the electric power supplied via the charger 792 from a plug 291 that is plugged into a primary electric power outlet (not shown). Next, the battery 791 is connected to a servo amplifier 895, and electric power from the battery 791 is supplied to the inverter 95b via the bidirectional DCAC converter 895a and the power regenerative converter 95a to drive the motor 10, and surplus electric power among the regenerated electric power from the motor 10 that has not been charged (accumulated) in the capacitor 95c is output via the power regenerative converter 95a and the bidirectional DCAC converter 895a to the battery 791.

In each of the above embodiments, surplus electric power among the regenerated electric power from the motor 10 that has not been charged (accumulated) in the capacitor 95c was regenerated to the primary power source via the power regenerative converter 95a, but the surplus electric power among the regenerated electric power from the motor 10 that has not been charged (accumulated) in the capacitor 95c may be regenerated to the primary power source without going through the power regenerative converter 95a.

### <Sixteenth Embodiment>

FIG. 42 is a diagram showing a circuit configuration of an electric power feeding system (electric drive system) of an electric actuator according to a sixteenth embodiment.

The servo amplifier 95 shown in FIG. 42 includes the inverter 95b, the capacitor 95c, two changeover switches SW, the power regenerative converter 95a, and a PFC circuit 95e. The electric actuator 100 is installed in an electric mobility apparatus such as an electric vehicle and is used as a prime mover for the electric mobility apparatus. The electric actuator 100 further includes the detecting part EN, the controller 96, and the storage device St.

The detecting part EN is, for example, an encoder that detects a rotational position (rotation angle) [°] of the motor 10 and sends the detected rotational position to the controller 96.

During charging of the battery 295e mounted on the electric mobility apparatus, when the controller 96 detects that the primary power source 91 (an external power source such as commercial power) is connected to the external terminals Te, the controller 96 controls contacts of the respective changeover switches SW so that the power regenerative converter 95a is electrically connected to the primary power source 91 via the PFC circuit 95e and the external terminals Te, and controls operations of the PFC circuit 95e and the power regenerative converter 95a so that electric power is supplied from the primary power source 91 to the battery 295e.

While the electric mobility apparatus is traveling, the controller 96 controls the contacts of the changeover switches SW so that the power regenerative converter 95a is electrically connected to the inverter 95b via the capacitor 95c, and controls the operations of the power regenerative converter 95a and the inverter 95b so that electric power exchange between the battery 295e and the motor 10 is repeatedly performed, that is, so that the powering operation and the regenerative operation are alternately repeated. The controller 96 drives the motor 10 by controlling the operation of the inverter 95b based on command values stored in advance in the storage device St. For example, the controller 96 is configured by a motion controller, creates command values based on a cam curve described later, and stores the created command values in the storage device St. While the electric mobility apparatus is traveling, that is, during driving of the electric actuator 100, the controller 96 controls the operation of the inverter 95b according to the command values stored in the storage device St so that the motor 10 is driven to cause the connecting rod 60 to perform unidirectional rotary motion and reciprocating linear motion along the motion locus represented by the cam curve.

During charging of the battery 295e, the PFC circuit 95e converts alternating current electric power supplied from the primary power source 91 into direct current electric power and supplies the direct current electric power to the power regenerative converter 95a.

During the powering operation (that is, an operation mode in which the motor 10 is driven by electric power supplied from the battery 295e), the inverter 95b converts direct current electric power accumulated in the capacitor 95c and the battery 295e into alternating current electric power and supplies the alternating current electric power to the motor 10 to drive the motor 10. During the regenerative operation (that is, an operation mode in which regenerative electric power from the motor 10 is supplied to the capacitor 95c and the battery 295e), the inverter 95b converts regenerative alternating current electric power from the motor 10 into direct current electric power and accumulates a part or all of the direct current electric power in the capacitor 95c. The inverter 95b supplies surplus electric power among the regenerative electric power that has not been accumulated in the capacitor 95c to the battery 295e via the changeover switches SW and the power regenerative converter 95a to charge the battery 295e. That is, the inverter 95b supplies surplus electric power, among the regenerative electric power to be regenerated to the capacitor 95c, that overflows from the capacitor 95c to the primary power source 91. In other words, the inverter 95b supplies to the battery 295e surplus electric power that depends on the electric power consumed during acceleration of the motor 10 and the regenerative electric power generated during deceleration. Further stated in other words, when the motor 10 repeatedly performs forward and reverse rotations, the inverter 95b outputs to the battery 295e surplus electric power among the regenerative electric power from the motor 10 that has not been consumed during acceleration of the motor 10.

The power regenerative converter 95a includes switching elements SW1 to SW8, a capacitor (or condenser) C1, and the transformer Tr. The inverter 95b includes switching elements SW9 to SW14. The switching elements SW1 to SW14 are, for example, IGBTs (Insulated Gate Bipolar Transistors).

When supplying electric power supplied from the battery 295e to the motor 10, the controller 96 alternately and repeatedly turns on and off the switching elements SW1, SW4 and the switching elements SW2, SW3, whereby electric power smoothed by the capacitor C1 is transferred from the primary coil L1 to the secondary coil L2 of the transformer Tr.

When supplying electric power supplied from the battery 295e to the motor 10, electric power transferred to the secondary coil L2 is rectified by diodes that are respectively connected in parallel with the switching elements SW5 to SW8 and is smoothed by the capacitor 95c.

When supplying electric power supplied from the battery 295e to the motor 10, the controller 96 repeatedly turns on and off the switching elements SW9 to SW14 so that electric power smoothed by the capacitor 95c is converted into alternating current electric power (e.g., a pulse train) whose phases differ by 120 degrees and is supplied to the motor 10.

When regenerative electric power from the motor 10 is supplied to the capacitor 95c and the battery 295e, alternating current electric power supplied from the three phases of the motor 10 is rectified by respective diodes connected in parallel with the switching elements SW9 to SW14 and is smoothed by the capacitor 95c.

When supplying regenerative electric power from the motor 10 to the capacitor 95c and the battery 295e, the controller 96 alternately and repeatedly turns on and off the switching elements SW5, SW8 and the switching elements SW6, SW7, whereby electric power smoothed by the capacitor 95c is transferred from the secondary coil L2 to the primary coil L1 of the transformer Tr.

When supplying regenerative electric power from the motor 10 to the capacitor 95c and the battery 295e, electric power transferred from the secondary coil L2 to the primary coil L1 is rectified by respective diodes connected in parallel with the switching elements SW1 to SW4 and is smoothed by the capacitor C1.

When driving the motor 10 (during the powering operation), direct current electric power output from the battery 295e is converted into alternating current electric power by the power regenerative converter 95a, smoothed by the capacitor 95c, and converted into alternating current (e.g., a pulse train) driving electric power by the inverter 95b. The driving electric power output from the inverter 95b is input to the motor 10 to rotationally drive the motor 10.

When the motor 10 generates regenerative electric power (during the regenerative operation), regenerative electric power output from the motor 10 is converted into direct current electric power by the inverter 95b and is input to the power regenerative converter 95a via the capacitor 95c. The power regenerative converter 95a converts the direct current electric power input via the capacitor 95c into alternating current electric power and outputs the alternating current electric power to the battery 295e.

That is, the servo amplifier 95 drives the motor 10 by supplying electric power supplied from the battery 295e to the motor 10, and regenerates to the battery 295e regenerative electric power generated in the motor 10 when the motor 10 switches from the forward rotation to the reverse rotation and regenerative electric power generated in the motor 10 when the motor 10 switches from the reverse rotation to the forward rotation.

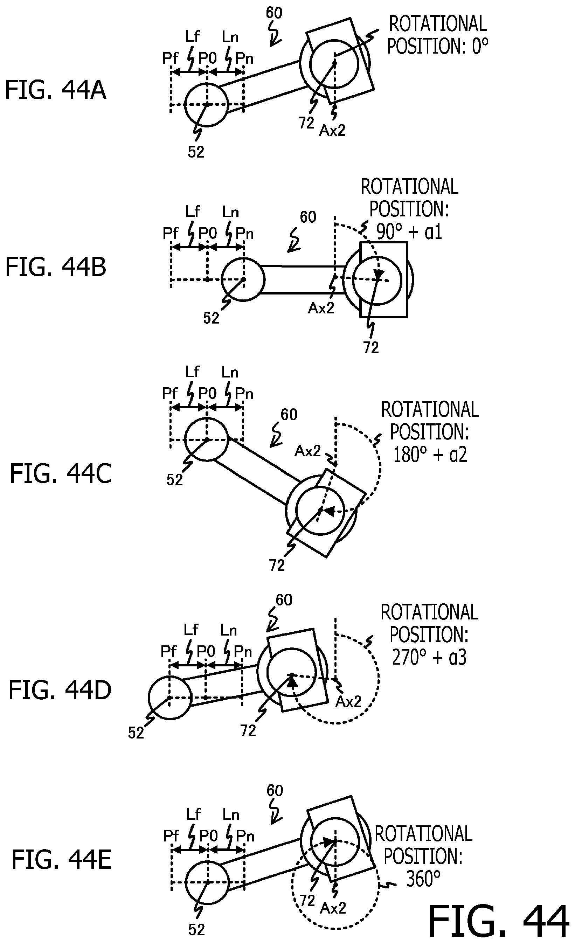

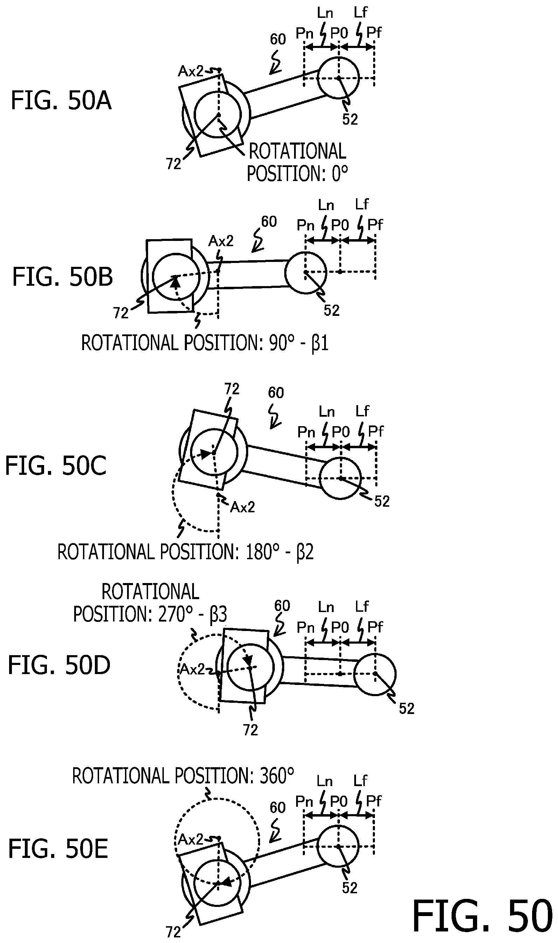

FIG. 43 is a diagram showing an example of a cam curve representing a relationship between the rotational position (rotation angle) [°] of the connecting rod 60 when the connecting rod 60 performs rotary motion about a rotation axis Ax2 and a stroke ratio of the connecting rod 60 when the connecting rod 60 performs reciprocating linear motion. A solid line in FIG. 43 represents a cam curve discovered by the inventors. A broken line in FIG. 43 represents a reference cam curve in which the relationship between the rotational position [°] of the connecting rod 60 when the connecting rod 60 performs rotary motion about the rotation axis Ax2 and the stroke ratio of the connecting rod 60 when the connecting rod 60 performs reciprocating linear motion is represented by a sine wave. The "stroke ratio" is a ratio of a moving amount of the connecting rod 60, when the connecting rod 60 moves along a line segment and with an arbitrary position on the line segment as a reference position, to a length of the line segment. For example, in FIG. 44 or FIG. 50 described later, it is assumed that a position of the connecting portion between the connecting rod 60 and the piston 50, that is, a position of the pin 52, when it is closest to the rotation axis Ax2 is defined as Pn, a position of the pin 52 when it is farthest from the rotation axis Ax2 is defined as Pf, and a midpoint between the position Pn and the position Pf is defined as a reference position P0. In this case, a value "+1," which is obtained by dividing a line segment Ln from the position P0 to the position Pn by a positive moving amount of the pin 52 when the pin 52 moves from the position P0 to the position Pn, is defined as the stroke ratio corresponding to the position Pn. Likewise, a value "-1," which is obtained by dividing a line segment Lf from the position P0 to the position Pf by a negative moving amount of the pin 52 when the pin 52 moves from the position P0 to the position Pf, is defined as the stroke ratio corresponding to the position Pf. The stroke ratio corresponding to the position P0 is defined as "0." When the stroke ratio is defined in this way, the stroke ratio transitions from 0 to +1 as the pin 52 approaches the rotation axis Ax2, then transitions from +1 to 0 as the pin 52 moves away from the rotation axis Ax2, further transitions from 0 to -1 as the pin 52 moves away from the rotation axis Ax2, and transitions from -1 to 0 as the pin 52 approaches the rotation axis Ax2. That is, when the connecting rod 60 performs reciprocating linear motion, the stroke ratio of the connecting rod 60 repeatedly changes between -1 and +1. In FIG. 44, assuming that a rotational position of a connecting portion between the connecting rod 60 and the crankshaft 70, that is, a rotational position of the crank pin 72, when the stroke ratio is 0 is defined as 0 [°], as the stroke ratio transitions from 0 to +1, the crank pin 72 rotates in one direction and its rotational position changes from 0 [°] to 90 [°] + α1 [°]. Then, as the stroke ratio transitions from +1 to 0, the crank pin 72 continues rotating in one direction and the rotational position of the crank pin 72 changes from 90 [°] + α1 [°] to 180 [°] + α2 [°]. Then, as the stroke ratio transitions from 0 to -1, the crank pin 72 continues rotating in one direction and the rotational position of the crank pin 72 changes from 180 [°] + α2 [°] to 270 [°] + α3 [°]. Then, as the stroke ratio transitions from -1 to 0, the crank pin 72 continues rotating in one direction and the rotational position of the crank pin 72 changes from 270 [°] + α3 [°] to 360 [°]. In FIG. 50, assuming that the rotational position of the crank pin 72 when the stroke ratio is 0 is defined as 0 [°], as the stroke ratio transitions from 0 to +1, the crank pin 72 rotates in one direction and the rotational position of the crank pin 72 changes from 0 [°] to 90 [°] - β1 [°]. then, as the stroke ratio transitions from +1 to 0, the crank pin 72 continues rotating in one direction and the rotational position of the crank pin 72 changes from 90 [°] - β1 [°] to 180 [°] - β2 [°]. Then, as the stroke ratio transitions from 0 to -1, the crank pin 72 continues rotating in one direction and the rotational position of the crank pin 72 changes from 180 [°] - β2 [°] to 270 [°] - β3 [°]. Then, as the stroke ratio transitions from -1 to 0, the crank pin 72 continues rotating in one direction and the rotational position of the crank pin 72 changes from 270 [°] - β3 [°] to 360 [°]. That is, the connecting rod 60 performs unidirectional rotary motion in conjunction with the reciprocating linear motion of the connecting rod 60.

When the motor 10 is driven in accordance with the command values based on the reference cam curve shown in FIG. 43, rotational unevenness occurs as the connecting rod 60 (crank pin 72) rotates about the rotation axis Ax2, making it difficult to smoothly rotate the output shaft 75. Therefore, extra load may act on the motor 10, potentially lowering the efficiency of the motor 10.

The inventors discovered that, by rotating the output shaft while the electric motor is not driven, command values for the electric motor can be obtained that enable smooth driving of a transmission mechanism which rigidly couples the rotary shaft of the electric motor to the output shaft. By rotating the output shaft 75 in one direction while the motor 10 is not driven, the cam curve shown by the solid line in FIG. 43 was obtained, and command values for driving the motor 10 were determined on the basis of that cam curve. That is, the command values are values determined on the basis of the rotational position of the motor 10 that has rotated as a result of rotating the output shaft 75 in one direction without driving the motor 10. For example, command values based on the cam curve represented by the solid line shown in FIG. 43 are stored in advance in the storage device St shown in FIG. 42, and, when driving the electric actuator 100, the controller 96 drives the motor 10 in accordance with the stored command values.

FIGS. 44A to 44E are diagrams for explaining the movement of the connecting rod 60 corresponding to the cam curve represented by the solid line in FIG. 43. In the example shown in FIG. 44, it is assumed that, while the motor 10 rotates forward, the connecting rod 60 (crank pin 72) performs unidirectional rotary motion about the rotation axis Ax2 and the connecting rod 60 (pin 52) performs linear motion approaching the rotation axis Ax2, and that, while the motor 10 rotates in reverse, the connecting rod 60 (crank pin 72) performs unidirectional rotary motion about the rotation axis Ax2 and the connecting rod 60 (pin 52) performs linear motion moving away from the rotation axis Ax2. It should be noted that the reference positions for the rotational position and the stroke ratio of the connecting rod 60 are not limited to those shown in FIG. 47.

First, as shown in FIG. 44A, when the pin 52 (connecting rod 60) is at the reference position P0, the rotational position of the crank pin 72 (connecting rod 60) is defined as 0 [°].

Then, as the motor 10 rotates forward, the crank pin 72 (connecting rod 60) performs unidirectional rotary motion and the connecting rod 60 performs linear motion moving away from the motor 10 (such that the pin 52 approaches the rotation axis Ax2). As shown in FIG. 44B, when the pin 52 (connecting rod 60) moves to the position Pn (the stroke ratio becomes +1), the rotational position of the crank pin 72 (connecting rod 60) becomes 90 [°] +α1 [°].

Then, as the motor 10 rotates in reverse, the crank pin 72 (connecting rod 60) performs unidirectional rotary motion and the connecting rod 60 performs linear motion approaching the motor 10 (such that the pin 52 moves away from the rotation axis Ax2). As shown in FIG. 44C, when the pin 52 (connecting rod 60) moves to the position P0 (the stroke ratio becomes 0), the rotational position of the crank pin 72 (connecting rod 60) becomes 180 [°] + α2 [°].

As the motor 10 further rotates in reverse, the crank pin 72 (connecting rod 60) performs unidirectional rotary motion and the connecting rod 60 performs linear motion approaching the motor 10 (such that the pin 52 moves away from the rotation axis Ax2). As shown in FIG. 44D, when the pin 52 (connecting rod 60) moves to the position Pf (the stroke ratio becomes -1), the rotational position of the crank pin 72 (connecting rod 60) becomes 270 [°] + α3 [°]. Note that the values α1 [°] to α3 [°] become larger as a distance from the pin 52 to the crank pin 72 and a distance from the crank pin 72 to the rotation axis Ax2 become longer.

Then, as the motor 10 rotates forward, the crank pin 72 (connecting rod 60) performs unidirectional rotary motion and the connecting rod 60 performs linear motion moving away from the motor 10 (such that the pin 52 approaches the rotation axis Ax2). As shown in FIG. 44E, when the pin 52 (connecting rod 60) moves to the position P0 (the stroke ratio becomes 0), the rotational position of the crank pin 72 (connecting rod 60) becomes 360 [°] (0 [°]).

When the command values for driving the motor 10 are generated as in the operation example of the connecting rod 60 shown in FIG. 44, that is, when the command values for driving the motor 10 are generated based on the cam curve shown in FIG. 43, the motor 10 is rotated forward such that the rotational position of the connecting rod 60 transitions from 0 [°] to 90 [°] + α1 [°] while the stroke ratio of the connecting rod 60 transitions from 0 to +1; the motor 10 is rotated in reverse such that the rotational position of the connecting rod 60 transitions from 90 [°] + α1 [°] to 180 [°] + α2 [°] while the stroke ratio transitions from +1 to 0; the motor 10 is rotated in reverse such that the rotational position of the connecting rod 60 transitions from 180 [°] + α2 [°] to 240 [°] + α3 [°] while the stroke ratio transitions from 0 to -1; and the motor 10 is rotated forward such that the rotational position of the connecting rod 60 transitions from 240 [°] + α3 [°] to 360 [°] while the stroke ratio transitions from -1 to 0.

An example of a method for generating the cam curve in the solid line shown in FIG. 43 is, in case the output shaft 75 (connecting rod 60) is rotated for one revolution in one direction using another motor while the motor 10 is not driven, obtaining the rotational positions corresponding to respective stroke ratios when the connecting rod 60 moves by a unit stroke ratio, and plotting the obtained relationships between the stroke ratios and the rotational positions on two-dimensional coordinates with the horizontal axis representing the rotational position and the vertical axis representing the stroke ratio. For example, when the unit stroke ratio is set to 0.1, the rotational positions corresponding to respective stroke ratios are recorded when the stroke ratio of the connecting rod 60 increases from 0 to +1 in increments of 0.1, and the rotational positions corresponding to respective stroke ratios are recorded when the stroke ratio decreases from +1 to 0 in decrements of 0.1. The stroke ratio after the increase of ten unit stroke ratios starting from 0 is defined as +1, and the stroke ratio after the decrease of ten unit stroke ratios starting from +1 is defined as 0. Likewise, the rotational positions corresponding to respective stroke ratios are recorded when the stroke ratio of the connecting rod 60 decreases from 0 to -1 in decrements of 0.1, and the rotational positions corresponding to respective stroke ratios are recorded when the stroke ratio increases from -1 to 0 in increments of 0.1. The stroke ratio after the decrease of ten unit stroke ratios starting from 0 is defined as -1, and the stroke ratio after the increase of ten the unit stroke ratios starting from -1 is defined as 0. In the reference cam curve represented by the broken line in FIG. 43, if the change in the rotational position per unit stroke ratio when the stroke ratio transitions from 0 to +1 is set to 9 [°], the rotational position changes from 0 [°] to 90 [°] when the stroke ratio transitions from 0 to +1. Likewise, if the change in the rotational position per unit stroke ratio when the stroke ratio transitions from +1 to 0 is set to 9 [°], the rotational position changes from 90 [°] to 180 [°] as the stroke ratio transitions from +1 to 0. Likewise, if the change in the rotational position per unit stroke ratio when the stroke ratio transitions from 0 to -1 is set to 9 [°], the rotational position changes from 180 [°] to 270 [°] as the stroke ratio transitions from 0 to -1. Likewise, if the change in the rotational position per unit stroke ratio when the stroke ratio transitions from -1 to 0 is set to 9 [°], the rotational position changes from 270 [°] to 360 [°] as the stroke ratio transitions from -1 to 0. On the other hand, in the cam curve represented by the solid line in FIG. 43, if the change in the rotational position per unit stroke ratio when the stroke ratio transitions from 0 to +1 is set to 10 [°], the rotational position changes from 0 [°] to 100 [°] = 90 [°] + 10 [°]. If the change in the rotational position per unit stroke ratio when the stroke ratio transitions from +1 to 0 is set to 11 [°], the rotational position changes from 100 [°] to 210 [°] = 180 [°] + 30 [°]. If the change in the rotational position per unit stroke ratio when the stroke ratio transitions from 0 to -1 is set to 8 [°], the rotational position changes from 210 [°] to 290 [°] = 270 [°] + 20 [°]. If the change in the rotational position per unit stroke ratio when the stroke ratio transitions from -1 to 0 is set to 7 [°], the rotational position changes from 290 [°] to 360 [°] as the stroke ratio transitions from -1 to 0.

One possible factor causing α1 [°] to α3 [°] is that, for example, the motor 10 is rigidly coupled to the output shaft 75 through mechanical mechanisms (such as the piston 50 and the connecting rod 60), so that the change in the rotational position per unit stroke varies depending on the distance from the pin 52 to the crank pin 72 and the distance from the crank pin 72 to the rotation axis Ax2.

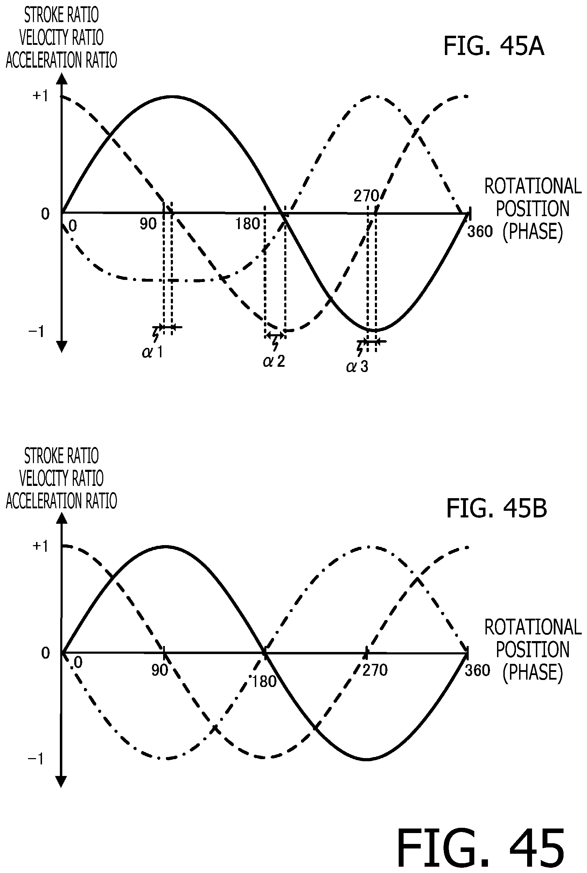

FIG. 45A is a diagram showing a cam curve discovered by the inventors, and FIG. 45B is a diagram showing a reference cam curve. In the two-dimensional coordinates shown in FIGS. 45A and 45B, the horizontal axis represents the rotational position (rotation angle) [°] of the connecting rod 60 when the connecting rod 60 performs rotary motion about the rotation axis of the crankshaft 70 at startup of rotation of the crankshaft 70, and the vertical axis represents the stroke ratio [%], velocity ratio [%], or acceleration ratio [%] of the connecting rod 60 when the connecting rod 60 performs linear motion at startup of rotation of the crankshaft 70. The solid line in FIG. 45A represents the relationship between the rotational position of the connecting rod 60 and the stroke ratio (that is, the cam curve discovered by the inventors). The broken line in FIG. 45A is a first derivative of the cam curve discovered by the inventors and represents the relationship between the rotational position of the connecting rod 60 and the velocity ratio. The one-dot chain line in FIG. 45A is a second derivative of the stroke ratio of the cam curve discovered by the inventors and represents the relationship between the rotational position of the connecting rod 60 and the acceleration ratio. The solid line in FIG. 45B represents the reference cam curve. The broken line in FIG. 45B is a first derivative of the stroke ratio of the reference cam curve and represents the relationship between the rotational position of the connecting rod 60 and the velocity ratio. The one-dot chain line in FIG. 45B is a second derivative of the stroke ratio of the reference cam curve and represents the relationship between the rotational position of the connecting rod 60 and the acceleration ratio.

Compared with the relationship between the rotational position of the connecting rod 60 and the acceleration ratio shown in FIG. 45B (one-dot chain line), the relationship between the rotational position of the connecting rod 60 and the acceleration ratio shown in FIG. 45A (one-dot chain line) has a smaller peak of the acceleration ratio during a period from 0 [°] to 180 [°]. That is, FIG. 45A indicates that the acceleration ratio of the connecting rod 60 becomes relatively small at startup of rotation of the crankshaft 70.

Thus, to suppress rotational unevenness of the output shaft 75, the inventors found it effective to drive the motor 10 in accordance with the command values based on the cam curves (solid lines) shown in FIGS. 43 and 45A. Since it is difficult to obtain the cam curves (solid lines) shown in FIGS. 43 and 45A by calculations or simulations, the output shaft 75 is forcibly rotated while the motor 10 is not driven. At that time, rotational position data output from the detecting part EN is acquired, and from the rotational position data, a cam curve (solid line) that enables suppression of rotational unevenness of the output shaft 75 is obtained. Then, the command values for the motor 10 are determined on the basis of that cam curve (solid line). As a result, the output shaft 75 can be rotated without imposing unnecessary load on the motor 10, thereby enabling power saving of the electric actuator 100.

FIG. 46 is a plan view of a power unit according to an embodiment of the present invention.

The power unit PU shown in FIG. 46 includes three electric actuators 100-1 to 100-3. Each of the electric actuators 100-1 to 100-3 is similar to the electric actuator 100, and detailed description is omitted. That is, each electric actuator 100-1 to 100-3 shown in FIG. 46 includes three drive units 100d and three crankshafts 70. The number of electric actuators 100 coupled in the same orientation is not limited to three as shown in FIG. 46, but may be two or four or more.

The power unit PU shown in FIG. 46 has a structure imitating a three-cylinder engine. That is, the crankshaft 70 of the electric actuator 100-1 is coupled to the crankshaft 70 of the electric actuator 100-2, and the crankshaft 70 of the electric actuator 100-2 is coupled to the crankshaft 70 of the electric actuator 100-3. Since the crankshafts 70 are coupled to each other in this manner, the power unit PU can synthesize respective outputs of the electric actuators 100-1 to 100-3. That is, the respective transmission mechanisms of the electric actuators 100-1 to 100-3 can share an output shaft.

FIG. 47 shows cam curves for respective connecting rods 60 of the electric actuators 100-1 to 100-3. In the two-dimensional coordinates shown in FIG. 47, the horizontal axis represents the rotational position [°] of the connecting rod 60 and the vertical axis represents the stroke ratio [%] of the connecting rod 60. A solid line in FIG. 47 represents the relationship between the rotational position and the stroke ratio of the connecting rod 60 in the electric actuator 100-1; a broken line in FIG. 47 represents the relationship between the rotational position and the stroke ratio of the connecting rod 60 in the electric actuator 100-2; and a one-dot chain line in FIG. 47 represents the relationship between the rotational position and the stroke ratio of the connecting rod 60 in the electric actuator 100-3.

The cam curves shown in FIG. 47 differ from each other in their rotational position by 120 [°].

FIG. 48 is a diagram showing a modified example of the power unit according to an embodiment of the present invention.

Similarly to the power unit PU shown in FIG. 46, the power unit PU shown in FIG. 48 includes three electric actuators 100-1 to 100-3 whose crankshafts 70 are coupled to each other.

The power unit PU shown in FIG. 48 differs from the power unit PU shown in FIG. 46 in that, in the power unit PU shown in FIG. 48, two electric actuators 100-1 and 100-3 among the electric actuators 100-1 to 100-3 are arranged in parallel, and the remaining one electric actuator 100-2 is disposed to face the two parallel-arranged electric actuators 100-1 and 100-3 between the two. As shown in FIG. 48, the total of at least two electric actuators 100 arranged in parallel and at least one electric actuator 100 disposed to face the parallel-arranged electric actuators is not limited to three and may be four or more.

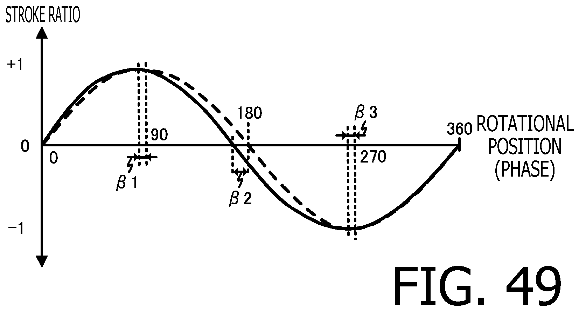

In the respective electric actuators 100-1 to 100-3 shown in FIG. 46, the respective motors 10 are driven based on command values determined on the basis of the cam curve (solid line) shown in FIG. 43 so that the respective connecting rods 60 rotate and the respective crankshafts 70 rotate. In the respective electric actuators 100-1 and 100-3 shown in FIG. 48, the respective motors 10 are driven so that the respective connecting rods 60 operate according to the cam curve shown in FIG. 43. In the electric actuator 100-2 shown in FIG. 48, the motor 10 is driven based on the command values determined based the cam curve (solid line) shown in FIG. 49 so that the connecting rod 60 rotates and the crankshaft 70 rotates.

FIG. 49 is a diagram showing an example of the cam curve representing the relationship between the rotational position (rotation angle) [°] of the connecting rod 60 and the stroke ratio of the connecting rod 60 when the connecting rod 60 performs reciprocating linear motion, when the connecting rod 60 in the electric actuator 100-2 performs rotary motion about the rotation axis Ax2. A solid line in FIG. 49 represents the cam curve discovered by the inventors. A broken line in FIG. 49 represents a reference cam curve in case the relationship between the rotational position [°] of the connecting rod 60 in the electric actuator 100-2 when the connecting rod 60 performs rotary motion about the rotation axis Ax2 and the stroke ratio of the connecting rod 60 when the connecting rod 60 performs reciprocating linear motion is represented by a sine wave.

When the motor 10 in the electric actuator 100-2 is driven in accordance with the command values based on the reference cam curve shown in FIG. 43, rotational unevenness occurs as the connecting rod 60 rotates about the rotation axis Ax2, making it difficult to smoothly rotate the output shaft 75. Therefore, extra load is applied to the motor 10, potentially lowering the efficiency of the motor 10.

Accordingly, the inventors rotated the output shaft 75 in one direction while the motors 10 of the electric actuators 100-1 to 100-3 shown in FIG. 48 are not driven to obtain the solid cam curve shown in FIG. 49, and determined command values for driving the motor 10 of the electric actuator 100-2 based on that cam curve. That is, the command values for the motor 10 of the electric actuator 100-2 are values determined on the basis of the cam curve of the connecting rod 60 of the electric actuator 100-2 when the output shaft 75 is rotated in one direction without driving the motors 10 of the electric actuators 100-1 to 100-3. For example, the command values based on the cam curve represented by the solid line shown in FIG. 43 and the command values based on the cam curve represented by the solid line shown in FIG. 49 are stored in advance in the storage device St shown in FIG. 42, and, when driving the electric actuators 100-1 to 100-3, the controller 96 drives the respective motors 10 based on the command values stored in the storage device St. Thus, the output shaft 75 can be rotated without applying unnecessary loads to the respective motors 10. As a result, power saving can be achieved in the electric actuators 100-1 to 100-3, that is, in the power unit PU.

FIGS. 50A to 50E are diagrams for explaining movement of the connecting rod 60 corresponding to the cam curve in the solid line shown in FIG. 49. In the example in FIG. 50, it is assumed that, while the motor 10 rotates forward, the connecting rod 60 (crank pin 72) performs unidirectional rotary motion about the rotation axis Ax2 and the connecting rod 60 (pin 52) performs linear motion approaching the rotation axis Ax2, and that, while the motor 10 rotates in reverse, the connecting rod 60 (crank pin 72) performs unidirectional rotary motion about the rotation axis Ax2 and the connecting rod 60 (pin 52) performs linear motion moving away from the rotation axis Ax2. It should be noted that the reference positions for the rotational position and the stroke ratio of the connecting rod 60 are not limited to those shown in FIG. 50.

First, as shown in FIG. 50A, when the pin 52 (connecting rod 60) is at the reference position P0, the rotational position of the crank pin 72 (connecting rod 60) is defined as 0 [°].

Then, by forward rotation of the motor 10, the crank pin 72 (connecting rod 60) performs unidirectional rotary motion and the pin 52 (connecting rod 60) performs linear motion approaching the rotation axis Ax2, and, as the pin 52 (connecting rod 60) moves to the position Pn (the stroke ratio becomes +1), as shown in FIG. 50B, the rotational position of the crank pin 72 (connecting rod 60) becomes 90 [°] - β1 [°].

Then, by reverse rotation of the motor 10, the crank pin 72 (connecting rod 60) performs unidirectional rotary motion and the pin 52 (connecting rod 60) performs linear motion moving away from the rotation axis Ax2, and, as the pin 52 (connecting rod 60) moves to the position P0 (the stroke ratio becomes 0), as shown in FIG. 50C, the rotational position of the crank pin 72 (connecting rod 60) becomes 180 [°] - β2 [°].

Further, by reverse rotation of the motor 10, the crank pin 72 (connecting rod 60) performs unidirectional rotary motion and the pin 52 (connecting rod 60) performs linear motion moving away from the rotation axis Ax2, and, as the pin 52 (connecting rod 60) moves to the position Pf (the stroke ratio becomes -1), as shown in FIG. 50D, the rotational position of the crank pin 72 (connecting rod 60) becomes 270 [°] - β3 [°]. Note that the values β1 [°] to β3 [°] become larger as a distance from the pin 52 to the crank pin 72 and a distance from the crank pin 72 to the rotation axis Ax2 become longer.

Then, by forward rotation of the motor 10, the crank pin 72 (connecting rod 60) performs unidirectional rotary motion and the pin 52 (connecting rod 60) performs linear motion approaching the rotation axis Ax2, and, as the pin 52 (connecting rod 60) moves to the position P0 (the stroke ratio becomes 0), as shown in FIG. 50E, the rotational position of the crank pin 72 (connecting rod 60) becomes 360 [°] (0 [°]).

When generating command values for driving the motor 10 as in the example of the movement of the connecting rod 60 shown in FIG. 50, that is, when generating the command values for driving the motor 10 according to the cam curve represented by the solid line shown in FIG. 49, the motor 10 is rotated forward such that the rotational position of the connecting rod 60 transitions from 0 [°] to 90 [°] - β1 [°] while the stroke ratio transitions from 0 to +1, the motor 10 is rotated in reverse such that the rotational position of the connecting rod 60 transitions from 90 [°] - β1 [°] to 180 [°] - β2 [°] while the stroke ratio transitions from +1 to 0, the motor 10 is rotated in reverse such that the rotational position of the connecting rod 60 transitions from 180 [°] - β2 [°] to 240 [°] - β3 [°] while the stroke ratio transitions from 0 to -1, and the motor 10 is rotated forward such that the rotational position of the connecting rod 60 transitions from 240 [°] - β3 [°] to 360 [°] while the stroke ratio transitions from -1 to 0.

An example of a method for generating the cam curve represented by the solid line shown in FIG. 49 is described below. For example, in a state where the respective motors 10 are not driven, the output shaft 75 (connecting rod 60) is rotated for one revolution in one direction. During the one unidirectional revolution of the output shaft 75, rotational positions corresponding to respective stroke ratios when the connecting rod 60 of the electric actuator 100-2 moves by a unit stroke ratio are obtained, and the obtained relationship between the stroke ratios and the rotational positions is plotted on two-dimensional coordinates, with the horizontal axis representing the rotational position and the vertical axis representing the stroke ratio. For example, when the unit stroke ratio is 0.1, the rotational positions corresponding to the respective stroke ratios are recorded when the stroke ratio of the connecting rod 60 increases from 0 to +1 in increments of 0.1 and when the stroke ratio of the connecting rod 60 decreases from +1 to 0 in decrements of 0.1. The stroke ratio after the increase of ten unit stroke ratios starting from 0 is defined as +1, and the stroke ratio after the decrease of ten unit stroke ratios starting from +1 is defined as 0. Likewise, the rotational positions corresponding to respective stroke ratios are recorded when the stroke ratio of the connecting rod 60 decreases from 0 to -1 in decrements of 0.1, and the rotational positions corresponding to respective stroke ratios are recorded when the stroke ratio increases from -1 to 0 in increments of 0.1. The stroke ratio after the decrease of ten unit stroke ratios starting from 0 is defined as -1, and the stroke ratio after the increase of ten the unit stroke ratios starting from -1 is defined as 0. In the reference cam curve represented by the broken line in FIG. 49, if the change in the rotational position per unit stroke ratio when the stroke ratio transitions from 0 to +1 is set to 9 [°], the rotational position changes from 0 [°] to 90 [°] when the stroke ratio transitions from 0 to +1. Likewise, if the change in the rotational position per unit stroke ratio when the stroke ratio transitions from +1 to 0 is set to 9 [°], the rotational position changes from 90 [°] to 180 [°] as the stroke ratio transitions from +1 to 0. Likewise, if the change in the rotational position per unit stroke ratio when the stroke ratio transitions from 0 to -1 is set to 9 [°], the rotational position changes from 180 [°] to 270 [°] as the stroke ratio transitions from 0 to -1. Likewise, if the change in the rotational position per unit stroke ratio when the stroke ratio transitions from -1 to 0 is set to 9 [°], the rotational position changes from 270 [°] to 360 [°] as the stroke ratio transitions from -1 to 0. On the other hand, in the cam curve represented by the solid line in FIG. 49, if the change in the rotational position per unit stroke ratio when the stroke ratio transitions from 0 to +1 is set to 8 [°], the rotational position changes from 0 [°] to 80 [°] = 90 [°] - 10 [°] when the stroke ratio transitions from 0 to +1. If the change in the rotational position per unit stroke ratio when the stroke ratio transitions from +1 to 0 is set to 7 [°], the rotational position changes from 1080 [°] to 150 [°] = 180 [°] - 30 [°]. If the change in the rotational position per unit stroke ratio when the stroke ratio transitions from 0 to -1 is set to 10 [°], the rotational position changes from 150 [°] to 250 [°] = 270 [°] - 20 [°]. If the change in the rotational position per unit stroke ratio when the stroke ratio transitions from -1 to 0 is set to 11 [°], the rotational position changes from 250 [°] to 360 [°].

One possible factor causing β1 [°] to β3 [°] shown in FIG. 49 is that, similar to the one factor causing α1 [°] to α3 [°], for example, the motor 10 is rigidly coupled to the output shaft 75 through mechanical mechanisms (such as the piston 50 and the connecting rod 60), so that the change in the rotational position per unit stroke varies depending on the distance from the pin 52 to the crank pin 72 and the distance from the crank pin 72 to the rotation axis Ax2.

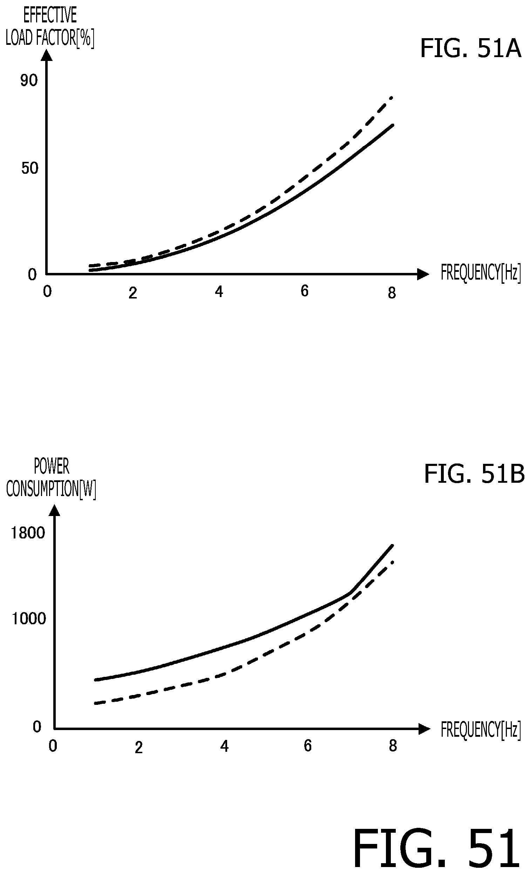

FIG. 51A is a diagram showing a relationship between frequency of the motor 10 and effective load factor, and FIG. 51B is a diagram showing a relationship between the frequency of the motor 10 and power consumption. In the two-dimensional coordinates shown in FIG. 51A, the horizontal axis represents the frequency [Hz] of the motor 10 and the vertical axis represents the effective load factor [%] of the motor 10. A solid line in FIG. 51A represents the relationship between the frequency of the motor 10 and the effective load factor in the power unit PU shown in FIG. 46, and a broken line in FIG. 51A represents the relationship between the frequency of the motor 10 and the effective load factor in the power unit PU shown in FIG. 48. In the two-dimensional coordinates shown in FIG. 51B, the horizontal axis represents the frequency [Hz] of the motor 10 and the vertical axis represents the power consumption [W] of the motor 10. A solid line in FIG. 51B represents the relationship between the frequency of the motor 10 and power consumption in the power unit PU shown in FIG. 46, and a broken line in FIG. 51B represents the relationship between the frequency of the motor 10 and power consumption in the power unit PU shown in FIG. 48.

As shown in FIGS. 51A and 51B, the power unit PU shown in FIG. 48 has higher effective load factor but can reduce power consumption compared with the power unit PU shown in FIG. 46. That is, the load factor of the motor 10 can be reduced by 20 [%] to 30 [%].

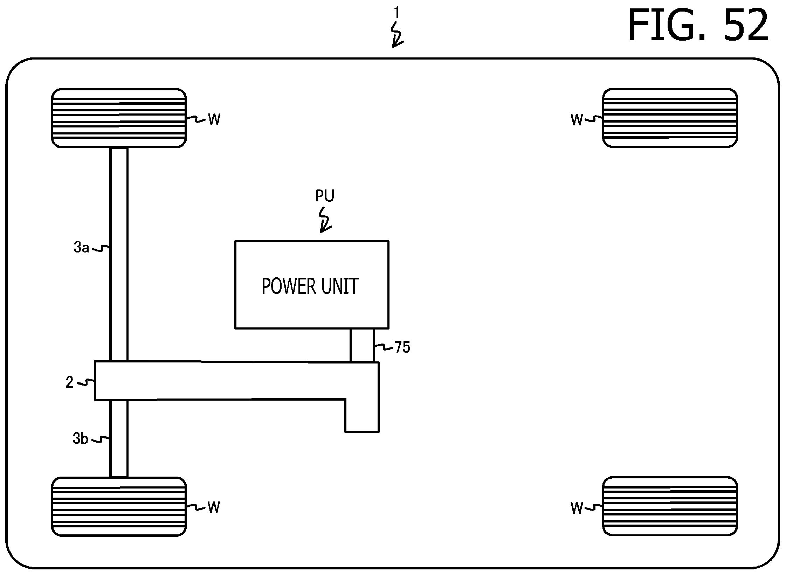

FIG. 52 is a diagram showing a schematic configuration of a powertrain of an electric car 1 equipped with the power unit PU shown in FIG. 46 or FIG. 48 as a prime mover. The electric car 1 includes the power transmission 2 and the left and right drive shafts 3a and 3b. The power transmission 2 includes a transmission, a final reduction gear, and a differential that are not shown. The output shaft 75 of the power unit PU is connected to an input shaft of the power transmission 2. The drive shafts 3a and 3b are connected to left and right output shafts of the power transmission 2, respectively. Wheels W are mounted on tips of the respective drive shafts 3a and 3b. Power output from the power unit PU is transmitted to the drive shafts 3a and 3b via the transmission, the final reduction gear, and the differential of the power transmission 2, thereby rotationally driving the wheels W mounted on the tips of the drive shafts 3a and 3b.

The power unit PU according to the embodiment can be used in place of various prime movers that output rotary motion (for example, engines, electric motors, hydraulic motors, air motors, steam turbines, etc.).

The application example shown in FIG. 52 is an example in which the electric actuator according to the embodiment of the present invention is applied to a four-wheel electric vehicle. However, the electric actuator according to the embodiment of the present invention can be used in various vehicles such as two-wheelers, three-wheelers, or various automobiles having six or more wheels including trucks, buses, and tractors. The electric actuator according to the embodiment of the present invention can be used not only in electric vehicles but also in hybrid vehicles.

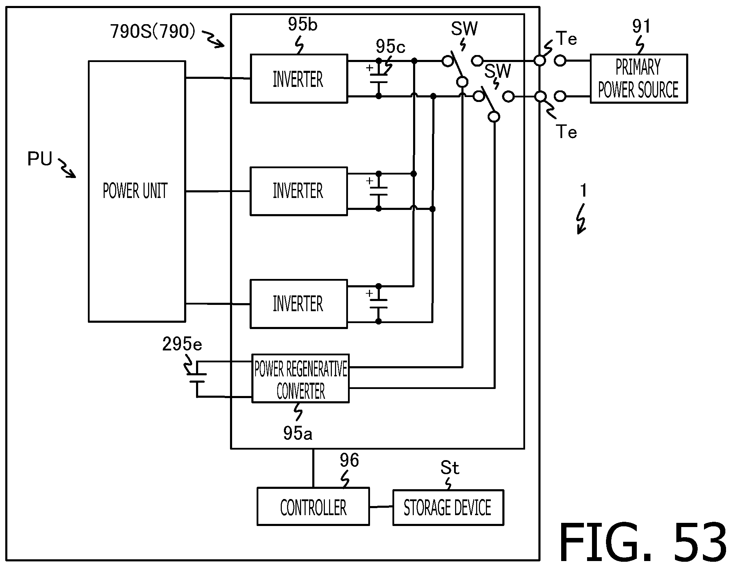

FIG. 53 is a block diagram showing a schematic configuration of an electric power feeding system 790S (electric drive system 790) of the power unit PU shown in FIG. 46 or FIG. 48.

The electric power feeding system 790S shown in FIG. 53 is installed, for example, in the electric car 1 and includes three inverters 95b, three capacitors 95c, two changeover switches SW, the power regenerative converter 95a, and the controller 96.

During charging of the battery 295e mounted on the electric car 1, when the controller 96 detects that the primary power source 91 is connected to the external terminals Te, the controller 96 controls contacts of respective changeover switches SW so that the power regenerative converter 95a is electrically connected to the primary power source 91 (external power source) via the external terminals Te, and controls operation of the power regenerative converter 95a so that electric power is supplied from the primary power source 91 to the battery 295e.

While the electric car is traveling (that is, the drive shafts 3a and 3b shown in FIG. 52 are rotating), the controller 96 controls contacts of respective changeover switches SW so that the power regenerative converter 95a is electrically connected to each inverter 95b via the respective capacitor 95c, and controls operations of the power regenerative converter 95a and each inverter 95b so that power exchange between the battery 295e and each motor 10 is repeatedly performed, that is, so that the powering operation and the regenerative operation are alternately repeated. The controller 96 controls operation of the power regenerative converter 95a and each inverter 95b based on command values stored in advance in the storage device St. The command values stored in advance in the storage device St are determined on the basis of the cam curve (solid line) shown in FIG. 43 and the cam curve (solid line) shown in FIG. 49.

During the powering operation, each inverter 95b converts direct current electric power accumulated in the capacitor 95c and the battery 295e into alternating current electric power and supplies the alternating current electric power to each motor 10 to drive each motor 10. During the regenerative operation, each inverter 95b converts regenerative alternating current electric power from the motor 10 into direct current electric power and stores a part or all of the direct current electric power in the capacitor 95c. Among the regenerative electric power, surplus electric power that has not been accumulated in the capacitor 95c is supplied to the battery 295e via the changeover switch SW and the power regenerative converter 95a to charge the battery 295e. That is, each inverter 95b supplies, among the regenerative electric power regenerated to the capacitor 95c, surplus electric power that overflows from the capacitor 95c to the primary power source 91. In other words, each inverter 95b supplies to the battery 295e surplus electric power that depends on the electric power consumed during acceleration of the motor 10 and the regenerative electric power. Further stated in other words, when the motor 10 repeatedly performs forward and reverse rotations, each inverter 95b outputs to the battery 295e surplus electric power among the regenerative electric power from the motor 10 that has not been consumed during acceleration of the motor 10.

The power unit PU according to the embodiment can be used as a prime mover for railroad cars as well as for automobiles.

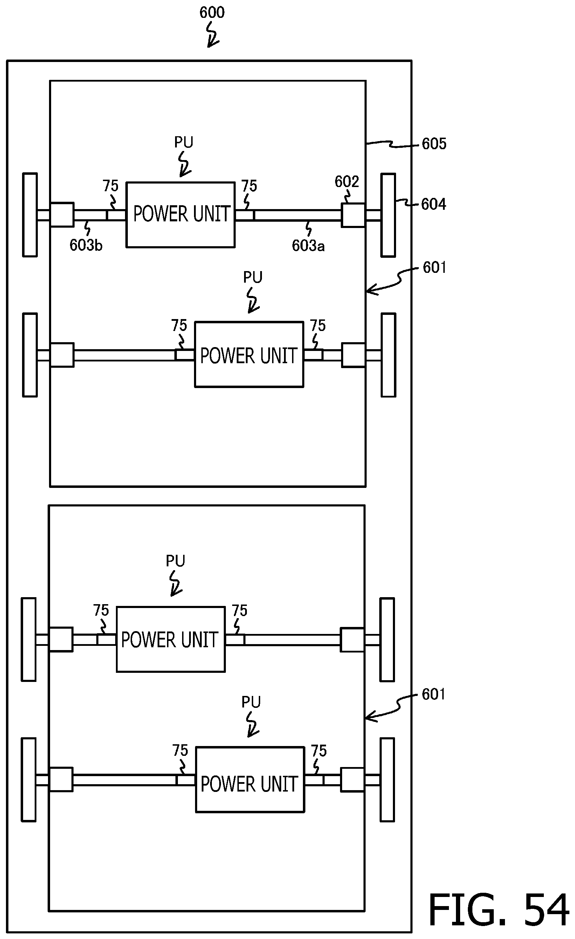

FIG. 54 is a diagram showing a schematic configuration of a drive mechanism of the railroad car 600 when the power unit PU shown in FIG. 46 or FIG. 48 is used as the prime mover for a railroad car. The railroad car 600 includes a plurality of bogies 601 (two in the example shown in FIG. 54). The bogie 601 is a motor bogie serving as a drive device and is provided with the power units PU.

The bogie 601 includes two power units PU, two pairs of wheel axles 603 (wheel axles 603a and 603b), bearings 602, axle boxes (not shown), axle box suspensions (not shown), and wheels 604. Both ends of the power unit PU are connected to respective ends of the wheel axles 603a and 603b. Wheels 604 are attached to the other ends of the wheel axles 603a and 603b.

Each bearing 602 is attached to each axle box, and each axle box is attached to a bogie frame 605 via each axle box suspension. The bearings 602 and the axle boxes are resiliently supported on the bogie frame 605 (frame) by the axle box suspensions. The wheel axles 603a and 603b are rotatably supported by the respective bearings 602.

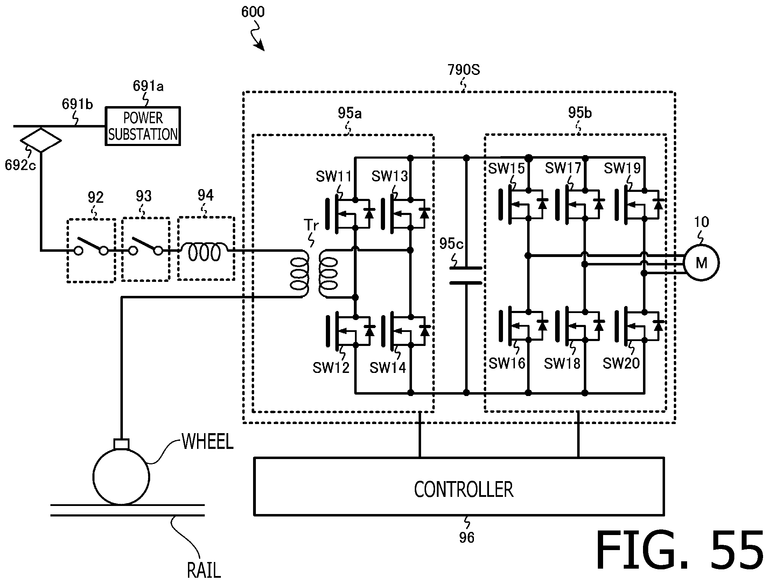

FIG. 55 is a diagram showing a circuit configuration of an electric power feeding system 790S installed in the railroad car 600 when the power unit PU is used as a prime mover for the railroad car.

The railroad car 600 includes a pantograph 692c as a current collector that contacts an overhead line 691b, which is a trolley wire (contact wire). The railroad car 600 also includes the circuit breaker 92, the electromagnetic switch 93, and the reactor 94. Alternating current electric power (for example, single-phase AC) is supplied from the power substation 691a to the overhead line 691b, and alternating current electric power output from the pantograph 692c is supplied to the electric power feeding system 790S via the circuit breaker 92, the electromagnetic switch 93, and the reactor 94.

The electric power feeding system 790S is installed in the railroad car 600 for each corresponding power unit PU (for example, for each of the power units PU shown in FIG. 54) or for each corresponding bogie (for example, for each of the bogies 601 shown in FIG. 54). The electric power feeding system 790S may be configured not for each power unit PU or bogie 601 but for each railroad car or train formed by coupling a plurality of railroad cars 600.

The power feeding system 790S includes the power regenerative converter 95a, the inverter 95b, and the capacitor 95c connected between the power regenerative converter 95a and the inverter 95b.

The power regenerative converter 95a includes the transformer Tr and the switching elements SW11 to SW14. The switching elements SW11 to SW14 are, for example, IGBTs (Insulated Gate Bipolar Transistor). By repeatedly turning on and off the switching elements SW11 to SW14, alternating current electric power supplied from the pantograph 692c to the switching elements SW11 to SW14 via the transformer Tr is rectified and output to the capacitor 95c. Alternatively, by repeatedly turning on and off the switching elements SW11 to SW14, direct current electric power supplied from the capacitor 95c to the switching elements SW11 to SW14 is converted into alternating current electric power and output to the pantograph 692c via the transformer Tr. Electric power output from the capacitor 95c to the pantograph 692c is supplied to the overhead line 691b.

The inverter 95b includes the switching elements SW15 to SW20. The switching elements SW15 to SW20 are, for example, IGBTs. By repeatedly turning on and off the switching elements SW15 to SW20, direct current electric power supplied from the capacitor 95c to the switching elements SW15 to SW20 is converted into three-phase alternating current electric power and output to the motor 10. Alternatively, by repeatedly turning on and off the switching elements SW11 to SW14, three-phase alternating current electric power supplied from the motor 10 to the switching elements SW15 to SW20 is converted into direct current electric power and output to the capacitor 595c.

During powering operation of the motor 10, the controller 96 repeatedly turns on and off the switching elements SW15 to SW20 so that electric power accumulated in the capacitor 95c is output to the motor 10.

During regeneration of the motor 10, the controller 96 repeatedly turns on and off the switching elements SW15 to SW20 so that regenerative electric power from the motor 10 is output to the capacitor 95c.

When the total of the electric power accumulated in the capacitor 95c and the regenerative electric power from the motor 10 is smaller than power required to drive the motor 10, the controller 96 repeatedly turns on and off the switching elements SW11 to SW14 so that the shortage is output from the pantograph 692c to the capacitor 95c.

When the total of the electric power accumulated in the capacitor 95c and the regenerative electric power from the motor 10 is greater than the power required to drive the motor 10, the controller 96 repeatedly turns on and off the switching elements SW11 to SW14 so that the surplus is output from the capacitor 95c to the pantograph 692c.

In the first embodiment, the axle-box support system with the axle boxes and the axle-box suspensions is adopted. However, the present invention is not limited to this configuration.

In the first embodiment, the drive unit 100d directly connects the screw shaft 41 of the ball screw 40 to the rotary shaft 11 of the motor 10. However, a configuration may be adopted in which a reduction gear is provided in the drive unit and the motor 10 and the ball screw 40 are connected via the reduction gear.

In FIG. 42, an AC generator may be used as the primary power source 91.

In FIG. 42, the battery 295e may be removed and the capacitor 95c having a large capacitance may be used so that the capacitor 95c also serves as an energy storage function of the battery 295e.

In the first embodiment, the electric actuator 100 includes a single drive unit 100d. However, the present invention is not limited to this configuration, and any number of drive units may be provided in the electric actuator.

In the first embodiment, the electric actuator 100 includes a single crankshaft 70. However, the crankshaft may be divided into a plurality of crankshafts. For example, when the electric actuator includes four drive units, the crankshaft may be divided into two, and two drive units 100d may be connected to each crankshaft. In this case, to synthesize power of the respective crankshafts 70, the divided crankshafts 70 are interconnected by, for example, a gear mechanism or a winding transmission mechanism such as a belt mechanism. By dividing the crankshaft 70, degrees of freedom in arranging a plurality of drive units increase, enabling downsizing.

The electric actuators or power units according to the embodiments of the present invention may be used as a prime mover for devices listed below other than electric mobility apparatus. For example, the electric actuators or power units according to the embodiments of the present invention may be used as a prime mover for railway trains, vibration test devices, tire test devices, dynamic balance multi-test devices, uniformity test devices, balance measurement devices, collision simulation test devices, and other various power devices.

The electric actuators or power units according to the embodiments of the present invention can be used in place of various prime movers that output rotary motion (for example, engines, electric motors, hydraulic motors, air motors, steam turbines, etc.).

The electric actuators or power units according to the embodiments of the present invention can be used not only as a prime mover for various electric vehicles such as electric two-wheelers, three-wheelers or four-wheelers, or trucks, buses, tractors and the like having six or more wheels, but also as a prime mover for railroad cars. That is, the electric actuators or power units according to the embodiments of the present invention can be used as a prime mover for any vehicle. The electric actuators or power units according to the embodiments of the present invention can also be used as a prime mover for aircraft such as airplanes (e.g., propeller aircraft) and helicopters, or for ships. That is, the electric actuators or power units according to the embodiments of the present invention can be used as a prime mover for any mobility apparatus.

The electric actuators or power units according to the embodiments of the present invention can also be used as a prime mover for various industrial machines such as construction machinery, agricultural machinery, woodworking machines, machine tools, press machines, injection molding machines, robots, and conveying machines e.g., cranes, lifts, conveyors, etc.).

The electric actuators or power units according to the embodiments of the present invention can also be used as a prime mover for various home appliances (washing machines, refrigerators, air conditioners, compressors, etc.).

The electric actuators or power units according to the embodiments of the present invention can also be used as a prime mover for driving hydraulic pumps or compressors.

The foregoing describes exemplary embodiments of the present invention. The embodiments of the present invention are not limited to those described above, and various modifications can be made within the scope of the technical idea of the present invention. For example, configurations obtained by appropriately combining embodiments explicitly exemplified in the specification or obvious embodiments are also included in the embodiments of the present invention.

In the above embodiments, the motor 10 is an AC servo motor. However, other types of electric motors whose drive quantity (rotation angle) can be controlled, such as a DC servo motor or a stepping motor, may be used as the motor 10.

### <Appendix>

An electric actuator according to an embodiment includes an electric actuator including:
an electric motor;
an inverter that drives the electric motor using electric power accumulated in a capacitor;
a power regenerative converter that supplies electric power from a battery to the capacitor; and
a motion converter having an input shaft to which rotary motion of the electric motor is transmitted and an output shaft that converts the rotary motion transmitted to the input shaft into unidirectional rotary motion and outputs the unidirectional rotary motion,
wherein:
   the motion converter converts forward and reverse rotary motions transmitted to the input shaft as the drive device drives the electric motor so that the motor alternately rotates in the forward and reverse directions into unidirectional rotary motion,
   the drive device regenerates to the capacitor regenerative electric power generated in the electric motor as the electric motor alternately rotates in the forward and reverse directions, and
   the power regenerative converter supplies to the battery surplus electric power among the regenerative electric power that has not been charged in the capacitor.

In the electric actuator described above, the drive device may supply surplus electric power among the regenerative electric power regenerated to the capacitor to a power source.

An electric mobility apparatus according to an embodiment also includes an electric mobility apparatus including:
the electric actuator described above;
a power transmission device having an input shaft connected to an output shaft of the motion converter;
a drive shaft connected to an output shaft of the power transmission device; and
wheels attached to the drive shaft.

The electric mobility apparatus described above may include a changeover switch, and, during charging of the battery, the changeover switch may electrically connect the power regenerative converter and an external power source, and, while the electric mobility apparatus is traveling, the changeover switch may electrically connect the power regenerative converter and the inverter.

The electric mobility apparatus described above may obtain unidirectional propulsive force from unidirectional rotary motion generated by alternately rotating the electric actuator in forward and reverse directions.

In the electric actuator descried above, the rotating body may be a crankshaft, and the connecting rod may be rotatably connected to a crank pin of the crankshaft.

In the electric actuator described above, the drive device may supply to a power source surplus electric power that depends on electric power consumed during acceleration of the electric motor and the regenerative electric power.

In the electric actuator described above, the drive device may supply electric power from a power source to the electric motor via the capacitor, and, when the electric motor alternately rotates in the forward and reverse directions, the drive device may output to the power source surplus electric power among the regenerative electric power from the electric motor that has not been consumed during acceleration of the electric motor.

In the electric actuator described above, the drive device may drive the electric motor so that the electric motor alternately rotates in the forward and reverse directions at a required frequency of 6 Hz or higher.

In the electric actuator described above, the power regenerative converter may be constituted by a bidirectional AC/DC converter.

In the electric actuator described above, the power source may be constituted by a direct current electric power source, and the power regenerative converter may be constituted by a bidirectional DC/DC converter.

In the electric actuator described above, the motion converter may include a first motion converter that converts the forward and reverse rotary motions into reciprocating linear motion, and a second motion converter that converts the reciprocating linear motion into the unidirectional rotary motion.

In the electric actuator described above, the motion converter may include a ball screw having a nut, a linear motion part that is fixed to the nut and linearly moves together with the nut, a rotating body rotatable about a rotation axis, and a connecting rod rotatably connected to an eccentric portion of the rotating body with respect to the rotation axis and to the linear motion part.

In the electric actuator described above, the rotating body may be a spindle, and the connecting rod may be rotatably connected to a projection formed at a position eccentric to a rotation axis of the spindle.

The electric actuator described above may further include a controller that controls the drive device, and the controller may control the drive device so as to switch the rotation of the electric motor between forward and reverse rotations while avoiding timings at which the linear motion part reaches a dead point at which no rotational force is generated in the rotating body due to movement of the linear motion part.

The electric actuator described above may further include a controller that controls the drive device, and the controller may control the drive device so that torque of the electric motor is limited at least at a timing at which the linear motion part reaches a dead point at which no rotational force is generated in the rotating body due to movement of the linear motion part.

In the electric actuator described above, the motion converter may include a first disk part rotatable about a first rotation axis and connected to a shaft of the electric motor, a second disk part rotatable about a second rotation axis and connected to an output shaft of the motion converter, and a connecting rod rotatably connected to an eccentric part of the first disk part with respect to the first rotation axis and to an eccentric part of the second disk part with respect to the second rotation axis.

A vibration test device according to an embodiment also includes a vibration test device including:
a vibration table to which an object to be oscillated is to be attached;
an electric actuator including an electric motor and a drive device that drives the electric motor using electric power accumulated in a capacitor, the electric actuator oscillating the vibration table in a predetermined direction; and
a controller that controls the electric actuator so that the vibration table is oscillated with a predetermined amplitude and frequency;
wherein the vibration test device regenerates to the capacitor regenerative electric power generated in the electric motor as the vibration table is oscillated with the predetermined amplitude and frequency, and supplies surplus electric power among the regenerative electric power to a power source.

A tire test device according to an embodiment also includes a tire test device including: an electric actuator including an electric motor having a rotary shaft connected to a central axis of a tire and a drive device that drives the electric motor using electric power accumulated in a capacitor; and
a controller that controls the electric actuator so as to generate a fluctuating torque in the electric motor,
wherein the tire test device regenerates to the capacitor regenerative electric power generated in the electric motor when a rotational speed of the tire is reduced due to the fluctuating torque of the electric motor, and supplies surplus electric power among the regenerative electric power to a power source.

A dynamic balance multi-test device according to an embodiment also includes a dynamic balance multi-test device including:
a spindle to which a tire is to be attached;
an electric actuator including an electric motor and a drive device that drives the electric motor using electric power accumulated in a capacitor;
a motion converter that converts forward and reverse rotary motions output from the electric motor into unidirectional rotary motion;
a transmission mechanism that transmits the unidirectional rotary motion output from the motion converter to the spindle; and
a controller that controls the electric actuator so that the spindle rotates at a predetermined speed by alternately rotating the electric motor in the forward and reverse directions,
wherein the dynamic balance multi-test device regenerates to the capacitor regenerative electric power generated in the electric motor as the spindle rotates at the predetermined speed, and supplies surplus electric power among the regenerative electric power to a power source.

A uniformity test device according to an embodiment also includes a uniformity test device including:
a rotary drum that comes into contact with a tire;
an electric actuator including an electric motor and a drive device that drives the electric motor using electric power accumulated in a capacitor;
a motion converter that converts forward and reverse rotary motions output from the electric motor into unidirectional rotary motion and transmits the unidirectional rotary motion to the rotary drum; and
a controller that controls the electric actuator so that the rotary drum rotates at a predetermined speed by alternately rotating the electric motor in the forward and reverse directions,
wherein the uniformity test device regenerates to the capacitor regenerative electric power generated in the electric motor as the rotary drum rotates at the predetermined speed, and supplies surplus electric power among the regenerative electric power to a power source.

A balance measurement device according to an embodiment includes a balance measurement device including:
an electric actuator including an electric motor and a drive device that drives the electric motor using electric power accumulated in a capacitor;
a motion converter that converts forward and reverse rotary motions output from the electric motor into unidirectional rotary motion;
a transmission mechanism that transmits the unidirectional rotary motion output from the motion converter to a test specimen; and
a controller that controls the electric actuator so that the test specimen rotates at a predetermined speed by alternately rotating the electric motor in the forward and reverse directions,
wherein the balance measurement device regenerates to the capacitor regenerative electric power generated in the electric motor as the test specimen rotates at the predetermined speed, and supplies surplus electric power among the regenerative electric power to a power source.

A collision simulation test device according to an embodiment also includes a collision simulation test device including:
a mounting part to which a test specimen is to be attached;
an electric actuator including an electric motor and a drive device that drives the electric motor using electric power accumulated in a capacitor;
a motion converter that converts forward and reverse rotary motions output from the electric motor into unidirectional rotary motion;
a transmission mechanism that converts the unidirectional rotary motion output from the motion converter into linear motion and transmits the linear motion to the mounting part; and
a controller that controls the electric actuator so as to apply a desired acceleration to the mounting part by alternately rotating the electric motor in the forward and reverse directions,
wherein the collision simulation test device regenerates to the capacitor regenerative electric power generated in the electric motor when the desired acceleration is applied to the mounting part, and supplies surplus electric power among the regenerative electric power to a power source.

An electric actuator according to an embodiment includes:
an electric motor capable of switching rotation direction between forward rotation and reverse rotation;
a detector that detects a rotational position of the electric motor;
a drive device that drives the electric motor in accordance with the rotational position and command values; and
a transmission mechanism having an output shaft mechanically coupled to a rotary shaft of the electric motor, the transmission mechanism converting forward and reverse rotary motions of the rotary shaft into a unidirectional rotary motion and transmitting the unidirectional rotary motion to the output shaft,
wherein the drive device is set with the command values that cause the transmission mechanism to rotate the output shaft in one direction when the electric motor is rotated in the forward and reverse directions, and
the command values are values determined on the basis of the rotational position of the electric motor that has rotated as a result of rotating the output shaft in one direction.

The command values may be values determined on the basis of the rotational position of the electric motor detected by the detector when the electric motor is rotated in the forward and reverse directions by rotating the output shaft in one direction without driving the electric motor.

The transmission mechanism may include:
a first mechanism having a moving member held so as to be linearly movable and coupled to the rotary shaft of the electric motor, the first mechanism causing the moving member to linearly reciprocate in conjunction with the forward and reverse rotary motions of the electric motor; and
a second mechanism having a rotary member that is rotatably held, and a connecting rod rotatably connected to the rotary member at a first connecting part offset from a rotation center of the rotary member, the connecting rod being rotatably connected to the moving member at a second connecting part of the moving member away from the first connecting part, the second mechanism causing the rotary member to rotate in one direction in conjunction with the forward and reverse rotary motions of the electric motor,
wherein the drive device may be configured such that command values determined on the basis of a cam curve of the connecting rod obtained from a rotational position detected by the detector when the output shaft is rotated for one revolution in one direction without driving the electric motor are set.

The transmission mechanism may include:
a first rotary mechanism having a first rotary member fixed to the rotary shaft of the electric motor; and
a second rotary mechanism having a second rotary member that is rotatably held, and a connecting rod rotatably connected to the second rotary member at a first connecting part offset from a rotation center of the second rotary member, the connecting rod being rotatably connected to the first rotary member at a second connecting part offset from a rotation center of the first rotary member, the second rotary mechanism rotating the second rotary member in one direction in conjunction with the forward and reverse rotary motions of the electric motor, wherein the drive device may be configured such that command values determined on the basis of a cam curve of the connecting rod obtained from the rotational position detected by the detector when the output shaft is rotated for one revolution in one direction without driving the electric motor are set.

The drive device may be configured to drive the electric motor by supplying electric power from a power source to the electric motor and to regenerate to the power source regenerative electric power generated in the electric motor when the electric motor switches from the forward rotation to the reverse rotation and regenerative electric power generated in the electric motor when the electric motor switches from the reverse rotation to the forward rotation.

In a power unit according to an embodiment, the electric actuators described above are arranged in parallel, and the respective transmission mechanisms share the output shaft.

A power unit according to an embodiment includes a plurality of the electric actuators described above, at least two of the electric actuators are arranged in parallel, at least one electric actuator is disposed to face the parallel-arranged electric actuators, and the respective transmission mechanisms share the output shaft.

An electric mobility apparatus according to an embodiment includes the power unit described above.

### DESCRIPTION OF REFERENCE NUMERALS

1 electric car
10 motor (electric motor)
40 ball screw
50, 250, 350 piston (linear motion part, moving member)
52 pin (second connecting part)
60, 135, 260, 360, 560 connecting rod
64 large end part (rotary member)
70, 270, 270a crankshaft (second mechanism)
72 crank pin (first connecting part)
80 generator
95, 295, 695, 795, 895, 995, 2850 servo amplifier (drive device)
95a, 2851 power regenerative converter
95b, 97b, 2852 inverter
95c, 97c, 2853 capacitor
96, 296, C2 controller (control unit)
100, 200, 201, 300, 400, 500, 5320, 5320a, 5420 electric actuator
100d, 200d, 300d, 400d, 500d drive unit (first mechanism)
600 railroad car

## Claims

1. An electric actuator comprising:
an electric motor capable of switching rotation direction between forward rotation and reverse rotation;
a detector configured to detect a rotational position of the electric motor;
a drive device configured to drive the electric motor in accordance with the rotational position and command values; and
a transmission mechanism having an output shaft mechanically coupled to a rotary shaft of the electric motor, the transmission mechanism being configured to convert forward and reverse rotary motions of the rotary shaft into a unidirectional rotary motion and to transmit the unidirectional rotary motion to the output shaft,
wherein the drive device is set with the command values that cause the transmission mechanism to rotate the output shaft in one direction when the electric motor is rotated in the forward and reverse directions, and
the command values are values determined on the basis of the rotational position of the electric motor that has rotated as a result of rotating the output shaft in one direction.

2. The electric actuator according to claim 1,
wherein the command values are values determined on the basis of the rotational position of the electric motor detected by the detector when the electric motor is rotated in the forward and reverse directions by rotating the output shaft in one direction without driving the electric motor.

3. The electric actuator according to claim 1,
wherein the transmission mechanism comprises:
a first mechanism having a moving member that is held so as to be linearly movable and coupled to the rotary shaft of the electric motor, the first mechanism being configured to cause the moving member to linearly reciprocate in conjunction with the forward and reverse rotary motions of the electric motor; and
a second mechanism having a rotary member that is rotatably held, and a connecting rod that is rotatably connected to the rotary member at a first connecting part offset from a rotation center of the rotary member, the connecting rod being rotatably connected to the moving member at a second connecting part of the moving member away from the first connecting part, the second mechanism being configured to cause the rotary member to rotate in one direction in conjunction with the forward and reverse rotary motions of the electric motor,
wherein the drive device is set with command values determined on the basis of a cam curve of the connecting rod obtained from the rotational position detected by the detector when the output shaft is rotated for one revolution in one direction without driving the electric motor.

4. The electric actuator according to claim 1,
wherein the transmission mechanism comprises:
a first rotary mechanism having a first rotary member fixed to the rotary shaft of the electric motor; and
a second rotary mechanism including a second rotary member that is rotatably held, and a connecting rod that is rotatably connected to the second rotary member at a first connecting part offset from a rotation center of the second rotary member, the connecting rod being pivotably connected to the first rotary member at a second connecting part offset from a rotation center of the first rotary member, the second rotary mechanism being configured to rotate the second rotary member in one direction in conjunction with the forward and reverse rotary motions of the electric motor,
wherein the drive device is set with command values determined on the basis of a cam curve of the connecting rod obtained from the rotational position detected by the detector when the output shaft is rotated for one revolution in one direction without driving the electric motor.

5. The electric actuator according to claim 1,
wherein the drive device is configured to drive the electric motor by supplying electric power from a power source to the electric motor and to regenerate to the power source regenerative electric power generated in the electric motor when the electric motor switches from the forward rotation to the reverse rotation and regenerative electric power generated in the electric motor when the electric motor switches from the reverse rotation to the forward rotation.

6. A power unit in which the electric actuators according to claim 1 are arranged in parallel, and the respective transmission mechanisms share the output shaft.

7. A power unit comprising a plurality of the electric actuators according to claim 1, at least two of the electric actuators being arranged in parallel, at least one of the electric actuators being disposed to face the parallel-arranged electric actuators, and the respective transmission mechanisms sharing the output shaft.

8. An electric mobility apparatus comprising the power unit according to claim 6.

9. An electric mobility apparatus comprising the power unit according to claim 7.
